(19) Europäisches Patentamt
European Patent Office
Office européen des brevets

(11) EP 3 936 593 A1

(12) EUROPEAN PATENT APPLICATION

(43) Date of publication:
**12.01.2022 Bulletin 2022/02**

(51) Int Cl.:
***C11D 3/386*** *(2006.01)* ***C11D 3/50*** *(2006.01)*

(21) Application number: **20184733.2**

(22) Date of filing: **08.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Henkel AG & Co. KGaA**
**40589 Düsseldorf (DE)**

(72) Inventors:
- **Weide, Mirko**
  **40223 Düsseldorf (DE)**
- **Wieland, Susanne**
  **41541 Zons/Dormagen (DE)**
- **Jensen, Johanne Moerch**
  **DK-2880 Bagsvaerd (DK)**
- **Vejborg, Rebecca**
  **2880 Bagsvaerd (DK)**
- **Nielsen, Lasse Janniche**
  **2880 Bagsvaerd (DK)**

# (54) CLEANING COMPOSITIONS AND USES THEREOF

(57) The invention relates to compositions such as cleaning compositions comprising an enzyme having hexosaminidase activity and at least one perfume component, as well as the use of said compositions in cleaning processes and/or for deep cleaning of textiles or hard surfaces.

EP 3 936 593 A1

## Description

### Reference to a Sequence Listing

This application contains a Sequence Listing in computer readable form, which is incorporated herein by reference.

### Background of the Invention

The present invention relates to compositions such as cleaning compositions comprising an enzyme having hexosaminidase activity, as defined herein. The invention further relates to the use of said compositions comprising such enzymes in cleaning processes and/or for deep cleaning of organic stains as well as to methods of using said compositions for removal or reduction of components of organic matter.

Cleaning compositions comprising one or more perfumes are well known. The perfumes often have a double function of providing a desired scent and masking undesirable odors. Perfumes may be chemical compounds or, e.g., natural oils such as essential oils and other natural compounds.

### Description of the Related Art

Enzymes have been used in cleaning compositions for decades. Usually a cocktail of various enzymes is added to cleaning compositions, wherein each enzyme targets a specific substrate, e.g., amylases are active towards starch stains, proteases on protein stains and so forth. The effectiveness of these commercial enzymes provides cleaning compositions which remove much of the soiling. However, components of organic matters such as biofilm and EPS (extracellular polymeric substance) constitute a challenging type of staining due to the complex nature of such organic matter, and commercially available cleaning compositions are not able to effectively remove or reduce EPS and/or biofilm related stains. Textile surfaces and hard surfaces, such as dishes or the inner space of a laundry or dishwashing machine enduring a number of wash/cleaning cycles, become soiled with many different types of soiling which may be composed of proteins, grease, starch etc. Some types of stain may be associated with organic matter such as biofilm, EPS (extracellular polymeric substance), etc. Organic matter may be composed of different molecules such as polysaccharides, extracellular DNA (eDNA), and proteins. Some organic matter comprises an extracellular polymeric matrix, which may be sticky or glueing, which when present on textile attracts soils and may cause redeposition or backstaining of soil, resulting in a greying of the textile. Additionally, organic matters such as biofilms often cause malodor issues as various malodor molecules can be adhered by the polysaccharides, extracellular DNA (eDNA) and proteins in the complex extracellular matrix and be slowly released to cause a noticeable malodor.

Cleaning compositions and detergents comprising enzymes having hexosaminidase activity are described in WO2017/186936, WO2017/186937 and WO2017/186943 (Novozymes). WO2011/163325 (Procter and Gamble) describes various perfume raw materials, perfume delivery systems and consumer products comprising such perfume raw materials and/or such perfume delivery systems.

Therefore, the object of the present invention is to provide a cleaning composition which is able to provide a pleasant scent and reduce malodor, while avoiding the aforementioned problems. The present invention provides new compositions fulfilling such need.

### Summary of the Invention

A first aspect of the present invention relates to a cleaning composition for hard surfaces and textiles, characterized in that the cleaning agent contains from 0.1 to 50 ppm of an enzyme having hexosaminidase activity and one or more perfume component.

In various embodiments, the cleaning composition of the invention that comprises an enzyme having hexosaminidase activity and one or more perfume component,

(a) is a solid, preferably granular, laundry detergent composition and further comprises

(a1) at least one zeolite builder, preferably in an amount of 10 to 50 wt.%, more preferably 20 to 30 wt.%;
(a2) at least one phosphonate builder, preferably in an amount of 0.1 to 5 wt.%, more preferably 0.4 to 1.5 wt.%;
(a3) at least one further enzyme, preferably a protease and/or a cellulase, preferably in an amount of active enzyme of 100 to 5000 ppb, more preferably 1000 to 2000 ppb; and
(a4) at least one polymer, preferably a polyvinyl pyrrolidon polymer, preferably in an amount of 0.01 to 1 wt.%, more preferably 0.1 to 0.3 wt.%; or

(b) is a solid laundry detergent composition and further comprises

(b1) at least one silicate builder, preferably in an amount of 2 to 20 wt.%, more preferably 5 to 10 wt.%;
(b2) optionally carboxy methyl cellulose, preferably in an amount of 0.1 to 10 wt.%, more preferably 0.1 to 4 wt.%;
(b3) at least one further enzyme, preferably a protease and/or a cellulase, preferably in an amount of active enzyme of 0.1 to 100 ppm, more preferably 0.1 to 10 ppm;
(b4) optionally at least one soil release polymer, preferably a polyvinyl pyrrolidon polymer, in an amount of 0.1 to 3 wt.%, more preferably 0.1 to 1.0 wt.%; and
(b5) at least one bleaching system, comprising a bleaching agent, a bleach activator and a bleach catalyst, preferably in an amount of 0.1 to 50 wt.%, more preferably 0.1 to 30 wt.%; or

(c) is a liquid laundry detergent composition and further comprises

(c1) at least one surfactant, preferably nonionic surfactant, preferably in an amount of 1 to 20 wt.%, preferably 3 to 15 wt.%;
(c2) optionally at least one phosphonate builder, preferably in an amount of 0.1 to 3 wt.%, more preferably 0.25 to 1.5 wt.%;
(c3) optionally at least one further enzyme, preferably a protease and/or a cellulase, preferably in an amount of enzyme composition of 0.001 to 1 wt.%, more preferably 0.001 to 0.6 wt.%; and
(c4) optionally at least one organic solvent, preferably glycerol, preferably in an amount of 0.1 to 10 wt.%, more preferably 0.1 to 5 wt.%; or

(d) is a liquid laundry detergent in unit dose form, preferably a pouch comprising a water-soluble film, and further comprises

(d1) water in an amount of up to 20 wt.%, preferably 5 to 15 wt.%;
(d2) optionally at least one bittering agent, preferably benzyl diethyl-(2,6-xylyl carbamoyl) methyl ammonium benzoate, preferably in an amount of 0.00001 to 0.04 wt.%;
(d3) optionally at least one optical brightener, preferably in an amount of 0.01 to 2 wt.%, more preferably 0.01 to 1 wt.%; and
(d4) optionally at least one polymer, preferably in an amount of 0.01 to 7 wt.%, more preferably 0.1 to 5 wt.%; or

(e) is a fabric finisher and further comprises

(e1) at least one softening silicone, preferably an amino-functionalized silicone, preferably in an amount of 0.1 to 10 wt.%, more preferably 0.1 to 2 wt.%;
(e2) at least one perfume, preferably at least partially encapsulated in microcapsules, more preferably at least partially encapsulated in melamine-formaldehyde microcapsules, preferably in an amount of 0.01 to 3 wt.%, more preferably 0.1 to 1 wt.%;
(e3) optionally polyquaternium 10 in an amount of 0.1 to 20 wt.%, preferably 0.1 to 13 wt.%;
(e4) optionally polyquaternium 37 in an amount of 0.1 to 20 wt.%, preferably 0.1 to 13 wt.%;
(e5) optionally a plant-based esterquat, preferably a canola- or palm-based esterquat, in an amount of 0.1 to 20 wt.%, preferably 0.1 to 13 wt.%; and
(e6) optionally adipic acid, in an amount of 0.1 to 20 wt.%, preferably 0.1 to 13 wt.%; or

(f) is an acidic cleaning agent, preferably having a pH less than 6, and further comprises

(f1) plant-based or bio-based surfactants, preferably each in an amount of 0.1 to 5 wt.%, more preferably each in an amount of 0.1 to 2 wt.%;
(f2) at least one acidic biocide, preferably selected from acids, more preferably HCl and formic acid; and
(f3) at least one soil release, water repellant or water spreading polymer, preferably in an amount of 0.01 to 3 wt.%, more preferably 0.01 to 0.5 wt.%; or

(g) is a neutral cleaning agent, preferably having a pH between 6.0 and 7.5, and further comprises

(g1) plant-based or bio-based surfactants, preferably each in an amount of 0.1 to 5 wt.%, more preferably each in an amount of 0.1 to 2 wt.%;
(g2) at least one biocide, preferably selected from quaternary ammonium compounds and alcohols; and

(g3) at least one soil release, water repellant or water spreading polymer, preferably in an amount of 0.01 to 3 wt.%, more preferably 0.01 to 0.5 wt.%; or

(h) is an alkaline cleaning agent, preferably having a pH of more than 7.5, and further comprises
(h1) plant-based or bio-based surfactants, preferably each in an amount of 0.1 to 5 wt.%, more preferably each in an amount of 0.1 to 2 wt.%; or
(i) is a hand dishwashing agent, preferably liquid hand dishwashing agent, and further comprises

(i1) at least one anionic surfactant, preferably in an amount of 0.1 to 40 wt.%, more preferably 5 to 30 wt.%;
(i2) at least one amphoteric surfactant, preferably betain, preferably in an amount of 0.1 to 25 wt.%, more preferably 1 to 15 wt.%;
(i3) at least one nonionic surfactant, preferably in an amount of 0.1 to 25 wt.%, more preferably 2 to 10 wt.%;
(i4) at least one further enzyme, preferably selected from amylases, preferably in an amount of enzyme composition of up to 1 wt.%, more preferably up to 0.6 wt.%; or

(j) is an automatic dishwashing composition and further comprises

(j1) at least one builder selected from citrate, amino carboxylates and combinations thereof, preferably in an amount of 5 to 30 wt.%, more preferably 10 to 20 wt.%;
(j2) at least one phosphonate builder, preferably in an amount of 0.1 to 5 wt.%, more preferably 0.4 to 1.5 wt.%;
(j3) at least one nonionic surfactant, preferably in an amount of 0.1 to 10 wt.%, more preferably 1 to 5 wt.%;
(j4) at least one bleaching system, comprising a bleaching agent, a bleach activator and a bleach catalyst, preferably in an amount of 0.1 to 50 wt.%, more preferably 0.1 to 30 wt.%; and
(j5) at least one polymer selected from sulfopolymers, cationic polymers and polyacrylates, preferably in an amount of 0.01 to 15 wt.%, more preferably 2 to 10 wt.%; or

(k) further comprises
(k1) at least one sulfopolymer, preferably in an amount of 1 to 15 wt.%, more preferably 2 to 10 wt.% and is preferably a dishwashing, more preferably an automatic dishwashing composition; or
(l) further comprises at least one adjunct ingredient selected from probiotics, preferably microbes, spores or combinations thereof; or
(m) is in unit dose form and comprises at least 2, preferably 2, 3, 4 or 5 separate compartments; or
(n) is a phosphate-free composition.

When in the following reference is made to "(cleaning) compositions of the invention" or "(cleaning) compositions as described herein" or "(cleaning) compositions as defined herein", in various embodiments the above-specified compositions (a) to (n) are meant. However, the invention is not limited to those compositions and is intended to cover other suitable cleaning compositions that comprise the enzyme having hexosaminidase activity, in particular a dispersin, as defined herein.

If not indicated otherwise, all references to percentages in relation to the disclosed compositions relate to wt.% relative to the total weight of the respective composition. It is understood that when reference is made to compositions that contain enzymes as defined herein, the respective composition contains at least one of each of the specified enzymes but can also comprise two or more of each enzyme type, such as two or more enzyme(s) having hexosaminidase activity, in particular dispersin(s).

The invention further relates to the use of a composition for deep cleaning of an item, wherein the item is a textile or a surface.

The invention further relates to use of a cleaning composition comprising an enzyme having hexosaminidase activity, in particular a dispersin, one or more perfume component, and optionally at least one cleaning component for deep cleaning of an item, wherein the item is a textile or a hard surface.

The invention further relates to a method of formulating a cleaning composition comprising combining an enzyme having hexosaminidase activity, in particular a dispersin, one or more perfume component, and at least one cleaning component.

The invention further relates to a kit intended for deep cleaning, wherein the kit comprises a solution of an enzyme having hexosaminidase activity, in particular a dispersin, and one or more perfume component.

The invention further relates to a method of deep cleaning of an item, comprising the steps of:

a) contacting the item with a solution comprising an enzyme having hexosaminidase activity, in particular a dispersin, one or more perfume component, and a cleaning component, wherein the cleaning component is selected from 1

to 40 wt.% of at least one surfactant, 1 to 30 wt.% of at least one builder and 1 to 20 wt.% of at least one bleach component; and

b) optionally rinsing the item,

wherein the item is preferably a textile.

The invention further relates to a method of deep cleaning of an item, comprising the steps of:

a) contacting the item with a cleaning composition comprising an enzyme having hexosaminidase activity, in particular a dispersin, one or more perfume component and, optionally, at least one cleaning component; and

b) optionally rinsing the item,

wherein the item is preferably a textile.

**Detailed Description of the Invention**

The inventors have surprisingly found that enzymes of the GH20 class having hexosaminidase activity act synergistically with volatile perfume compounds.

Such volatile perfume compounds are often added to cleaning compositions to mask malodors. The malodor may come from various sources. One example is build up of organic matter such as sebum, body soils, cell debris, biofilm, EPS etc. It has previously been shown that enzymes having hexosaminidase activity can reduce stains related to organic material such as biofilm and EPS, e.g., PNAG (poly-N-acetylglucosamine); see WO2017/186936, WO2017/186937 and WO2017/186943. The enzymes are preferably dispersins having 1,6 beta-N-acetylglucosamine activity. The effect of these enzymes as described in the above prior art is among other things, reduction of malodor, e.g., associated with laundry textiles. Built-up organic stains are often difficult to remove, and commercial detergents do not effectively reduce the malodor. Instead the malodor is masked by the use of various perfume substances, which consumers often will experience as a cleaning effect despite the sources of the malodors not actually being removed. As a result, even more perfume needs to be added over time to prevent textiles from smelling increasingly worse. Many perfume substances have side-effects such as being allergenic, which may appear as skin rash. Also many of these substances being chemicals of nature are bad for the environment when disposed of in waste water. In recent years, perfumes are increasingly employed in the form of perfume microcapsules, microcapsules being considered as microplastics and, hence, potentially bad for the environment. Further, perfumes are expensive and add to the total cost of the cleaning compositions. Thus, perfume substances may cause various negative consequences for the consumer. The present invention addresses these problems, by providing a new class of enzymes for cleaning, which in addition to removing and reducing malodor by themselves further provide synergistic effects with the perfume substances and thereby significantly reduce the need for adding perfume to cleaning compositions, in particular such as laundry compositions.

Thus, one embodiment of the invention relates to a cleaning composition comprising an enzyme having hexosaminidase activity, where the amount of perfume is reduced compared to traditional cleaning compositions.

The compositions of the invention comprising an enzyme having hexosaminidase activity, in particular a dispersin, and one or more perfume component, effectively reduce or limit malodor of, e.g., textiles or hard surfaces such as dishes, while providing reduction/removal of organic components such as PNAG from surfaces such as textiles and hard surfaces, e.g., dishes, and while providing reduction/limitation of redeposition (when applied in, e.g., laundry processes) and while improving whiteness of textiles.

A composition of the invention is preferably a cleaning composition comprising at least one enzyme having hexosaminidase activity, in particular a dispersin, and one or more perfume component, as defined herein. In the field of cleaning compositions, perfumes and perfume oils are used to provide the treated surfaces with a pleasant odor. The term "perfumes" include perfume raw materials and compositions, scents, flavours, and oils, e.g., essential oils. A wide variety of chemicals are known for fragrance (i.e., perfume) uses, including compounds such as aldehydes, ketones and esters. More commonly, naturally occurring plant and animal oils and exudates comprising complex mixtures of various chemical components are known for use as fragrances.

One embodiment of the invention relates to a cleaning composition comprising one or more perfumes preferably present in the range from 0.0005 to 5 wt.%, more preferably 0.0001 to 3 wt.%, more preferably 0.005 to 2 wt.%, even more preferably 0.001 to 0.5 wt.%, still even more preferably 0.05 to 0.5 wt.%, most preferably 0.1 to 1 wt.%. In a preferred embodiment, such cleaning composition is a laundry cleaning composition.

One embodiment relates to a cleaning composition for hard surfaces and/or textiles, characterized in that said cleaning composition contains from 0.1 to 50 ppm of an enzyme having hexosaminidase activity and from 0.0005 to 5 wt.%, more preferably 0.0001 to 3 wt.%, more preferably 0.005 to 2 wt.%, even more preferably 0.001 to 0.5 wt.%, still even more preferably 0.05 to 0.5 wt.%, most preferably 0.1 to 1 wt.% of one or more perfume component. The enzyme

is preferably a dispersin and preferably has 1,6 beta-N-acetylglycosamine activity. Thus one embodiment relates to a cleaning composition for hard surfaces and/or textiles, characterized in that said cleaning composition contains from 0.1 to 50 ppm dispersin, preferably having 1,6 beta-N-acetylglycosamine activity and from 0.0005 to 5 wt.%, more preferably 0.0001 to 3 wt.%, more preferably 0.005 to 2 wt.%, even more preferably 0.001 to 0.5 wt.%, still even more preferably 0.05 to 0.5 wt.%, most preferably 0.1 to 1 wt.% of one or more perfume component.

**Enzyme having hexosaminidase activity (dispersin)**

The term hexosaminidase includes "dispersin" and the abbreviation "Dsp", and means a polypeptide having hexosaminidase activity, EC 3.2.1., that catalyzes the hydrolysis of β-1,6-gtycosidic linkages of N-acetyl-glucosamine polymers found in, e.g., biofilm. The term hexosaminidase includes polypeptides having N-acetylglucosaminidase activity and β-N-acetylglucosaminidase activity. The term "polypeptide having hexosaminidase activity" may be used interchangeably with the term "hexosaminidases" and similarly the term "polypeptide having β-N-acetylglucosaminidase activity" may be used interchangeably with the term "β-N-acetyigiucosaminidases". For purposes of the present invention, hexosaminidase activity is determined according to the procedure described in Assay I. In a preferred embodiment, the polypeptide having hexosaminidase activity is a dispersin. In a preferred embodiment, the polypeptide having hexosaminidase activity is a β-N-acetylglucosaminidase targeting poly-β-1,6-N-acetylglucosamine.

One embodiment relates to a cleaning composition for hard surfaces and/or textiles, characterized in that said cleaning composition contains from 0.0005 to 5 wt.%, more preferably 0.0001 to 3 wt.%, more preferably 0.005 to 2 wt.%, even more preferably 0.001 to 0.5 wt.%, still even more preferably 0.05 to 0.5 wt.%, most preferably 0.1 to 1 wt.% of one or more perfume component and from 0.1 to 50 ppm dispersin, preferably having 1,6 beta-N-acetylglycosamine activity, wherein the dispersin is selected from the group consisting of:

a) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:1,
b) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:2,
c) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:3,
d) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:4,
e) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:5,
f) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:6,
g) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:7,
h) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:8,
i) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%,

at least 99%, or 100% sequence identity to the polypeptide shown in SEQ ID NO:9,

j) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:10,

k) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:11,

l) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:12,

m) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:13,

n) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:14,

o) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:15,

p) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:16,

q) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:17,

r) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:18,

s) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:19,

t) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:20,

u) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:21,

v) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:22, and

w) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:23.

A polypeptide having hexosaminidase activity may be obtained from microorganisms of any genus. Preferably the hexosaminidase or the β-N-acetytgtucosaminidase targeting poly-β-1,6-N-acetylglucosamine, e.g., a dispersin, is obtained from *Terribacillus, Curtobacterium, Aggregatibacter, Haemophilus, Actinobacillus, Lactobacillus* or *Staphylococcus,* preferably *Terribacillus* or *Lactobacillus.* Alternatively, it may be obtained from, e.g., *Neisseria, Otariodibacter, Lactococcus, Frigoribacterium, Basfia, Weissella, Macrococcus* or *Leuconostoc.*

In another aspect, the polypeptide is an *Aggregatibacter* polypeptide, e.g., a polypeptide obtained from *Aggregatibacter actinomycetemcomitans.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:1 and is preferably obtainable from *Aggregatibacter,* preferably *Aggregatibacter actinomycetemcomitans.*

In another aspect, the polypeptide is a *Haemophilus* polypeptide, e.g., a polypeptide obtained from *Haemophilus sputorum.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:2 and is preferably obtainable from *Haemophilus,* preferably *Haemophilus sputorum.*

In another aspect, the polypeptide is an *Actinobacillus* polypeptide, e.g., a polypeptide obtained from *Actinobacillus suis.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:3 and is preferably obtainable from *Actinobacillus,* preferably *Actinobacillus suis.*

In another aspect, the polypeptide is an *Actinobacillus* polypeptide, e.g., a polypeptide obtained from *Actinobacillus capsulatus DSM 19761.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:4 and is preferably obtainable from *Actinobacillus,* preferably *Actinobacillus capsulatus DSM 19761.*

In another aspect, the polypeptide is an *Actinobacillus* polypeptide, e.g., a polypeptide obtained from *Actinobacillus equuli subsp. equuli.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:5 and is preferably obtainable from *Actinobacillus,* preferably *Actinobacillus equuli subsp. equuli.*

In another aspect, the polypeptide is an *Aggregatibacter* polypeptide, e.g., a polypeptide obtained from *Aggregatibacter actinomycetemcomitans.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:6 and is preferably obtainable from *Aggregatibacter,* preferably *Aggregatibacter actinomycetemcomitans.*

In another aspect, the polypeptide is an *Aggregatibacter* polypeptide, e.g., a polypeptide obtained from *Aggregatibacter actinomycetemcomitans.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:7 and is preferably obtainable from *Aggregatibacter,* preferably *Aggregatibacter actinomycetemcomitans.*

In another aspect, the polypeptide is an *Actinobacillus* polypeptide, e.g., a polypeptide obtained from *Actinobacillus pleuropneumoniae.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:8 and is preferably obtainable from *Actinobacillus,* preferably *Actinobacillus pleuropneumoniae.*

In another aspect, the polypeptide is a *Curtobacterium* polypeptide, e.g., a polypeptide obtained from *Curtobacterium oceanosedimentum.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:9 and is preferably obtainable from *Curtobacterium,* preferably *Curtobacterium oceanosedimentum.*

In another aspect, the polypeptide is a *Curtobacterium* polypeptide, e.g., a polypeptide obtained from *Curtobacterium flaccumfaciens.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:10 and is preferably obtainable from *Curtobacterium,* preferably *Curtobacterium flaccumfaciens.*

In another aspect, the polypeptide is a *Curtobacterium* polypeptide, e.g., a polypeptide obtained from *Curtobacterium luteum.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at

least 95%, at least 96%, at least 97%, at least 98%, at least 99% or 100% sequence identity to SEQ ID NO:11 and is preferably obtainable from *Curtobacterium,* preferably *Curtobacterium luteum.*

In another aspect, the polypeptide is a *Curtobacterium* polypeptide, e.g., a polypeptide obtained from *Curtobacterium oceanosedimentum.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:12 and is preferably obtainable from *Curtobacterium,* preferably *Curtobacterium oceanosedimentum.*

In another aspect, the polypeptide is a *Curtobacterium* polypeptide, e.g., a polypeptide obtained from *Curtobacterium* leaf154. In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:13 and is preferably obtainable from *Curtobacterium,* preferably *Curtobacterium* leaf154.

In another aspect, the polypeptide having hexosaminidase activity is a *Terribacillus* polypeptide, e.g., a polypeptide obtained from *Terribacillus saccharophilus.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:14 and is preferably obtainable from *Terribacillus,* preferably *Terribacillus saccharophilus.*

In another aspect, the polypeptide is a *Terribacillus* polypeptide, e.g., a polypeptide obtained from *Terribacillus goriensis.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:15 and is preferably obtainable from *Terribacillus,* preferably *Terribacillus goriensis.*

In another aspect, the polypeptide is a *Terribacillus* polypeptide, e.g., a polypeptide obtained from *Terribacillus saccharophilus.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:16 and is preferably obtainable from *Terribacillus,* preferably *Terribacillus saccharophilus.*

In another aspect, the polypeptide is a *Terribacillus* polypeptide, e.g., a polypeptide obtained from *Terribacillus saccharophilus.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:17 and is preferably obtainable from *Terribacillus,* preferably *Terribacillus saccharophilus.*

In another aspect, the polypeptide is a *Terribacillus* polypeptide, e.g., a polypeptide obtained from *Terribacillus saccharophilus.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:18 and is preferably obtainable from *Terribacillus,* preferably *Terribacillus saccharophilus.*

In another aspect, the polypeptide is a *Lactobacillus* polypeptide, e.g., a polypeptide obtained from *Lactobacillus paraplantarum.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:19 and is preferably obtainable from *Lactobacillus,* preferably *Lactobacillus paraplantarum.*

In another aspect, the polypeptide is a *Lactobacillus* polypeptide, e.g., a polypeptide obtained from *Lactobacillus apinorum.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:20 and is preferably obtainable from *Lactobacillus,* preferably *Lactobacillus apinorum.*

In another aspect, the polypeptide is a *Lactobacillus* polypeptide, e.g., a polypeptide obtained from *Lactobacillus paraplantarum.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:21 and is preferably obtainable from *Lactobacillus,* preferably *Lactobacillus paraplantarum.*

In another aspect, the polypeptide is a *Staphylococcus* polypeptide, e.g., a polypeptide obtained from *Staphylococcus cohnii.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:22 and is preferably obtainable from *Staphylococcus,* preferably *Staphylococcus cohnii.*

In another aspect, the polypeptide is a *Staphylococcus* polypeptide, e.g., a polypeptide obtained from *Staphy-*

*lococcus fleurettii.* In a preferred aspect, the polypeptide is a polypeptide having at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99% or 100% sequence identity to SEQ ID NO:23 and is preferably obtainable from *Staphylococcus,* preferably *Staphylococcus fleurettii.*

The polypeptides useful in the present invention belong to the Glycoside Hydrolase family 20 (GH20, www.cazy.org). This family includes dispersins such as Dispersin B (DspB) which is a β-N-acetylglucosaminidase belonging to the Glycoside Hydrolase 20 family.

The dispersin can be included in the cleaning composition of the present invention at a level of from 0.01 to 1000 ppm, from 1 to 1000 ppm, from 10 to 1000 ppm, from 50 to 1000 ppm, from 100 to 1000 ppm, from 150 to 1000 ppm, from 200 to 1000 ppm, from 250 to 1000 ppm, from 250 to 750 ppm, or from 250 to 500 ppm based on active protein.

The dispersin can be included in the wash liquor solution of the present invention at a level of from 0.00001 to 10 ppm, from 0.00002 to 10 ppm, from 0.0001 to 10 ppm, from 0.0002 to 10 ppm, from 0.001 to 10 ppm, from 0.002 to 10 ppm, from 0.01 to 10 ppm, from 0.02 to 10 ppm, from 0.1 to 10 ppm, from 0.2 to 10 ppm, or from 0.5 to 5 ppm based on active protein.

**Perfumes**

Suitable perfumes and perfume components may be provided by the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

The preferred perfumes that may be used are not subject to any restrictions. Thus, in particular synthetic or natural odorant substance compounds of the types esters, ethers, aldehydes (fragrance aldehydes, odorant aldehydes), ketones (fragrance ketones, odorant ketones), alcohols, hydrocarbons, acids, carbonic acid esters, aromatic hydrocarbons, aliphatic hydrocarbons, saturated and/or unsaturated hydrocarbons and mixtures of these may be used as perfume substances.

Individual perfume compounds, e.g., synthetic products of the ester, ether, aldehyde, ketone, alcohol, and hydrocarbon types, can be used as well as mixtures thereof. It is preferred, however, to use mixtures of different perfumes, which together generate an attractive scent note. Such mixtures can also contain natural perfume mixtures such as those accessible from plant sources, e.g., pine, citrus, jasmine, patchouli, rose, or ylang-ylang oil. In order to be perceptible, a perfume must be volatile; in addition to the nature of the functional groups and the structure of the chemical compound, the molecular weight also plays an important part. Most perfumes possess molar weights of up to approximately 200 g/mol, while molar weights of 300 g/mol and above are rather exceptional. Because of the differing volatility of perfumes, the odor of a perfume made up of multiple perfumes changes during volatilization, the odor impressions being subdivided into a "top note", "middle note" or "body," and "end note" or "dry out." Because the perception of an odor also depends in a large part on the odor intensity, the top note of a perfume or scent is not made up only of highly volatile compounds, while the end note comprises for the most part less-volatile, i.e., adherent perfumes.

Suitable perfumes of the ester type include, e.g., benzyl acetate, phenoxy ethyl isobutyrate, p-tert-butyl cyclohexyl acetate, linalyl acetate, dimethyl benzyl carbinyl acetate (DMBCA), phenyl ethyl acetate, ethyl methyl phenyl glycinate, allyl cyclohexyl propionate, styrallyl propionate, benzyl salicylate, cyclohexyl salicylate, floramate, melusate and jasmacyclate.

Odorant substance compounds of the hydrocarbon type include, e.g., terpenes such as limonene and pinene.

Suitable perfumes of the ether type include, e.g., benzyl ethyl ether and ambroxan.

Suitable perfume substance alcohols include, e.g., 10-undecen-1-ol, 2,6-dimethyl heptan-2-ol, 2-methyl butanol, 2-methyl pentanol, 2-phenoxy ethanol, 2-phenyl propanol, 2-tert-butyl cyclohexanol, 3,5,5-trimethyl cyclohexanol, 3-hexanol, 3-methyl-5-phenyl pentanol, 3-octanol, 1-octen-3-ol, 3-phenyl propanol, 4-heptenol, 4-isopropyl cyclohexanol, 4-tert-butyl cyclohexanol, 6,8-dimethyl-2-nonanol, 6-nonen-1-ol, 9-decen-1-ol, alpha-methyl benzyl alcohol, alpha-terpineol, amyl salicylate, benzyl alcohol, benzyl salicylate, beta-terpineol, butyl salicylate, citronellol, cyclohexyl salicylate, decanol, dihydro myrcenol, dimethyl benzyl carbinol, dimethyl heptanol, dimethyl octanol, ethyl salicylate, ethyl vanillin, anethol, eugenol, geraniol, heptanol, hexyl salicylate, isoborneol, isoeugenol, isopulegol, linalool, menthol, myrtenol, n-hexanol, nerol, nonanol, octanol, para-menthan-7-ol, phenyl ethyl alcohol, phenol, phenyl salicylate, tetrahydro geraniol, tetrahydro linalool, thymol, trans-2-cis-6-nonadienol, trans-2-nonen-1-ol, trans-2-octenol, undecanol, vanillin, and cinnamic alcohol, wherein when multiple perfume substance alcohols are present, they may be selected independently of one another.

Suitable perfume ketones can include all ketones that can lend a desired scent or a sensation of freshness. Mixtures of different ketones can also be used. For example the ketone can be selected from the group consisting of buccoxime, iso-jasmone, methyl-beta-naphthyl ketone, Moschus indanone, Tonalid/Moschus plus, alpha-damascone, beta-damascone, delta-damascone, isodamascone, damascenone, damarose, methyl dihydro jasmonate, menthone, carvone, campher, fenchone, alpha-ionene, beta-ionone, dihydro-beta-ionone, gamma-methyl ionone, fleuramone, dihydro jasmone, cis-jasmone, iso-E-Super, methyl cedrenyl ketone or methyl cedrylone, acetophenone, methyl acetophenone, para-methoxy acetophenone, benzyl acetone, benzophenone, para-hydroxy-phenyl butanone, celery ketone or livescone, 6-isopropyl decahydro-2-naphtone, dimethyl octenone, frescomenthe, 4-(1-ethoxy vinyl)-3,3,5,5-tetramethyl cyclohexanone, methyl heptenone, 2-(2-(4-methyl-3-cyclohexen-1-yl)-propyl) cyclopentanone, 1-(para-menthen-6(2)-yl)-1-propanone, 4-(4-hydroxy-3-methoxy phenyl)-2-butanone, 2-acetyl-3,3-dimethyl norbomane, 6,7-dihydro-1,1,2,3,3-pentamethyl-4(5H)-indanone, 4-damascol, dulcinyl or cassion, gelsone, hexalone, isocyclemone E, methyl cyclocitrone, methyl lavender ketone, orivone, para-tert-butyl cyclohexanone, verdone, delphone, muscone, neobutenone, plicatone, veloutone, 2,4,4,7-tetramethyl-oct-6-en-3-one, tetrameran, hedione and mixtures thereof. The ketones can preferably be selected from alpha-damascone, delta-damascone, isodamascone, carvone, gamma-methyl ionone, iso-E-super, 2,4,4,7-tetramethyl-oct-6-en-3-one, benzyl acetone, beta-damascone, damascenone, methyl dihydro jasmonate, methylcedrylone, hedione and mixtures thereof.

Suitable perfume aldehydes can be any aldehydes that produce, like the scent ketones, a desired scent or a sensation of freshness. Once again, they may be individual aldehydes or mixtures of aldehydes. Exemplary suitable aldehydes are melonal, triplal, ligustral, adoxal, anis aldehyde, cymal, ethyl vanillin, florhydral, helional, heliotropine, hydroxy citronellal, koavone, laurin aldehyde, lyral, methyl nonyl acetaldehyde, para-tert-bucinal, phenyl acetaldehyde, undecylene aldehyde, vanillin, 2,6,10-trimethyl-9-andecenal, 3-dodecen-1-al, alpha-n-amyl cinnamaldehyde, 4-methoxy benzaldehyde, benzaldehyde, 3-(4-tert-butyl phenyl)-propanal, 2-methyl-3-(para-methoxy phenyl propanal), 2-methyl-4-(2,6,6-trimethyl-2(1)-cyclohexen-1-yl)-butanal, 3-phenyl-2-propenal, cis-/trans-3,7-dimethyl-2,6-octadien-1-al, 3,7-dimethyl-6-octen-1-al, [(3,7-dimethyl-6-octenyl)-oxy]-acetaldehyde, 4-isopropyl benzyaldehyde, 1,2,3,4,5,6,7,8-octahydro-8,8-dimethyl-2-naphthaldehyde, 2,4-dimethyl-3-cyclohexen-1-carboxyaldehyde, 2-methyl-3-(isopropyl phenyl)-propanal, decylaldehyde, 2,6-dimethyl-5-heptenal, 4-(tricyclo-[5.2.10-(2,6)]-decylidene-8)-butanal, octahydro-4,7-methano-1H-indene carboxaldehyde, 3-ethoxy-4-hydroxy benzaldehyde, para-ethyl-alpha-alpha-dimethyl hydro cinnamaldehyde, alpha-methyl-3,4-(methylene dioxy)-hydro cinnamaldehyde, 3,4-methylene dioxy benzaldehyde, alpha-n-hexyl cinnamaldehyde, m-cymene-7-carboxaldehyde, alpha-methyl phenyl acetaldehyde, 7-hydroxy-3,7-dimethyl octanal, undecenal, 2,4,6-trimethyl-3-cyclohexene-1-carboxaldehyde, 4-(3)-(4-methyl-3-pentenyl)-3-cyclohexene carboxaldehyde, 1-dodecanal, 2,4-dimethyl cyclohexene-3-carboxaldehyde, 4-(4-hydroxy-4-methyl pentyl)-3-cyclohexene-1-carboxaldehyde, 7-methoxy-3,7-dimethyl octan-1-al, 2-methyl undecanal, 2-methyl decanal, 1-nonanal, 1-octanal, 2,6,10-trimethyl-5,9-undecadienal, 2-methyl-3-(4-tert-butyl)-propanal, dihydro cinnamaldehyde, 1-methyl-4-(4-methyl-3-pentenyl)-3-cyclohexene-1-carboxaldehyde, 5- or 6-methoxy hexahydro-4,7-methano indane-1 or 2-carboxy aldehyde, 3,7-dimethyl octan-1-al, 1-undecanal, 10-undecen-1-al, 4-hydroxy-3-methoxy benzaldehyde, 1-methyl-3-(4-methyl pentyl)-3-cyclohexene carboxaldehyde, trans-4-decenal, 2,6-nonadienal, para-tolyl-acetaldehyde, 4-methyl phenyl acetaldehyde, 2-methyl-4-(2,6,6-trimethyl-1-cyclohexen-1-yl)-2-butenal, ortho-methoxy cinnamaldehyde, 3,5,6-trimethyl-3-cyclohexene carboxaldehyde, 3,7-dimethyl-2-methylene-6-octenal, phenoxy acetaldehyde, 5,9-dimethyl-4,8-decadienal, peony aldehyde (6,1-dimethyl-3-oxa-5,9-undecadien-1-al), hexahydro-4,7-methanoindane-1-carboxaldehyde, 2-methyloctanal, alpha-methyl-4-(1-methyl ethyl)-benzene acetaldehyde, 6,6-dimethyl-2-norpinene-2-propionaldehyde, para-methyl phenoxy acetaldehyde, 2-methyl-3-phenyl-2-propen-1-al, 3,5,5-trimethyl hexanal, hexahydro-8,8-dimethyl-2-naphthaldehyde, 3-propyl-bicyclo-[2.2.1]-hept-5-ene-2-carbaldehyde, 9-decenal, 3-methyl-5-phenyl-1-pentanal, 1-paramenthene-q-carboxaldehyde, citral or mixtures thereof, lilial citral, 1-decanal, 2,4-dimethyl-3-cyclohexene-1-carboxaldehyde. Preferred aldehydes can be selected from cis/trans-3,7-dimethyl-2,6-octadien-1-al, heliotropin, 2,4,6-trimethyl-3-cyclohexene-1-carboxaldehyde, 2,6-nonadienal, alpha-n-amyl cinnamaldehyde, alpha-n-hexyl cinnamaldehyde, para-tert-bucinal, lyral, cymal, methyl nonyl acetaldehyde, trans-2-nonenal, lilial, trans-2-nonenal and mixtures thereof.

Perfume substances may also be natural odorant mixtures such as those accessible from plant sources, e.g., pine, citrus, jasmine, patchouli, rose or ylang-ylang oil. Also suitable are muscat, sage oil, chamomile oil, clove oil, mint oil, cinnamon leaf oil, lime blossom oil, juniper berry oil, vetiver oil, olibanum [frankincense] oil, galbanum oil and labdanlum oil as well as orange blossom oil, neroli oil, orange peel oil and sandalwood oil. The perfume substances may also be essential oils, e.g., angelica root oil, anise oil, arnica blossom oil, basal oil, bay oil, champaca blossom oil, silver fir oil, silver fir cone oil, elemi oil, eucalyptus oil, fennel oil, spruce needle oil, geranium oil, gingergrass oil, guaiac wood oil, gurjun balsam oil, helichrysum oil, ho leaf oil, ginger oil, iris oil, cajeput oil, calmus oil, camphor oil, canaga oil, cardamom oil, cassia oil, copaiva balsam oil, coriander oil, spearmint oil, caraway oil, cumen oil, lavender oil, lemongrass oil, lime oil, mandarin oil, lemon balm oil, musk seed oil, myrrh oil, niaouli oil, origanum oil, palmarosa oil, peru balsam oil, petit grain oil, pepper oil, peppermint oil, pimento oil, rosemary oil, celery oil, spike oil, stemanis oil, turpentine oil, thuja oil, thyme oil, verbena oil, vermouth oil, wintergreen oil, ysop oil, cinnamon oil, citronella oil, lemon oil and cypress oil.

Preferably, the perfume comprises at least one note (compound) from: alpha-isomethyl ionone, benzyl salicylate, citronellol, coumarin, hexyl cinnamal, linalool, pentanoic acid, 2-methyl-, ethyl ester, octanal, benzyl acetate, 1,6-octadien-3-ol, 3,7-dimethyl-3-acetate, cyclohexanol, 2-(1,1-dimethyl ethyl)-1-acetate, delta-damascone, beta-ionone, verdyl acetate, dodecanal, hexyl cinnamic aldehyde, cyclopentadecanolide, benzene acetic acid, 2-phenyl ethyl ester, amyl salicylate, beta-caryophyllene, ethyl undecylenate, geranyl anthranilate, alpha-irone, beta-phenyl ethyl benzoate, alpha-santalol, cedrol, cedryl acetate, cedryl formate, cyclohexyl salicyate, gamma-dodecalactone and beta phenyl ethyl phenyl

acetate. Useful components of the perfume include materials of both natural and synthetic origin. They include single compounds and mixtures. Specific examples of such components may be found in, e.g., Fenaroli's Handbook of Flavor Ingredients, 1975, CRC Press; Synthetic Food Adjuncts, 1947 by M. B. Jacobs, edited by Van Nostrand; or Perfume and Flavor Chemicals by S. Arctander 1969, Montclair, N.J. (USA). It is commonplace for a plurality of perfume components to be present in a cleaning composition. In the compositions of the present invention it is envisaged that there will be four or more, preferably five or more, more preferably six or more or even seven or more different perfume components.

The perfume mixtures preferably comprise top notes, which are defined by Poucher (Journal of the Society of Cosmetic Chemists 6(2):80 [1955]). Preferred top notes are selected from citrus oils, linalool, linalyl acetate, lavender, dihydro myrcenol, rose oxide and cis-3-hexanol. The International Fragrance Association publices lists of fragrance ingredients http://www.ifraorg.org/en-us/ingredients#.XMgixOgza71. The list of 3999 materials reported as used in fragrance compounds in 2015 is hereby incorporated by reference, https://ifrafragrance.org/initiatives/transparency/ifra-transparency-list.

It is conventional knowledge in the art that the degree of hydrophobicity of a perfume ingredient may be correlated with its octanol/water partitioning coefficient P. The octanol/water partitioning coefficient of a fragrance ingredient is the ratio between its equilibrium concentration in octanol and in water. A fragrance ingredient with a greater partitioning coefficient P is more hydrophobic. Conversely, a fragrance ingredient with a smaller partitioning coefficient P is more hydrophilic. Since the partitioning coefficients of the perfume ingredients normally have high values, they are more conveniently given in the form of their logarithm to the base 10, logP. The logP value is a constant defined as

LogP = log10 (Partition Coefficient) Partition Coefficient, P = [organic]/[aqueous].

In particular embodiments, the logP values are more conveniently calculated by the "CLOGP" program, available from Daylight Chemical Information Systems. The "calculated logP" (ClogP) is determined by the fragment approach of Hansch & Leo (cf., Leo, in Comprehensive Medicinal Chemistry, Vol. 4, Hansch, et al., Eds., p. 295, Pergamon Press, 1990). In one embodiment the ClogP of the perfume component to be incorporated in the cleaning composition of the invention is in the range of -1.0 to 4.0. In other embodiments, the ClogP of the perfume component is in the range of 0.0 to 4.0, 1.0 to 4.0, 2.0 to 4.0, or 3.0 to 4.0. In yet other embodiments, the ClogP of the fragrance formulation is in the range of 0.0 to 3.0, 1.0 to 3.0, or 2.0 to 3.0.

Non-limiting examples of perfumes that have ClogP values in the range of -1.0 to 4.0 are allyl heptanoate, anethole USP, benzaldehyde, benzyl acetate, cis-3-hexenyl acetate, cis-jasmone, coumarin, dihydro myrcenol, dimethyl benzyl carbinyl acetate, ethyl vanillin, eucalyptol, eugenol, isoeugenol, isobutyl salicylate, floracetate, geraniol, hydroxy citronellal, koavone, LIFFAROME, dihydro linalool, linalool, methyl anthranilate, methyl-beta-naphthyl ketone, methyl dihydro jasmonate, nerol, nonalactone, orange flower ether, phenyl ethyl acetate, phenyl ethyl alcohol, phenyl propyl alcohol, phenoxy ethyl isobutyrate, phenoxanol, alpha-terpineol, tetrahydro linalool, beta-terpineol, vanillin, and mixtures thereof.

It is advantageous to encapsulate perfume components which have a low ClogP (i.e., those which will have a greater tendency to be partitioned into water), preferably with a ClogP of less than 3.0. These materials, of relatively low boiling point and relatively low ClogP have been called the "delayed blooming" perfume ingredients and include one or more of the following materials: allyl caproate, amyl acetate, amyl propionate, anisic aldehyde, anisole, benzaldehyde, benzyl acetate, benzyl acetone, benzyl alcohol, benzyl formate, benzyl isovalerate, benzyl propionate, beta-gamma hexenol, camphor gum, laevo-carvone, d-carvone, cinnamic alcohol, cinamyl formate, cis-jasmone, cis-3-hexenyl acetate, cuminic alcohol, cyclal c, dimethyl benzyl carbinol, dimethyl benzyl carbinol acetate, ethyl acetate, ethyl aceto acetate, ethyl amyl ketone, ethyl benzoate, ethyl butyrate, ethyl hexyl ketone, ethyl phenyl acetate, eucalyptol, eugenol, fenchyl acetate, floracetate (tricyclo decenyl acetate), frutene (tricyclco decenyl propionate), geraniol, hexenol, hexenyl acetate, hexyl acetate, hexyl formate, hydratropic alcohol, hydroxycitronellal, indone, isoamyl alcohol, isomenthone, isopulegyl acetate, isoquinolone, ligustral, linalool, linalool oxide, linalyl formate, menthone, menthyl acetphenone, methyl amyl ketone, methyl anthranilate, methyl benzoate, methyl benzyl acetate, methyl eugenol, methyl heptenone, methyl heptine carbonate, methyl heptyl ketone, methyl hexyl ketone, methyl phenyl carbinyl acetate, methyl salicylate, methyl-n-methyl anthranilate, nerol, octalactone, octyl alcohol, p-cresol, p-cresol methyl ether, p-methoxy acetophenone, p-methyl acetophenone, phenoxy ethanol, phenyl acetaldehyde, phenyl ethyl acetate, phenyl ethyl alcohol, phenyl ethyl dimethyl carbinol, prenyl acetate, propyl bornate, pulegone, rose oxide, safrole, 4-terpinenol, alpha-terpinenol, and/or viridine. Another group of perfumes with which the present invention can be applied are the aromatherapy materials, which include many components also used in perfumery, including components of essential oils such as Glary Sage, Eucalyptus, Geranium, Lavender, Mace Extract, Neroli, Nutmeg, Spearmint, Sweet Violet Leaf and Valerian.

In one embodiment, the perfume to be incorporated in the cleaning composition of the invention has a boiling point lower than about 250°C and a calculated water-octanol partition coefficient (ClogP) lower than about 3, which are known as Quadrant I perfume components.

In one embodiment, the perfume to be incorporated in the cleaning composition of the invention has a boiling point greater than about 250°C and a calculated water-octanol partition coefficient (ClogP) lower than about 3, which are known as Quadrant II perfume components.

In one embodiment, the perfume to be incorporated in the cleaning composition of the invention has a boiling point lower than about 250°C and a calculated water-octanol partition coefficient (ClogP) greater than about 3, which are known as Quadrant III perfume components.

In one embodiment, the perfume to be incorporated in the cleaning composition of the invention has a boiling point greater than about 250°C and a calculated water-octanol partition coefficient (ClogP) greater than about 3, which are known as Quadrant IV perfume components.

Suitable perfume raw materials include, but are not limited to, ethyl 2,4-decadienoate, allyl heptoate, amyl acetate, ethyl butyrate, Grapefruit Zest (C and A), prenyl acetate, pino acetaldehyde, 2,6-nonadienol, 3,6-nonadienol, cis-6-nonenol, excital, ebanol, polysantol, orange juice carbonyls, lemon juice carbonyls, orange sinensal, paradiff, tangerinal, benzaldehyde, mandarin aldehyde, undecalactone, norlimbanol, decyl aldehyde, trans-2-hexenal, trans-2-decenal, damascenone, 2-isobutylthiazole, 4-methyl-4-mercaptopentan-2-one, corps cassis 0.1% TEC, patchouli, 2-methoxy-4-vinyl phenol, pyridine acetyl 10%, sulfurol, diacetyl, furaneol, maple lactone, allyl amyl glycolate, Ambroxan, alpha-damascone damascene, Cetalox, cyclal C, Cedramber, cyclo galbanate, Galbex, Cymal, nerol, Florhydral, para-tert-bucinal, isocyclo citral, Fructone, methyl isobutenyl tetrahydro pyran, Frutene, Delphone, ethyl methyl phenyl glycidate, Violiff, delta-damascone damascene, Ambrox, Calone, isoeugenol, Hivernal, methyl beta napthyl ketone, Ozonil, benzyl salicylate, Spirogalbone, cinnamic alcohol, Javanol, dihydro isojasmonate, Adoxal, Kharismal, pyrazines, ethyl anthranilate, aldehyde supra, Bacdanol, Anethol, irisantheme, yara yara, Keone, cis-3-hexenyl salicylate, methyl nonyl ketone, coumarin, gamma-dodecalactone, Applinate, eucalyptol, intreleven aldehyde, heliotropin, indol, Manzanate, trans-4-decenal, Oxane, neobutanone, Clonal, methyl octine carbonate, Floralozone, methyl heptine carbonate, methyl nonyl acetaldehyde, Cashmeran, phenoxy ethyl isobutyrate, phenyl acetaldehyde, undecyl aldehyde, Aurantiol, nectaryl, buccoxime, Laurie aldehyde, nirvanol, Trifernal, pyrazobutyle, Veloutone, Anisic aldehyde, paramenthene, isovaleric aldehyde 0.1% DPG, liminal, labienoxime, rhubofix, isopropyl quinoline, 4-(2,6,6-trimethyl-1-cyclohexenyl)-3-butenone-2, (3aR-(3aalpha,5abeta,9aalpha,9bbeta))-dodecahydro-3a,6,6,9a-tetramethyl naphtha-(2,1-b)-furan, 2,6-dimethyl-5-heptenal, 3,7-dimethyl-1,6-octadien-3-ol, 3-methyl-2-buten-1-yl-acetate, 3,7-dimethyl-2,6-octadienenitrile, 2,4-dimethyl cyclohexene-3-carbaldehyde, ethyl methyl dioxolane acetate, 4-(2,6,6-trimethyl-1,3-cyclohexadienyl)-3-buten-4-one, cis-3-hexenyl acetate, laurie aid, tricyclo decenyl acetate, para-cresyl methyl ether, 7-acetyl-1,2,3,4,5,6,7,8-octahydro-1,1,6,7-tetramethyl naphthalene, 3-buten-2-one, 3-methyl-4-(2,6,6-trimethyl-2-cyclohexen-1-yl), acetic acid (cyclohexyloxy), 2-propenyl ester, 4-(2,6,6-trimethyl-2-cyclohexen-1-yl), methyl-3,4-dioxy-(cylcoacetonyl)-benzene, 2,6-dimethyl-2,6-octadien-8-ol, ortho-tert-butyl cyclohexanyl acetate, hexanoic acid, methoxy benzaldehyde, 3-(3-isopropyl phenyl)-butanal, iso-2-methoxy-4-(2-propenyl)-phenol, 1-methyl-4-isopropenyl-1-cyclohexene, methyl phenyl carbonyl acetate, hexahydro-4,7-methano-1H-inden-5-(or 6)-yl-propionate, 3,7-dimethyl-2,6-octadienal, 3,3-dimethyl-5-(2,2,3-trimethyl-3-cycloenten-1-yl)-4-penten-2-ol, 2-methoxy-4-(2-propenyl)-phenol, 3,7-dimethyl-6-octen-1-ol, allyl heptanoate, 1,3-oxathiane, (all-E)-alpha-sinensal, 2,6,10-trimethyl-2(E),6(E),9(E),11-dodecatetraenal, p-1-menthen-8 thiol, 4-methyl-3-decen-5-ol, ethyl caproate, 4-penten-1-one, 1-(5,5-dimethyl-1-cyclohexen-1-yl), 1H-indene-a-propanal, 2,3-dihydro-1,1-dimethyl-(9Cl), 4-dodecenal, 3-cyclohexene-1-carboxaldehyde, 2,4-dimethyl, 2,6-nonenol, 3-p-cumenyl-propionaldehyde-4-(1-methyl ethyl)-benzene propanal, 1-(2,6,6-trimethyl-1,3-cyclohexan dienyl)-2-buten-1-one, 6-(Z,3-pentenyl)-tetrahydro-(2H)-pyranone-2, 3-methyl-(cis-2-penten-1-yl)-2-cyclopenten-1-one, 6,6-dimethyl bicyclo-(3.1.1)-hept-2-ene-2-proponal, 4-pentene-2-ol, undeclactone, 4-methoxy benzaldehyde, 3-dodecenal, animal fragrances such as musk oil, civet, castoreum, ambergris, plant fragrances such as nutmeg extract, cardomon extract, ginger extract, cinnamon extract, patchouli oil, geranium oil, orange oil, mandarin oil, orange flower extract, cedarwood, vetyver, lavandin, ylang extract, tuberose extract, sandalwood oil, bergamot oil, rosemary oil, spearmint oil, peppermint oil, lemon oil, lavender oil, citronella oil, chamomille oil, clove oil, sage oil, neroli oil, labdanum oil, eucalyptus oil, verbena oil, mimosa extract, narcissus extract, carrot seed extract, jasmine extract, olibanum extract, rose extract, acetophenone, aldehyde $C_{12}$, aldehyde $C_{14}$, aldehyde $C_{18}$, allyl caprylate, dimethylindane derivatives, anisaldehyde, benzyl acetate, benzyl alcohol and ester derivatives, benzyl propionate, beta-gamma hexanol, borneol, butyl acetate, camphor, carbitol, carvone, cinnamaldehyde, cinnamyl acetate, cinnamyl alcohol, cis-3-hexanol and ester derivatives, cis-3-hexenyl methyl carbonate, cis-jasmone, citral, citronnellol and ester derivatives, cumin aldehyde, cyclamen aldehyde, damascones, decanol, estragole, delta-muscenone, dihydro myrcenol, dimethyl benzyl carbinol, 6,8-dimethyl-2-nonanol, dimethyl benzyl carbinyl butyrate, ethyl isobutyrate, ethyl propionate, ethyl caprylate, ethyl cinnamate, ethyl hexanoate, ethyl valerate, exaltolide, fenchone, galaxolide, geraniol and ester derivatives, hedione, helional, 2-heptonone, hexenol, hexyl salicylate, hydroxy citronellal, isoamyl isovalerate, iso E super, linalool acteate, lilial, lyral, majantol, mayol, menthol, p-methyl acetophenone, methyl cedrylone, methyl dihydro jasmonate, methyl eugenol, mugetanol, para hydroxy phenyl butanone, phenoxynol, phenyl acetaldehyde dimethyl acetate, phenoxyethyl isobutyrate, phenyl ethyl alcohol, pinenes, sandalore, sanjinol, santalol, thymol, terpenes, tonalide, 3,3,5-trimethyl cyclohexanol, undecylenic aldehyde, linalool, citronellol, isobornyl acetate, para-tert-butyl cyclohexyl acetate, linalyl acetate, dihydro-nor-dicyclopentadienyl acetate, dihydro-nor-dicyclopentadienyl propionate, amyl salicylate, para-isopropyl alpha-octyl hydrocinnamic aldehyde, hexyl cinnamic aldehyde, hydroxy citronellal, gamma-methyl ionone, methyl beta naphthyl ketone, gamma undecalactone, eugenol, musk xylol, 1,3,4,6,7,8-hexahydro-4,6,6,7,8,8-hexamethyl cyclopenta-gamma-2-benzopyrane, 4-acetyl-6-tertiarybutyl-1,1-dimethyl indan, 6-acetyl-1,1,3,4,4,6-hexamethyl tetrahydro naphthalene, beta naphthyl ethyl ether, methyl cedrenyl ketone, geranyl nitrile, alpha ionone, alpha beta ionone, benzyl isoeugenol, amyl cinnamic aldehyde, beta gamma hexenol, orange CP, 2-methyl-3-(para-iso-propyl phenyl)-propionaldehyde, trichloro methyl phenyl carbinyl acetate, nonanediol-1,3-acetate, citrathal, tetrahydro muguol, ethylene brassylate, musk ketone, musk tibetine, phenyl ethyl acetate, oakmoss 25%, stemone, citronellyl nitrile, ethyl linalool, undecavertol, methyl phenyl carbinyl acetate, 6-nonen-1-ol, (6Z)-cis-3-hexen-1-ol (beta gamma hexenol), ambrox DL, ozone propanal (floralozone), 3-methyl-5-(2,2,3-trimethyl-3-cyclopenten-1-yl)-pent-4-en-2-ol (ebanol), phenethyl isobutyrate, bourgeonal, ethyl-2-methyl-1,3-dioxolane-2-acetate (fructone), bigarade oxide, allyl cyclohexyl propionate, tetrahydro linalool, trimofix O, neofolione, citronellyl oxyacetaldehyde, romanolide, beta-pinene, karanal, vertenex, o-tert-butyl cyclohexyl acetate (verdox), gamma-decalactone, oxalone (calone 1951), cinnamic aldehyde, dihydro-beta-ionone, ethyl acetate, cyclemax, d-limonene, vivaldie, trans-anethole, cis-3-hexenyl butyrate, floracetate, trans-pino acetaldehyde, dodecanal, rose oxide, undecanal (undecyl aldehyde), allyl caproate, romascone, a-irone, hexyl acetate, liffarome, vertoliff, nonanal, methyl 2-octynoate, beta-ionone, ethyl oenanthate, maltol, alpha-damascone, methyl-2-nonynoate, gamma-nonalactone, dimetol, methyl pamplemousse, methyl ionone (xandralia), 2-nonen-1-al, (E)-2,(Z)-6-nonadienal, ethyl-2-methyl butyrate, melonal, isoamyl acetate, 2,6-nonadien-1-ol, (2E,6Z)-(nonadienol), isobutyl quinoline, 2-methyl undecanal, methyl anthranilate, cis-3-nonadienol, cis-6-nonadienol, ethyl vanillin, neobutenone, triplal or ligustral, 10-undecenal, citronellal, N-decanal, vanillin, L-carvone, octanal, methyl benzoate, and mixtures thereof.

In one embodiment a plurality of perfume components, e.g., those listed above, are comprised in the cleaning composition of the invention.

**Surfactants**

The cleaning composition may comprise one or more surfactants, which may be anionic and/or cationic and/or non-ionic and/or semi-polar and/or zwitterionic, or a mixture thereof. In a particular embodiment, the cleaning composition includes a surfactant system (comprising more than one surfactant), e.g., a mixture of one or more nonionic surfactants and one or more anionic surfactants.

In one embodiment the detergent comprises at least one anionic surfactant and at least one non-ionic surfactant, the weight ratio of anionic to nonionic surfactant may be from 10:1 to 1:10. In one embodiment the amount of anionic surfactant is higher than the amount of non-ionic surfactant, e.g., the weight ratio of anionic to non-ionic surfactant may be from 10:1 to 1.1:1 or from 5:1 to 1.5:1. The amount of anionic to non-ionic surfactant may also be equal and the weight ratios 1:1. In one embodiment the amount of non-ionic surfactant is higher than the amount of anionic surfactant and the weight ratio may be 1:10 to 1:1.1. Preferably the weight ratio of anionic to non-ionic surfactant is from 10:1 to 1:10, such as from 5:1 to 1:5, or from 5:1 to 1:1.2. Preferably, the weight fraction of non-ionic surfactant to anionic surfactant is from 0 to 0.5 or 0 to 0.2 thus non-ionic surfactant can be present or absent if the weight fraction is 0, but if non-ionic surfactant is present, then the weight fraction of the nonionic surfactant is preferably at most 50% or at most 20% of the total weight of anionic surfactant and non-ionic surfactant. Light duty detergent usually comprises more non-ionic than anionic surfactant and there the fraction of non-ionic surfactant to anionic surfactant is preferably from 0.5 to 0.9.

The total weight of surfactant(s) is typically present at a level of from about 0.1 to about 60 wt.%, such as about 1 to about 40 wt.%, or about 3 to about 20 wt.%, or about 0.1 to about 15 wt.% or about 3 to about 10 wt.%. "About", as used herein in relation to a numerical value means said value $\pm$10%, preferably $\pm$5%. "About 5 wt.%" thus means from 4.5 to 5.5 wt.%, preferably from 4.75 to 5.25 wt.%. The surfactant(s) is chosen based on the desired cleaning application, and may include any conventional surfactant(s) known in the art.

When included therein the detergent will usually contain from about 1 to about 40 wt.% of an anionic surfactant, such as from about 5 to about 30 wt.%, including from about 5 to about 15 wt.%, or from about 15 to about 20 wt.%, or from about 20 to about 25 wt.% of an anionic surfactant. Preferred anionic surfactants are sulfate surfactants and in particular alkyl ether sulfates, especially $C_{9-15}$ alcohol ether sulfates, preferably ethoxylates or mixed ethoxylates/propoxylates, such as those with 1 to 30 EO, $C_{12-15}$ primary alcohol ethoxylate, such as those with 1 to 30 EO, $C_{8-16}$ ester sulfates and $C_{10-14}$ ester sulfates, such as mono dodecyl ester sulfates. Non-limiting examples of anionic surfactants include sulfates and sulfonates, typically available as sodium or potassium salts or salts of monoethanol amine (MEA, 2-amino ethan-1-ol) or triethanol amine (TEA, 2,2',2"-nitrilo triethan-1-ol), in particular, linear alkyl benzene sulfonates (LAS), in particular $C_{12-13}$ alkyl benzene sulfonates, isomers of LAS, branched alkyl benzene sulfonates (BABS), phenyl alkane sulfonates, olefin sulfonates, alpha-olefin sulfonates (AOS), alkene sulfonates, alkane-2,3-diylbis-(sulfates), hydroxy alkane sulfonates and disulfonates, alkyl sulfates (AS) such as sodium dodecyl sulfate (SDS), fatty alcohol sulfates (FAS), primary alcohol sulfates (PAS), alcohol ether sulfates (AES or AEOS or FES, also known as alcohol ethoxy sulfates or fatty alcohol ether sulfates), secondary alkane sulfonates (SAS), paraffin sulfonates (PS), ester sulfonates, sulfonated fatty acid glycerol esters, alpha-sulfo fatty acid methyl esters (alpha-SFMe or SES) including methyl ester sulfonate (MES), alkyl- or alkenyl succinic acids, dodecenyl/tetradecenyl succinic acid (DTSA), diesters and monoesters of sulfo succinic acid, fatty acid derivatives of amino acids, and combinations thereof. Furthermore, salts of fatty acids

(soaps) may be included. The anionic surfactants are preferably added to the detergent in the form of salts. Suitable cations in these salts are alkali metal ions, such as sodium, potassium and lithium and ammonium salts, e.g., (2-hydroxy ethyl) ammonium, bis-(2-hydroxy ethyl) ammonium and tris-(2-hydroxy ethyl) ammonium salts.

When included therein the detergent will usually contain from about 1 to about 40 wt.% of a cationic surfactant, e.g., from about 0.5 to about 30 wt.%, in particular from about 1 to about 20 wt.%, from about 3 to about 10 wt.%, such as from about 3 to about 5 wt.%, from about 8 to about 12 wt.% or from about 10 to about 12 wt.%. Non-limiting examples of cationic surfactants include alkyl dimethyl ethanol amine quat (ADMEAQ), cetyl trimethyl ammonium bromide (CTAB), dimethyl distearyl ammonium chloride (DSDMAC), and alkyl benzyl dimethyl ammonium, alkyl quaternary ammonium compounds, alkoxylated quaternary ammonium (AQA) compounds, ester quats, and combinations thereof.

When included therein the detergent will usually contain from about 0.2 to about 40% wt.% of a nonionic surfactant, e.g., from about 0.5 to about 30 wt.%, in particular from about 1 to about 20 wt.%, from about 3 to about 10 wt.%, such as from about 3 to about 5 wt.%, from about 8 to about 12 wt.%, or from about 10 to about 12 wt.%. Non-limiting examples of nonionic surfactants include alcohol ethoxylates (AE or AEO), alcohol propoxylates, propoxylated fatty alcohols (PFA), ethoxylated and propoxylated alcohols, alkoxylated fatty acid alkyl esters, ethoxylated and/or propoxylated fatty acid alkyl esters (in particular methyl ester ethoxylates, MEE), alkyl phenol ethoxylates (APE), nonyl phenol ethoxylates (NPE), alkyl polyglycosides (APG), alkoxylated amines, fatty acid monoethanol amides (FAM), fatty acid diethanol amides (FADA), ethoxylated fatty acid monoethanol amides (EFAM), propoxylated fatty acid monoethanol amides (PFAM), polyhydroxy alkyl fatty acid amides, or N-acyl N-alkyl derivatives of glucosamine (glucamides, GA, or fatty acid glucamides, FAGA), as well as products available under the trade names SPAN and TWEEN, and combinations thereof. Commercially available nonionic surfactants include Plurafac™, Lutensol™ and Pluronic™ range from BASF, Dehypon™ series from Cognis and Genapol™ series from Clariant.

When included therein the detergent will usually contain from about 0.01 to about 10 wt.% of a semipolar surfactant. Non-limiting examples of semipolar surfactants include amine oxides (AO) such as alkyl dimethyl amine oxides, N-(coco alkyl)-N,N-dimethyl amine oxide and N-(tallow-alkyl)-N,N-bis-(2-hydroxy ethyl) amine oxide, and combinations thereof. The amine oxides suitable in accordance with the invention include alkyl amine oxides, in particular alkyl dimethyl amine oxides, alkyl amido amine oxides and alkoxy alkyl amine oxides. Examples of suitable amine oxides are the following compounds designated as INCI: almond amido propyl amine oxides, babassu amido propyl amine oxides, behen amine oxides, cocamido propyl amine oxides, cocamido propyl amine oxides, cocamine oxides, coco morpholine oxides, decyl amine oxides, decyl tetradecyl amine oxides, diamino pyrimidine oxides, dihydroxy ethyl $C_{8-10}$ alkoxy propyl amine oxides, dihydroxy ethyl $C_{9-11}$ alkoxy propyl amine oxides, dihydroxy ethyl $C_{12-15}$ alkoxy propyl amine oxides, dihydroxy ethyl cocamine oxides, dihydroxy ethyl lauramine oxides, dihydroxy ethyl stearamine oxides, dihydroxy ethyl tallow amine oxides, hydrogenated palm kernel amine oxides, hydrogenated tallow amine oxides, hydroxy ethyl hydroxy propyl $C_{12-15}$ alkoxy propyl amine oxides, isostearamido propyl amine oxides, isostearamido propyl morpholine oxides, lauramido propyl amine oxides, lauramine oxides, methyl morpholine oxides, milk amido propyl amine oxides, mine amido propyl amine oxides, myristamineido propyl amine oxides, myristamine oxides, myristyl/cetyl amine oxides, oleamido propylamine oxides, oleamine oxides, palmitamido propyl amine oxides, palmitamine oxides, PEG-3 lauramine oxides, potassium dihydroxy ethyl cocamine oxide phosphates, potassium trisphosphono methyl amine oxides, sesamido propylamine oxides, soy amido propyl amine oxides, stearamido propyl amine oxides, stearamine oxides, tallow amido propyl amine oxides, tallow amine oxides, undecylen amido propyl amine oxides and wheat germ amido propyl amine oxides. A preferred amine oxide is, e.g., cocamido propyl amine oxides.

When included therein the detergent will usually contain from about 0.01 to about 10 wt.% of a zwitterionic surfactant. Non-limiting examples of zwitterionic surfactants include betaines such as alkyl dimethyl betaines, sulfo betaines, and combinations thereof. Preferred betaines are the alkyl betaines, the alkyl amido betaines, the imidazolinium betaines, the sulfo betaines (INCI sultaines) and the phosphor betaines. Examples of suitable betaines and sulfo betaines are the following compounds designated as INCI: almond amido propyl betaines, apricot amido propyl betaines, avocado amido propyl betaines, babassu amido propyl betaines, behen amido propyl betaines, behenyl betaines, betaines, canolamido propyl betaines, caprylic/capramido propyl betaines, carnitines, cetyl betaines, cocamido ethyl betaines, cocamido propyl betaines, cocamido propyl hydroxy sultaines, coco betaines, coco hydroxy sultaines, coco/oleamido propyl betaines, coco sultaines, decyl betaines, dihydroxy ethyl oleyl glycinates, dihydroxy ethyl soy glycinates, dihydroxy ethyl stearyl glycinates, dihydroxy ethyl tallow glycinates, dimethicones propyl PG betaines, erucamido propyl hydroxy sultaines, hydrogenated tallow betaines, isostearamido propyl betaines, lauramido propyl betaines, lauryl betaines, lauryl hydroxy sultaine, lauryl sultaines, milk amido propyl betaines, mink amido propyl betaines, myristamineido propyl betaines, myristyl betaines, oleamido propyl betaines, oleamido propyl hydroxy sultain, oleyl betaine, oliv amido propyl betaine, palm amido propyl betaine, palmit amido propyl betaine, palmitoyl carnitine, palm kernel amido propyl betaine, polytetra fluoro ethylene acetoxy propyl betaine, ricinole amido propyl betaine, sesamido propyl betaine, soy amido propyl betaine, stearamido propyl betaine, stearyl betaine, tallow amido propyl betaine, tallow amido propyl hydroxy sultaine, tallow betaine, tallow dihydroxy ethyl betaine, undecylen amido propyl betaine and wheat germ amido propyl betaine. A preferred betaine is, e.g., cocamido propyl betaine. The betaines are particularly preferred for dishwashing

compositions, most preferably hand dishwashing detergent compositions.

Additional bio-based surfactants may be used, e.g., wherein the surfactant is a sugar-based non-ionic surfactant which may be a hexyl-p-D-malto pyranoside, thiomalto pyranoside or a cyclic-malto pyranoside, such as described in EP2516606B1.

In various embodiments, said surfactant preferably comprises at least one alkyl ether sulfate. Preferred alkyl ether sulfates are those of formula (I)

$$R^1\text{-O-(AO)}_n\text{-SO}_3^- \ X^+ \qquad \text{(I).}$$

In formula (I) $R^1$ represents a linear or branched, substituted or unsubstituted alkyl group, preferably a linear, unsubstituted alkyl group, more preferably a fatty alcohol moiety. Preferred $R^1$ moieties are selected from the group consisting of decyl, undecyl, dodecyl, tridecyl, tetradecyl, pentadecyl, hexadecyl, heptadecyl, octadecyl, nonadecyl, eicosyl moieties and mixtures thereof, wherein those groups with an even number of carbon atoms are preferred. Particularly preferred $R^1$ moieties are derived from $C_{10\text{-}18}$ fatty alcohols, such as those derived from coconut oil alcohols, tallow fatty alcohols, lauryl, myristyl, cetyl or stearyl alcohol or from $C_{10\text{-}20}$ oxoalcohols. AO represents an ethyleneoxide (EO) or propyleneoxide (PO) group, preferably an ethyleneoxide group. The index n represents an integer from 1 to 50, preferably from 1 to 20 and more preferably from 1 to 10. Particularly preferably, n is 1, 2, 3, 4, 5, 6, 7 or 8. $X^+$ represents a monovalent cation or the n-th part of an n-valent cation, preferred are alkali metal cations, specifically $Na^+$ and $K^+$, most preferably $Na^+$. Further cations $X^+$ may be selected from $NH_4^+$, ½ $Zn^{2+}$,½ $Mg^{2+}$,½ $Ca^{2+}$,½ $Mn^{2+}$, and combinations thereof.

In various preferred embodiments, the detergent compositions comprise an alkyl ether sulfate selected from fatty alcohol ether sulfates of formula (II)

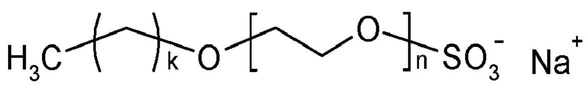

(II)

wherein k = 9 to 19, and n = 1, 2, 3, 4, 5, 6, 7 or 8. Preferred are $C_{10\text{-}16}$ fatty alcohol ether sulfates with 1-7 EO (k = 9-15, n = 1-7), such as the $C_{12\text{-}14}$ fatty alcohol ether sulfates with 1-3, particularly 2 EO (k = 11-13, n = 1-3 or 2), more particularly the sodium salts thereof. One specific embodiment thereof is lauryl ether sulfate sodium salt with 2 EO. The level of ethoxylation is an average value and can, for a specific compound, be an integer or fractional number.

In various embodiments, the surfactant comprises at least one alkyl benzene sulfonate. Said alkyl benzene sulfonate may be present alternatively to the above alkyl ether sulfate or, preferably, in addition to it. Exemplary alkyl benzene sulfonates include, but are not limited to linear and branched alkyl benzene sulfonates, preferably linear alkyl benzene sulfonates. Exemplary compounds are those of formula (III)

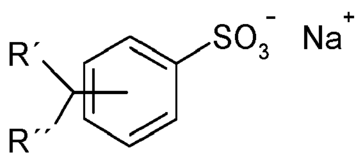

(III),

wherein R' and R" are independently H or alkyl and combined comprise 9 to 19, preferably 9 to 15 and more preferably 9 to 13 carbon atoms. Particularly preferred are dodecyl and tridecyl benzene sulfonates, in particular the sodium salts thereof.

In addition or alternatively, the compositions of the invention may further comprise one or more nonionic surfactants. Preferred nonionic surfactants are those of formula (IV)

$$R^2\text{-O-(AO)}_m\text{-H} \qquad \text{(IV),}$$

wherein $R^2$ represents a linear or branched substituted or unsubstituted alkyl moiety, AO represents an ethylene oxide (EO) or propylene oxide (PO) group and m is an integer from 1 to 50. In formula (IV), $R^2$ preferably represents a linear or branched, substituted or unsubstited alkyl group, preferably a linear, unsubstituted alkyl group, particularly preferred a fatty alcohol group. Preferred groups of $R^2$ are selected from decyl, undecyl, dodecyl, tridecyl, tetradecyl, pentadecyl, hexadecyl, heptadecyl, octadecyl, nonadecyl, eicosyl groups and combinations thereof, wherein those groups with an even number of carbon atoms are preferred. Particularly preferred are $R^2$ groups derived from $C_{12\text{-}18}$ fatty alcohols,

such as coconut oil alcohol, tallow oil alcohol, lauryl, myristyl, cetyl or stearyl alcohol or from $C_{10-20}$ oxoalcohols. AO represents an ethylene oxide (EO) or propylene oxide (PO) group, preferably an ethylene oxide group. The index m represents an integer from 1 to 50, preferably from 1 to 20 and more preferably from 1 to 6. Particularly preferably, m is 1, 2, 3, 4 or 5, most preferably 3 to 5, as higher degrees of ethoxylation may negatively influence viscosity and stability.

In various preferred embodiments, the detergent compositions comprise an alkyl ether selected from fatty alcohol ethers of formula (V)

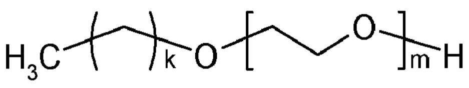

(V)

wherein k = 11 to 19, m = 1, 2, 3, 4, 5, 6, 7 or 8. Preferred are $C_{12-18}$ fatty alcohols with 1-6 EO (k = 11-17, m = 1-5 in formula (V)). More preferred are $C_{12-14}$ alcohols having 1-5 EO, most preferred are $C_{12-14}$ alkyl ethers with 3-5 EO, in particular lauryl ether with 5 EO.

The detergent compositions may further include other nonionic surfactants, such as alkyl glucosides of the general formula $RO(G)_x$, where R is a primary linear or 2-methyl-branched aliphatic radical containing 8 to 22 and preferably 12 to 18 carbon atoms and G stands for a glucose unit. The degree of oligomerization x, which indicates the distribution of monoglucosides and oligoglucosides, is a number of 1 to 10 and preferably a number of 1.2 to 1.4.

In various embodiments, the composition comprises at least two anionic surfactants, e.g., at least one alkyl ether sulfate and preferably at least one alkyl benzene sulfonate, and optionally an alkyl ether.

For automatic dishwashing applications, low-foaming nonionic surfactants are preferably used, in particular alkoxylated, especially ethoxylated, low-foaming nonionic surfactants. With particular preference, the automatic dishwashing detergents contain nonionic surfactants from the group of the alkoxylated alcohols. Particular preference is given to nonionic surfactants which have a melting point above room temperature. Nonionic surfactants having a melting point above 20°C, preferably above 25°C, more preferably between 25 and 60°C and especially between 26.6 and 43.3°C, are particularly preferred. Preferably used surfactants are those from the groups of alkoxylated nonionic surfactants, in particular the ethoxylated primary alcohols and mixtures of these surfactants with structurally more complex surfactants such as polyoxypropylene/ polyoxyethylene/ polyoxypropylene (PO/EO/PO) surfactants. Such (PO/EO/PO) nonionic surfactants are also characterized by good foam control. Particularly preferred nonionic surfactants are those containing alternating ethylene oxide and different alkylene oxide units. Among these, in turn, surfactants with EO-AO-EO-AO blocks are preferred, with one to ten EO or AO groups before one block from the other group follows. Exemplary nonionic surfactants are those having a $C_9$-alkyl group with 1 to 4 ethylene oxide units followed by 1 to 4 propylene oxide units, followed by 1 to 4 ethylene oxide units followed by 1 to 4 propylene oxide units. Preference is given in particular to end-capped, poly(oxyalkylated) nonionic surfactants with the end-cap being a linear or branched, saturated or unsaturated, aliphatic or aromatic hydrocarbon radical R having 1 to 30 carbon atoms. The alkyl groups may also comprise hydroxyl groups. The group of these nonionic surfactants include, e.g., the $C_{4-22}$ fatty alcohol (EO)10-50-2-hydroxy alkyl ethers, in particular also the $C_{8-12}$ fatty alcohol (EO)22-2-hydroxy decyl ethers and the $C_{4-22}$ fatty alcohol (EO)40-80-2-hydroxy alkyl ethers.

## Builders and Co-Builders

The cleaning composition may contain about 0 to about 65 wt.%, such as about 5 to about 50 wt.% of a detergent builder or co-builder, or a mixture thereof. In a dish wash detergent, the level of builder is typically in the range of about 40 to about 65 wt.%, particularly in the range of 50 to 65 wt.%.

Generally and if not indicated otherwise, the builder may be preferably selected from citrate, carbonate, silicate, alumino silicate (zeolite) and combinations thereof. Suitable builders also include phosphonates, polyphosphonates, bicarbonates, borates, and further polycarboxylates. Citrate builders, e.g., citric acid and soluble salts thereof (particularly sodium salt), are particularly suitable water-soluble organic builders. Citrates can be used in combination with zeolite, silicates like the BRITESIL types, and/or layered silicate builders. The builder and/or co-builder may be any chelating agent that forms water-soluble complexes with $Ca^{2+}$ and $Mg^{2+}$. Any builder and/or co-builder known in the art for use in cleaning detergents may be utilized. Non-limiting examples of builders include zeolites, in particular zeolite A or P or X, carbonates such as sodium carbonate, soluble silicates such as sodium metasilicate, layered silicates (e.g., SKS-6 from Clariant), ethanol amines such as 2-amino ethan-1-ol (MEA), diethanol amine (DEA, also known as 2,2'-imino diethan-1-ol), triethanol amine (TEA, also known as 2,2',2"-nitrilo triethan-1-ol), and (carboxy methyl)-inulin (CMI), and combinations thereof. Further non-limiting examples of builders include amino carboxylates, amino polycarboxylates and phosphonates, and alkyl- or alkenyl succinic acid. Additional specific examples include 2,2',2"-nitrilo triacetic acid (NTA), ethylene diamine tetraacetic acid (EDTA), diethylene triamine pentaacetic acid (DTPA), imino disuccinic acid

(IDS), ethylene diamine-N,N'-disuccinic acid (EDDS), methyl glycine diacetic acid (MGDA), glutamic acid-N,N-diacetic acid (GLDA), 1-hydroxy ethane-1,1-diylbis (phosphonic acid (HEDP), ethylene diamine tetramethylene tetrakis (phosphonic acid) (EDTMPA), diethylene triamine pentamethylene pentakis (phosphonic acid) (DTMPA or DTPMPA or DTPMP), N-(2-hydroxy ethyl) imino diacetic acid (EDG), aspartic acid-N-monoacetic acid (ASMA), aspartic acid-N,N-diacetic acid (ASDA), aspartic acid-N-monopropionic acid (ASMP), imino disuccinic acid (IDA), N-(2-sulfomethyl) aspartic acid (SMAS), N-(2-sulfoethyl) aspartic acid (SEAS), N-(2-sulfomethyl) glutamic acid (SMGL), N-(2-sulfoethyl) glutamic acid (SEGL), N-methyl imino diacetic acid (MIDA), $\alpha$-alanine-N,N-diacetic acid (a-ALDA), serine-N,N-diacetic acid (SEDA), isoserine-N,N-diacetic acid (ISDA), phenylalanine-N,N-diacetic acid (PHDA), anthranilic acid-N,N-diacetic acid (ANDA), sulfanilic acid-N,N-diacetic acid (SLDA), taurine-N,N-diacetic acid (TUDA) and sulfo methyl-N,N-diacetic acid (SMDA), N-(2-hydroxy ethyl) ethylene diamine-N,N',N"-triacetic acid (HEDTA), diethanol glycine (DEG), diethylene triamine penta-(methylene phosphonic acid) (DTPMP), amino trimethylene tris-(phosphonic acid) (ATMP or NTMP), 2-phosphono butane-1,2,4-tricarboxylic acid (PBTC), hexamethylene diamine tetrakis (methylene phosphonic acid) (HDTMP), and combinations and salts thereof. Further exemplary builders and/or co-builders are described in, e.g., WO2009/102854, US5977053. Particularly preferred are HEDP and DTPMP.

Suitable silicates are crystalline, layered sodium silicates of the general formula $NaMSi_xO_{2+1}*yH_2O$, wherein M is sodium or H, x a number of from 1.9 to 4 and y a number of from 0 to 20 and x is preferably 2, 3 or 4. Such silicates are, e.g., disclosed in EP0164514. Preferred are silicates in which M is sodium and is 2 or 3. Particularly preferred are $\beta$- and $\delta$-sodium disilicate $Na_2Si_2O_5*yH_2O$.

Although not preferred, the compositions may also comprise phosphates, diphosphates (pyrophosphates) and/or triphosphates such as sodium triphosphate (STP or STPP). It is however preferred that all compositions disclosed herein are phosphate-free, i.e., do not contain deliberately added phosphate, in particular the phosphate content is below 1 wt.%, more preferably less than 0.5 wt.%, even more preferably less than 0.1 wt.%, relative to the total weight of the composition. In alternative embodiments, the invention also relates to phosphate-free cleaning compositions in general that contain the polypeptides of the invention. In one embodiment, the invention thus features a phosphate-free cleaning composition comprising any one or more of the polypeptides having hexosaminidase activity disclosed herein.

The cleaning composition may also contain from about 0 to about 50 wt.%, such as about 5 to about 30 wt.%, of a detergent co-builder. The composition may include a co-builder alone, or in combination with a builder, e.g., a zeolite builder. Non-limiting examples of co-builders include homopolymers of polyacrylates or copolymers thereof, such as poly(acrylic acid) (PAA) or copoly(acrylic acid/maleic acid) (PAA/PMA) or polyaspartic acid. Further exemplary builders and/or co-builders are described in, e.g., WO2009/102854, US5977053.

Preferred as co-builders are acrylate-containing water-soluble polymers, such as alkali metal salts of polyacrylic acid or polymethacrylic acid, e.g., those having a molecular weight $M_w$ in the range of 600 to 750000 g/mol, as determined by gel permeation chromatography (GPC) according to DIN 55672-1:2007-08 with THF as an eluent.

Preferred polymers are polyacrylates with a molecular weight $M_w$ of 1000 to 15000 g/mol, more preferred, due to their solubility, are short-chain polyacrylates with a molecular weight $M_w$ of 1000 to 10000 g/mol, most preferred from 1000 to 5000 g/mol.

Preferred acrylates for use in the present invention are alkali metal salts of polymers of acrylic acid, preferably the sodium salts, in particular those with molecular weights $M_w$ in the range of 1000 to 10000 g/mol or 1000 to 5000 g/mol. Suitable acrylates are commercially available, e.g., under the tradename Acusol® from Dow Chemical. Suitable are also copolymers of acrylates, in particular those of acrylic acid and methacrylic acid, and acrylic acid or methacrylic acid and maleic acid.

In preferred embodiments, the compositions of the invention comprise a sulfopolymer, preferably a copolymer comprising an ethylenically unsaturated sulfonate/sulfonic acid as a co-monomer. Particularly suitable are monomers of allyl sulfonic acids, such as allyl oxybenzene sulfonic acid and methallyl sulfonic acid. Particularly preferred sulfonic acid group-containing monomers are 1-acryl amido propane sulfonic acid-1,2-acryl amido-2-propane sulfonic acid, 2-acryl amido-2-methyl-1-propane sulfonic acid, 2-methacryl amido-2-methyl-1-propane sulfonic acid, 3-methacryl amido-2-hydroxy propane sulfonic acid, allyl sulfonic acid, methallyl sulfonic acid, allyl oxybenzene sulfonic acid, methallyl oxybenzol sulfonsic acid, 2-hydroxy-3-(2-propenyl oxy) propane sulfonic acid, 2-methyl-2-propenyl sulfonic acid, styrene sulfonic acid, vinyl sulfonic acid, 3-sulfopropyl, sulfomethacrylamide, sulfomethyl methacrylamide and mixtures of said acids or their water-soluble salts.

The sulfopolymers are preferably copolymers of the afore-described monomers with unsaturated carboxylic acids, Especially preferred unsaturated carboxylic acids are acrylic acid, methacrylic acid, ethacrylic acid, chloroacrylic acid, alpha-cyanoacrylic acid, crotonic acid, alpha-phenyl-acrylic acid, maleic acid, maleic anhydride, fumaric acid, itaconic acid, citraconic acid, methylene malonic acid, sorbic acid, cinnamic acid or mixtures thereof. Usable are of course also the unsaturated dicarboxylic acids. Preferred are copolymers with acrylates, in particular with acrylic acid and methacrylic acid, and acrylic acid or methacrylic acid and maleic acid.

Such polymers are, e.g., commercially available under the trade names Acusol® 590 or Acusol® 588 from Dow Chemical.

In one embodiment of the invention, the cleaning compositions of the invention comprise a polypeptide as defined herein and at least one sulfopolymer, as defined above. Such compositions are preferably dishwashing compositions.

In one preferred embodiment, the builder is a non-phosphorus based builder such as citric acid and/or methyl glycine-N,N-diacetic acid (MGDA) and/or glutamic-N,N-diacetic acid (GLDA) and/or salts thereof.

**Hydrotropes**

A hydrotrope is a compound that solubilises hydrophobic compounds in aqueous solutions (or oppositely, polar substances in a non-polar environment). Typically, hydrotropes have both hydrophilic and a hydrophobic character (so-called amphiphilic properties as known from surfactants); however the molecular structure of hydrotropes generally do not favor spontaneous self-aggregation, see e.g., review by Hodgdon and Kaler (2007), Current Opinion in Colloid & Interface Science 12: 121-128. Hydrotropes do not display a critical concentration above which self-aggregation occurs as found for surfactants and lipids forming miceller, lamellar or other well defined meso-phases. Instead, many hydrotropes show a continuous-type aggregation process where the sizes of aggregates grow as concentration increases. However, many hydrotropes alter the phase behavior, stability, and colloidal properties of systems containing substances of polar and non-polar character, including mixtures of water, oil, surfactants, and polymers. Hydrotropes are classically used across industries from pharma, personal care, food, to technical applications. Use of hydrotropes in cleaning compositions allows, e.g., more concentrated formulations of surfactants (as in the process of compacting liquid cleaning compositions by removing water) without inducing undesired phenomena such as phase separation or high viscosity.

The cleaning composition may contain 0 to 10 wt.%, e.g., 0 to 5 wt.%, such as about 0.5 to about 5 wt.%, or about 3 to about 5 wt.%, of a hydrotrope. Any hydrotrope known in the art for use in cleaning may be utilized. Non-limiting examples of hydrotropes include sodium benzene sulfonate, sodium p-toluene sulfonate (STS), sodium xylene sulfonate (SXS), sodium cumene sulfonate (SCS), sodium cymene sulfonate, amine oxides, alcohols and polyglycol ethers, sodium hydroxy naphthoate, sodium hydroxy naphthalene sulfonate, sodium ethyl hexyl sulfate, and combinations thereof.

**Bleaching Systems**

The cleaning composition may contain 0 to 50 wt.%, such as about 1 to about 40 wt.%, such as about 1 to about 30 wt.%, such as about 1 to about 20 wt.%, such as about 0.01 to about 10 wt.% of a bleaching system. Any bleaching system comprising components known in the art for use in cleaning detergents may be utilized. Suitable bleaching system components include sources of hydrogen peroxide; peracids and/or sources of peracids (bleach activators); and bleach catalysts or boosters.

Sources of hydrogen peroxide

Suitable sources of hydrogen peroxide are inorganic persalts, including alkali metal salts such as sodium percarbonate and sodium perborates (usually mono- or tetrahydrate), and hydrogen peroxide urea (1/1).

Sources of peracids

Peracids may be (a) incorporated directly as preformed peracids or (b) formed *in situ* in the wash liquor from hydrogen peroxide and a bleach activator (perhydrolysis) or (c) formed *in situ* in the wash liquor from hydrogen peroxide and a perhydrolase and a suitable substrate for the latter, e.g., an ester.

a) Suitable preformed peracids include, but are not limited to, peroxy carboxylic acids such as peroxy benzoic acid and its ring-substituted derivatives, peroxy-$\alpha$-naphthoic acid, peroxy phthalic acid, peroxy lauric acid, peroxy stearic acid, $\varepsilon$-phthalimido peroxy caproic acid [phthalimido peroxy hexanoic acid (PAP)], and o-carboxy benzamido peroxy caproic acid, aliphatic and aromatic diperoxy dicarboxylic acids such as diperoxy dodecane dioic acid, diperoxy azelaic acid, diperoxy sebacic acid, diperoxy brassylic acid, 2-decyl diperoxy butane dioic acid, and diperoxy phthalic, -isophthalic and -terephthalic acids, perimidic acids, peroxy monosulfuric acid, peroxy disulfuric acid, peroxy phosphoric acid, peroxy silicic acid, and mixtures thereof. It is understood that the peracids mentioned may in some cases be best added as suitable salts, such as alkali metal salts (e.g., Oxone®) or alkaline earth-metal salts.

b) Suitable bleach activators include those belonging to the class of esters, amides, imides, nitriles or anhydrides and, where applicable, salts thereof. Suitable examples are tetraacetyl ethylene diamine (TAED), sodium 4-[(3,5,5-trimethyl hexanoyl)-oxy] benzene-1-sulfonate (ISONOBS), sodium 4-(dodecanoyloxy) benzene-1-sulfonate (LOBS), sodium 4-(decanoyloxy) benzene-1-sulfonate, 4-(decanoyloxy) benzoic acid (DOBA), sodium 4-(nonanoyloxy) benzene-1-sulfonate (NOBS), and/or those disclosed in WO98/17767. A particular family of bleach activators of interest was disclosed in EP0624154 and particularly preferred in that family is acetyl triethyl citrate (ATC). ATC or a short chain triglyceride like triacetin has the advantage that they are environmentally friendly. Furthermore, acetyl triethyl citrate and triacetin have good hydrolytical stability in the product upon storage and are efficient bleach activators. Finally, ATC is multifunctional, as the citrate released in the perhydrolysis reaction may function as a builder.

Bleach catalysts and boosters

The bleaching system may also include a bleach catalyst or booster.

Some non-limiting examples of bleach catalysts, particularly useful in automatic dishwashing (ADW) compositions, that may be used in the compositions of the present invention include manganese oxalate, manganese acetate, manganese-collagen, cobalt-amine catalysts and manganese triazacyclononane (MnTACN) catalysts; particularly preferred are complexes of manganese with 1,4,7-trimethyl-1,4,7-triazacyclononane ($Me_3$-TACN) or 1,2,4,7-tetramethyl-1,4,7-triazacyclononane ($Me_4$-TACN), in particular $Me_3$-TACN, such as the dinuclear manganese complex $[(Me_3\text{-TACN})Mn(0)_3Mn(Me_3\text{-TACN})](PF_6)_2$, and [2,2',2"-nitrilotris-(ethane-1,2-diylazanylylidene-κN-methanylylidene)-triphenolato-κ3O] manganese(III). The bleach catalysts may also be other metal compounds; such as iron or cobalt complexes.

In some embodiments, where a source of a peracid is included, an organic bleach catalyst or bleach booster may be used having one of the following formulae:

(i)

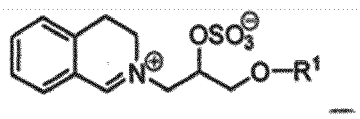

(ii)

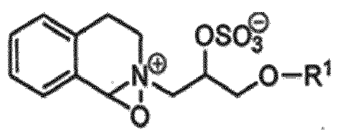

(iii) and mixtures thereof; wherein $R^1$ is independently a branched alkyl group containing from 9 to 24 carbons or linear alkyl group containing from 11 to 24 carbons, preferably $R^1$ is independently a branched alkyl group containing from 9 to 18 carbons or linear alkyl group containing from 11 to 18 carbons, more preferably $R^1$ is independently selected from the group consisting of 2-propylheptyl, 2-butyloctyl, 2-pentylnonyl, 2-hexyldecyl, dodecyl, tetradecyl, hexadecyl, octadecyl, isononyl, isodecyl, isotridecyl and isopentadecyl.

Other exemplary bleaching systems are described in, e.g., WO2007/087258, WO2007/087244, WO2007/087259, EP1867708 (Vitamin K) and WO2007/087242. For laundry particularly suitable photobleaches may, e.g., be sulfonated zinc or aluminium phthalocyanines.

**Metal care agents**

Metal care agents may prevent or reduce the tarnishing, corrosion or oxidation of metals, including aluminium, stainless steel and non-ferrous metals, such as silver and copper. Suitable examples include one or more of the following:

(a) benzatriazoles, including benzotriazole or bis-benzotriazole and substituted derivatives thereof. Benzotriazole derivatives are those compounds in which the available substitution sites on the aromatic ring are partially or completely substituted. Suitable substituents include linear or branch-chain $C_{1-20}$ alkyl groups and hydroxyl, thio, phenyl or halogen such as fluorine, chlorine, bromine and iodine;

(b) metal salts and complexes chosen from the group consisting of zinc, manganese, titanium, zirconium, hafnium, vanadium, cobalt, gallium and cerium salts and/or complexes, the metals being in one of the oxidation states II, III, IV, V or VI. In one embodiment, suitable metal salts and/or metal complexes may be chosen from the group consisting of Mn(II) sulphate, Mn(II) citrate, Mn(II) stearate, Mn(II) acetyl acetonate, K^$TiF_6$ (e.g., $K_2TiF_6$), K^$ZrF_6$ (e.g., $K_2ZrF_6$),

$CoSO_4$, $Co(NO_s)_2$ and $Ce(NO^s)^3$, zinc salts, e.g., zinc sulphate, hydrozincite or zinc acetate;
(c) silicates, including sodium or potassium silicate, sodium disilicate, sodium metasilicate, crystalline phyllosilicate and mixtures thereof.

Further suitable organic and inorganic redox-active substances that act as silver/copper corrosion inhibitors are disclosed in WO94/26860 and WO94/26859. Preferably the composition of the invention comprises from 0.1 to 5 wt.% of the composition of a metal care agent, preferably the metal care agent is a zinc salt.

**Polymers**

The cleaning composition may contain 0.005 to 10 wt.%, such as 0.5 to 5 wt.%, 2 to 5 wt.%, 0.5 to 2 wt.% or 0.2 to 1 wt.% of a polymer. Any polymer known in the art for use in cleaning may be utilized. The polymer may function as a co-builder as mentioned above, or may provide anti-redeposition, fiber protection, soil release, dye transfer inhibition, grease cleaning and/or anti-foaming properties. Some polymers may have more than one of the above-mentioned properties and/or more than one of the below-mentioned motifs. Exemplary polymers include (carboxy methyl) cellulose (CMC), poly(vinyl alcohol) (PVA), poly(vinyl pyrrolidone) (PVP), poly(ethylene glycol) or poly(ethylene oxide) (PEG), ethoxylated poly(ethylene imine), carboxy methyl inulin (CMI), carboxylate polymers and polycarboxylates such as polyacrylates, maleic/acrylic acid copolymers, polyaspartic acid, and lauryl methacrylate/acrylic acid copolymers, hydrophobically modified CMC (HM-CMC) and silicones, copolymers of terephthalic acid and oligomeric glycols, copolymers of poly(ethylene terephthalate) and poly(oxyethene terephthalate) (PET-POET), PVP, poly(vinyl imidazole) (PVI), poly(vinyl pyridine-*N*-oxide) (PVPO or PVPNO) and polyvinyl pyrrolidone vinyl imidazole (PVPVI). Suitable examples include PVP-K15, PVP-K30, ChromaBond S-400, ChromaBond S-403E and Chromabond S-100 from Ashland Aqualon, and Sokalan® HP 165, Sokalan® HP 50 (dispersing agent), Sokalan® HP 53 (dispersing agent), Sokalan® HP 59 (dispersing agent), Sokalan® HP 56 (dye transfer inhibitor), Sokalan® HP 66 K (dye transfer inhibitor) from BASF. Further exemplary polymers include sulfonated polycarboxylates, polyethylene oxide and polypropylene oxide (PEO-PPO) and diquaternium ethoxy sulfate. Other exemplary polymers are disclosed in, e.g., WO2006/130575. Salts of the above-mentioned polymers are also contemplated. A particularly preferred polymer is ethoxylated homopolymer Sokalan® HP 20 from BASF, which helps to prevent redeposition of soil in the wash liquor.

**Fabric hueing agents**

The cleaning compositions of the present invention may also include fabric hueing agents such as dyes or pigments, which when formulated in cleaning compositions can deposit onto a fabric when said fabric is contacted with a wash liquor comprising said cleaning compositions and thus altering the tint of said fabric through absorption/reflection of visible light. Fluorescent whitening agents emit at least some visible light. In contrast, fabric hueing agents alter the tint of a surface as they absorb at least a portion of the visible light spectrum. Suitable fabric hueing agents include dyes and dye-clay conjugates, and may also include pigments. Suitable dyes include small molecule dyes and polymeric dyes. Suitable small molecule dyes include small molecule dyes selected from the group consisting of dyes falling into the Colour Index (C.I.) classifications of Direct Blue, Direct Red, Direct Violet, Acid Blue, Acid Red, Acid Violet, Basic Blue, Basic Violet and Basic Red, or mixtures thereof, e.g., as described in WO2005/003274, WO2005/003275, WO2005/003276 and EP1876226 (hereby incorporated by reference). The cleaning composition preferably comprises from about 0.00003 to about 0.2 wt.%, from about 0.00008 to about 0.05 wt.%, or even from about 0.0001 to about 0.04 wt.% fabric hueing agent. The composition may comprise from 0.0001 to 0.2 wt.% fabric hueing agent, this may be especially preferred when the composition is in the form of a unit dose pouch. Suitable hueing agents are also disclosed in, e.g., WO2007/087257 and WO2007/087243.

**Additional enzymes**

The cleaning additive as well as the cleaning composition may comprise one or more [additional] enzymes such as one or more enzyme selected from proteases, lipases, cutinases, amylases, carbohydrases, cellulases, pectinases, mannanases, arabinases, galactanases, xylanases, oxidases, e.g., a laccase, and/or peroxidase. In general the properties of the selected enzyme(s) should be compatible with the selected cleaning composition, (i.e., pH-optimum, compatibility with other enzymatic and non-enzymatic ingredients, etc.), and the enzyme(s) should be present in effective amounts.

Cellulases

Suitable cellulases include those of bacterial or fungal origin. Chemically modified or protein engineered mutants

are included. Suitable cellulases include cellulases from the genera *Bacillus, Pseudomonas, Humicola, Fusarium, Thielavia, Acremonium, e.g.,* the fungal cellulases produced from *Humicola insolens, Myceliophthora thermophila* and *Fusarium oxysporum* disclosed in US4435307, US5648263, US5691178, US5776757 and WO89/09259. Especially suitable cellulases are the alkaline or neutral cellulases having colour care benefits. Examples of such cellulases are cellulases described in EP0495257, EP0531372, WO96/11262, WO96/29397, WO98/08940. Other examples are cellulase variants such as those described in WO91/17244, WO94/07998, EP0531315, US5457046, US5686593, US5763254, JP2000/210081, WO95/24471, WO98/12307 and WO99/001544. Other cellulases are endo-beta-1,4-glucanase enzyme having a sequence of at least 97% identity to the amino acid sequence of positions 1 to 773 of SEQ ID NO:2 of WO2002/099091 or a GH44 xyloglucanase, which a xyloglucanase enzyme having a sequence of at least 60% identity to positions 40 to 559 of SEQ ID NO:2 of WO2001/062903. Commercially available cellulases include Celluzyme™, and Carezyme™ (Novozymes A/S) Carezyme Premium™ (Novozymes A/S), Celluclean™ (Novozymes A/S), Celluclean Classic™ (Novozymes A/S), Cellusoft™ (Novozymes A/S), Whitezyme™ (Novozymes A/S), Clazinase™, and Puradax HA™ (Genencor International Inc.), and KAC-500(B)™ (Kao Corporation).

Mannanases

Suitable mannanases include those of bacterial or fungal origin. Chemically or genetically modified mutants are included. The mannanase may be an alkaline mannanase of Family 5 or 26. It may be a wild-type from *Bacillus* or *Humicola,* particularly *B. agaradhaerens, B. licheniformis, B. halodurans, B. clausii,* or *H. insolens.* Suitable mannanases are described in WO99/64619. A commercially available mannanase is Mannaway (Novozymes A/S).

Proteases

Suitable proteases may include those of bacterial, fungal, plant, viral or animal origin, e.g., vegetable or microbial origin, optionally in the form of protein engineered or chemically modified mutants. Microbial origin is preferred. The protease may be an alkaline protease, such as a serine protease or a metalloprotease. A serine protease may, e.g., be of the S1 family, such as trypsin, or the S8 family such as a subtilisin. A metalloprotease may, e.g., be a thermolysin, e.g., from the M4 family, or another metalloprotease such as those from the M5, M7 or M8 families.

The term "subtilases" refers to a sub-group of serine proteases according to Siezen et al., Protein Eng. 4 (1991) 719-737 and Siezen et al., Protein Sci. 6 (1997) 501-523. Serine proteases are a subgroup of proteases characterized by having a serine in the active site, which forms a covalent adduct with the substrate. The subtilases may be divided into six subdivisions, i.e., the Subtilisin family, the Thermitase family, the Proteinase K family, the Lantibiotic peptidase family, the Kexin family and the Pyrolysin family.

Although proteases suitable for detergent use may be obtained from a variety of organisms, including fungi such as *Aspergillus,* detergent proteases have generally been obtained from bacteria and in particular from *Bacillus.* Examples of *Bacillus* species from which subtilases have been derived include *Bacillus lentus, Bacillus alkalophilus, Bacillus subtilis, Bacillus amyloliquefaciens, Bacillus licheniformis, Bacillus pumilus* and *Bacillus gibsonii,* described in US7062042 and WO2009/021867. Particular subtilisins include *subtilisin lentus, subtilisin* Novo, *subtilisin* Carlsberg, *subtilisin* BPN', *subtilisin* 309, *subtilisin* 147 and *subtilisin* 168 and, e.g., protease PD138 (described in WO93/18140). Other useful proteases are those described in, e.g., WO2001/16285 and WO2002/16547.

Examples of trypsin-like proteases include trypsin (e.g., of procine or bovine origin) and the *Fusarium* protease described in WO94/25583 and WO2005/040372, and the chymotrypsin proteases derived from *Cellumonas* described in WO2005/052161 and WO2005/052146.

Examples of metalloproteases include the neutral metalloproteases described in WO2007/044993 such as those derived from *Bacillus amyloliquefaciens,* as well as the metalloproteases described in WO2015/158723 and WO2016/075078.

Examples of useful proteases are the variants described in WO89/06279, WO92/19729, WO96/34946, WO98/20115, WO98/20116, WO99/11768, WO2001/044452, WO2003/006602, WO2004/003186, WO2004/041979, WO2007/006305, WO2011/036263, WO2011/036264, WO2014/207227, WO2016/087617 and WO2016/174234. Especially the variants with substitutions in one or more of the following positions are preferred: 3, 4, 9, 15, 24, 27, 42, 55, 59, 60, 66, 74, 85, 96, 97, 98, 99, 100, 101, 102, 104, 116, 118, 121, 126, 127, 128, 154, 156, 157, 158, 161, 164, 176, 179, 182, 185, 188, 189, 193, 198, 199, 200, 203, 206, 211, 212, 216, 218, 226, 229, 230, 239, 246, 255, 256, 268 and 269 wherein the positions correspond to the positions of the *Bacillus lentus* protease shown in SEQ ID NO:1 of WO2016/001449. More preferred protease variants may, e.g., comprise one or more of the mutations selected from the group consisting of: S3T, V4I, S9R, S9E, A15T, S24G, S24R, K27R, N42R, S55P, G59E, G59D, N60D, N60E, V66A, N74D, S85R, A96S, S97G, S97D, S97A, S97SD, S99E, S99D, S99G, S99M, S99N, S99R, S99H, S101A, V102I, V102Y, V102N, S104A, G116V, G116R, H118D, H118N, A120S, S126L, P127Q, S128A, S154D, A156E, G157D, G157P, S158E, Y161A, R164S, Q176E, N179E, S182E, Q185N, A188P, G189E, V193M, N198D, V199I, Q200L, Y203W, S206G,

L211Q, L211D, N212D, N212S, M216S, A226V, K229L, Q230H, Q239R, N246K, S253D, N255W, N255D, N255E, L256E, L256D T268A and R269H, wherein position numbers correspond to positions of the *Bacillus lentus* protease shown in SEQ ID NO:1 of WO2016/001449. Protease variants having one or more of these mutations are preferably variants of the *Bacillus lentus* protease (Savinase®, also known as subtilisin 309) shown in SEQ ID NO:1 of WO2016/001449 or of the *Bacillus amyloliquefaciens* protease (BPN') shown in SEQ ID NO:2 of WO2016/001449. Such protease variants preferably have at least 80% sequence identity to SEQ ID NO:1 or to SEQ ID NO:2 of WO2016/001449. A further preferred protease is the alkaline protease from *Bacillus lentus* DSM 5483, as described in, e.g., WO91/02792, and variants thereof which are described in, e.g., WO92/21760, WO95/23221, EP1921147, EP1921148 and WO2016/096711.

The protease may alternatively be a variant of the TY145 protease having SEQ ID NO:1 of WO2004/067737, e.g., a variant comprising a substitution at one or more positions corresponding to positions 27, 109, 111, 171, 173, 174, 175, 180, 182, 184, 198, 199 and 297 of SEQ ID NO:1 of WO2004/067737, wherein said protease variant has a sequence identity of at least 75% but less than 100% to SEQ ID NO:1 of WO2004/067737. TY145 variants of interest are described in, e.g., WO2015/014790, WO2015/014803, WO2015/014804, WO2016/097350, WO2016/097352, WO2016/097357 and WO2016/097354.

Suitable commercially available protease enzymes include those sold under the trade names Alcalase®, Duralase™, Durazym™, Relase®, Relase® Ultra, Savinase®, Savinase® Ultra, Primase™, Polarzyme®, Kannase®, Liquanase®, Liquanase® Ultra, Ovozyme®, Coronase®, Coronase® Ultra, Blaze®, Blaze Evity® 100T, Blaze Evity® 125T, Blaze Evity® 150T, Blaze Evity® 200T, Neutrase®, Everlase®, Esperase®, Progress® Uno, Progress® In and Progress® Excel (Novozymes A/S), Maxatase™, Maxacal™, Maxapem®, Purafect® Ox, Purafect® OxP, Puramax®, FN2™, FN3™, FN4$^{ex}$™, Excellase®, Excellenz™ P1000, Excellenz™ P1250, Eraser™, Preferenz® P100, Purafect Prime, Preferenz P110™, Effectenz P1000™, Purafect®, Effectenz P1050™, Purafect® Ox, Effectenz™ P2000, Purafast™, Properase®, Opticlean™ and Optimase® (Danisco/DuPont), Axapem™ (Gist-Brocases N.V.), BLAP (sequence shown in Figure 29 of US5352604) and variants thereof (Henkel AG), and KAP (*Bacillus alkalophilus* subtilisin) from Kao.

## Lipases and Cutinases

Suitable lipases and cutinases include those of bacterial or fungal origin. Chemically modified or protein engineered mutant enzymes are included. Examples include lipase from *Thermomyces,* e.g., from *T. lanuginosus* (previously named *Humicola lanuginosa*) as described in EP0258068 and EP0305216, cutinase from *Humicola,* e.g., *H. insolens* (WO96/13580), lipase from strains of *Pseudomonas* (some of these now renamed to *Burkholderia*), e.g., *P. alcaligenes* or *P. pseudoalcaligenes* (EP0218272), P. *cepacia* (EP0331376), *P. sp.* strain SD705 (WO95/06720 & WO96/27002), P. *wisconsinensis* (WO96/12012), GDSL-type *Streptomyces* lipases (WO2010/065455), cutinase from *Magnaporthe grisea* (WO2010/107560), cutinase from *Pseudomonas mendocina* (US5389536), lipase from *Thermobifida fusca* (WO2011/084412), *Geobacillus stearothermophilus* lipase (WO2011/084417), lipase from *Bacillus subtilis* (WO2011/084599), and lipase from *Streptomyces griseus* (WO2011/150157) and S. *pristinaespiralis* (WO2012/137147). Other examples are lipase variants such as those described in EP0407225, WO92/05249, WO94/01541, WO94/25578, WO95/14783, WO95/30744, WO95/35381, WO95/22615, WO96/00292, WO97/04079, WO97/07202, WO00/34450, WO00/60063, WO2001/092502, WO2007/087508 and WO2009/109500.

Preferred commercial lipase products include include Lipolase™, Lipex™, Lipolex™ and Lipoclean™ (Novozymes A/S), Lumafast (Genencor) and Lipomax (Gist-Brocades). Still other examples are lipases sometimes referred to as acyltransferases or perhydrolases, e.g., acyltransferases with homology to *Candida antarctica* lipase A (WO2010/111143), acyltransferase from *Mycobacterium smegmatis* (WO2005/056782), perhydrolases from the CE 7 family (WO2009/067279), and variants of the *M. smegmatis* perhydrolase, in particular the S54V variant used in the commercial product Gentle Power Bleach from Huntsman Textile Effects Pte Ltd (WO2010/100028).

## Amylases

Suitable amylases may include alpha-amylases and/or glucoamylases and may be of bacterial or fungal origin. Chemically modified or protein engineered mutants are included. Amylases include, e.g., alpha-amylases obtained from *Bacillus,* e.g., a special strain of *Bacillus licheniformis,* described in more detail in GB1296839.

Suitable amylases include amylases having SEQ ID NO:2 in WO95/10603 or variants having 90% sequence identity to SEQ ID NO:3 thereof. Preferred variants are described in WO94/02597, WO94/18314, WO97/43424 and SEQ ID NO:4 of WO99/019467, such as variants with substitutions in one or more of the following positions: 15, 23, 105, 106, 124, 128, 133, 154, 156, 178, 179, 181, 188, 190, 197, 201, 202, 207, 208, 209, 211, 243, 264, 304, 305, 391, 408, and 444. Different suitable amylases include amylases having SEQ ID NO:6 in WO2002/010355 or variants thereof having 90% sequence identity to SEQ ID NO:6. Preferred variants of SEQ ID NO:6 are those having a deletion in positions 181 and 182 and a substitution in position 193.

Other amylases which are suitable are hybrid alpha-amylase comprising residues 1 to 33 of the alpha-amylase derived from *B. amyloliquefaciens* shown in SEQ ID NO:6 of WO2006/066594 and residues 36 to 483 of the *B. licheniformis* alpha-amylase shown in SEQ ID NO:4 of WO2006/066594 or variants having 90% sequence identity thereof. Preferred variants of this hybrid alpha-amylase are those having a substitution, a deletion or an insertion in one of more of the following positions: 48, 49, 107, 156, 181, 190, 197, 201, 209 and 264. Most preferred variants of the hybrid alpha-amylase comprising residues 1 to 33 of the alpha-amylase derived from *B. amyloliquefaciens* shown in SEQ ID NO:6 of WO2006/066594 and residues 36 to 483 of SEQ ID NO:4 are those having the substitutions: M197T; H156Y + A181T + N190F + A209V + Q264S; or G48A + T491 + G107A + H156Y + A181T + N190F + 1201F + A209V + Q264S.

Further amylases which are suitable are amylases having SEQ ID NO:6 in WO99/19467 or variants thereof having 90% sequence identity to SEQ ID NO:6. Preferred variants of SEQ ID NO:6 are those having a substitution, a deletion or an insertion in one or more of the following positions: 181, 182, 183, 184, 195, 206, 212, 216 and 269. Particularly preferred amylases are those having deletion in positions 181 + 182, 182 + 183 or 183 + 184. Additional amylases which can be used are those having SEQ ID NO's 1, 2, 3 or 7 of WO96/23873 or variants thereof having 90% sequence identity to SEQ ID NO's 1, 2, 3 or 7. Preferred variants of SEQ ID NO's 1, 2, 3 or 7 are those having a substitution, a deletion or an insertion in one or more of the following positions: 140, 181, 182, 183, 184, 195, 206, 212, 243, 260, 269, 304 and 476, using SEQ ID NO:2 of WO96/23873 for numbering. More preferred variants are those having a deletion in two positions selected from 181, 182, 183 and 184, such as 181 and 182, 182 and 183, or positions 183 and 184. Most preferred amylase variants of SEQ ID NO's 1, 2 or 7 are those having a deletion in positions 183 and 184 and a substitution in one or more of positions 140, 195, 206, 243, 260, 304 and 476.

Other amylases which can be used are amylases having SEQ ID NO:2 of WO2008/153815, SEQ ID NO:10 of WO2001/066712 or variants thereof having 90% sequence identity to SEQ ID NO:2 of WO2008/153815 or 90% sequence identity to SEQ ID NO:10 of WO2001 /066712. Preferred variants of SEQ ID NO:10 of WO2001/066712 are those having a substitution, a deletion or an insertion in one of more of the following positions: 176, 177, 178, 179, 190, 201, 207, 211 and 264.

Further suitable amylases are amylases having SEQ ID NO:2 of WO2009/061380 or variants having 90% sequence identity to SEQ ID NO:2 thereof. Preferred variants of SEQ ID NO:2 are those having a truncation of the C-terminus and/or a substitution, a deletion or an insertion in one of more of the following positions: 87, 98, 125, 128, 131, 165, 178, 180, 181, 182, 183, 201, 202, 225, 243, 272, 282, 305, 309, 319, 320, 359, 444 and 475. More preferred variants of SEQ ID NO:2 are those having the substitution in one of more of the following positions: Q87E/R, Q98R, S125A, N128C, T131I, T165I, K178L, T182G, M201L, F202Y, N225E/R, N272E/R, S243Q/A/E/D, Y305R, R309A, Q320R, Q359E, K444E and G475K and/or deletion in position 180 and/or 181 and/or in position 182 and/or 183. Most preferred amylase variants of SEQ ID NO:2 are those having the substitutions: N128C + K178L + T182G + Y305R + G475K; N128C + K178L + T182G + F202Y + Y305R + D319T + G475K; S125A + N128C + K178L + T182G + Y305R + G475K; or S125A + N128C + T131I + T165I + K178L + T182G + Y305R + G475K; wherein the variants are C-terminally truncated and optionally further comprises a substitution at position 243 and/or a deletion at position 180 and/or 181.

Further suitable amylases are amylases having SEQ ID NO:1 of WO2013/184577 or variants having 90% sequence identity to SEQ ID NO:1 thereof. Preferred variants of SEQ ID NO:1 are those having a substitution, a deletion or an insertion in one of more of the following positions: 176, 178, 179, 180, 181, 187, 192, 199, 203, 241, 458, 459, 460, 476 and 477. More preferred variants of SEQ ID NO:1 are those having the substitution in one of more of the following positions: K176L, E187P, N192F/Y/H, M199L, I203Y/F, S241Q/A/D/N, R458N, T459S, D460T, G476K and G477K and/or deletion in position 178 and/or 179 and/or in position 180 and/or 181. Most preferred amylase variants of SEQ ID NO:1 are those having the substitutions: E187P + I203Y + G476K; or E187P + I203Y + R458N + T459S + D460T + G476K; wherein the variants optionally further comprises a substitution at position 241 and/or a deletion at position 178 and/or 179.

Further suitable amylases are amylases having SEQ ID NO:1 of WO2010/104675 or variants having 90% sequence identity to SEQ ID NO:1 thereof. Preferred variants of SEQ ID NO:1 are those having a substitution, a deletion or an insertion in one of more of the following positions: 21, 97, 128 177, 179, 180, 181, 182, 200, 204, 242, 477 and 478. More preferred variants of SEQ ID NO:1 are those having the substitution in one of more of the following positions: N21D, D97N, V128I, K177L, M200L, L204Y/F, E242Q/A, G477K and G478K and/or deletion in position R179 and/or S180 and/or in position 181 and/or 182. Most preferred amylase variants of SEQ ID NO:1 are those having the substitutions: N21D + D97N + V128I, wherein the variants optionally further comprises a substitution at position 200 and/or a deletion at position 180 and/or 181.

Other suitable amylases are the alpha-amylase having SEQ ID NO:12 in WO2001/066712 or a variant having at least 90% sequence identity to SEQ ID NO:12. Preferred amylase variants are those having a substitution, a deletion or an insertion in one of more of the following positions of SEQ ID NO:12 in WO2001/066712: 28, 118, 174, 181, 182, 183, 184, 186, 189, 195, 202, 298, 299, 302, 303, 306, 310, 314, 320, 324, 345, 396, 400, 439, 444, 445, 446, 449, 458, 471, 484. Particular preferred amylases include variants having a deletion of 183 and 184 and having the substitutions R118K, N195F, R320K and R458K, and a variant additionally having substitutions in one or more position selected from

the group: 9, 149, 182, 186, 202, 257, 295, 299, 323, 345 and 339, most preferred a variant that additionally has substitutions in all these positions.

Other examples are amylase variants such as those described in WO2011/098531, WO2013/001078 and WO2013/001087.

Commercially available amylases are Duramyl™, Termamyl™, Fungamyl™, Stainzyme™, Stainzyme Plus™, Amplify™ 12L, Amplify Prime™ 100L, Natalase™, Liquozyme X and BAN™ (Novozymes A/S), and Rapidase™, Purastar™/Effectenz™, Powerase, Preferenz S1000, Preferenz S100, Preferenz S210 and Preferenz S110 (Genencor/DuPont).

Peroxidases/Oxidases

Typically, a peroxidase as defined herein is a peroxidase enzyme comprised by the enzyme classification EC 1.11.1.7, as set out by the Nomenclature Committee of the International Union of Biochemistry and Molecular Biology (IUBMB), or any fragment derived therefrom, exhibiting peroxidase activity.

Suitable peroxidases include those of plant, bacterial or fungal origin. Chemically modified or protein engineered mutants are included. Examples of useful peroxidases include peroxidases from *Coprinopsis, e.g.,* from *C. cinerea* (EP0179486), and variants thereof as those described in WO93/24618, WO95/10602, and WO98/15257. Commercially available peroxidases include Guardzyme™ (Novozymes A/S).

A suitable peroxidase also include a haloperoxidase enzyme, such as chloroperoxidase, bromoperoxidase and compounds exhibiting chloroperoxidase or bromoperoxidase activity. Haloperoxidases are classified according to their specificity for halide ions. Chloroperoxidases (E.C. 1.11.1.10) catalyze formation of hypochlorite from chloride ions. The haloperoxidase is preferably a chloroperoxidase. Preferably, the haloperoxidase is a vanadium haloperoxidase, i.e., a vanadate-containing haloperoxidase. In a preferred method the vanadate-containing haloperoxidase is combined with a source of chloride ion. Haloperoxidases have been isolated from many different fungi, in particular from the fungus group dematiaceous hyphomycetes, such as *Caldariomyces,* e.g., *C. fumago, Alternaria, Curvularia,* e.g., *C. verruculosa* and *C. inaequalis, Drechslera, Ulocladium* and *Botrytis*. Haloperoxidases have also been isolated from bacteria such as *Pseudomonas,* e.g., *P. pyrrocinia* and *Streptomyces,* e.g., *S. aureofaciens.* The haloperoxidase is preferably derivable from *Curvularia* sp., in particular *Curvularia verruculosa* or *Curvularia inaequalis,* such as *C. inaequalis* CBS 102.42 (WO95/27046), C. *verruculosa* CBS 147.63, *C. verruculosa* CBS 444.70 (WO97/04102), *Drechslera hartlebii* (WO2001/079459), *Dendryphiella salina* (WO2001/079458), *Phaeotrichoconis crotalarie* (WO2001/079461), or *Geniculosporium* sp. (WO2001/079460).

A suitable oxidase may include, in particular, any laccase enzyme comprised by the enzyme classification EC 1.10.3.2, or any fragment derived therefrom exhibiting laccase activity, or a compound exhibiting a similar activity, such as a catechol oxidase (EC 1.10.3.1), an o-aminophenol oxidase (EC 1.10.3.4), or a bilirubin oxidase (EC 1.3.3.5). Preferred laccase enzymes are enzymes of microbial origin. The enzymes may be derived from plants, bacteria or fungi (including filamentous fungi and yeasts). Suitable examples from fungi include a laccase derivable from a strain of *Aspergillus, Neurospora,* e.g., *N. crassa, Podospora, Botrytis, Collybia, Fomes, Lentinus, Pleurotus, Trametes,* e.g., *T. villosa* and *T. versicolor, Rhizoctonia,* e.g., *R. solani, Coprinopsis,* e.g., *C. cinerea, C. comatus, C. friesii,* and *C. plicatilis, Psathyrella,* e.g., *P. condelleana, Panaeolus,* e.g., *P. papilionaceus, Myceliophthora,* e.g., *M. thermophila, Schytalidium,* e.g., *S. thermophilum, Polyporus,* e.g., *P. pinsitus, Phlebia,* e.g., *P. radiata* (WO92/01046), or *Coriolus,* e.g., *C. hirsutus* (JP2238885). Suitable examples from bacteria include a laccase derivable from a strain of *Bacillus.* A laccase derived from *Coprinopsis* or *Myceliophthora* is preferred, in particular a laccase derived from *Coprinopsis cinereal* (WO97/08325), or *Myceliophthora thermophila* (WO95/33836).

The cleaning enzyme(s) may be included in a cleaning composition by adding separate additives containing one or more enzymes, or by adding a combined additive comprising all of these enzymes. A cleaning additive of the invention, i.e., a separate additive or a combined additive, can be formulated, e.g., as a granulate, liquid, slurry, etc. Preferred cleaning additive formulations are granulates, in particular non-dusting granulates, liquids, in particular stabilized liquids, or slurries.

**Microorgansims**

The cleaning additive as well as the cleaning composition may also comprise one or more microorganisms, such as one or more fungi, yeast, or bacteria. In an embodiment, the one or more microorganisms are dehydrated (e.g., by lyophilization) bacteria or yeast, such as a strain of *Lactobacillus.* In another embodiment, the microrganisms are one or more microbial spores (as opposed to vegetative cells), such as bacterial spores, or fungal spores, conidia, hypha. Preferably, the one or more spores are *Bacillus* endospores, even more preferably the one or more spores are endospores of *B. subtilis, B. licheniformis, B. amyloliquefaciens,* or *B. megaterium.* The microrganisms may be included in the cleaning composition or additive in the same way as enzymes (see above).

## Adjunct materials

Any cleaning components known in the art for use in, e.g., laundry/ADW/hard surface cleaning may also be utilized. Other optional cleaning components include anti-corrosion agents, anti-shrink agents, anti-soil redeposition agents, anti-wrinkling agents, bactericides, binders, corrosion inhibitors, disintegrants/disintegration agents, dyes, enzyme stabilizers (including boric acid, borates, CMC, and/or polyols such as propylene glycol), fabric conditioners including clays, fillers/processing aids, fluorescent whitening agents/optical brighteners, foam boosters, foam (suds) regulators, perfumes, soil-suspending agents, softeners, suds suppressors, tarnish inhibitors, and wicking agents, either alone or in combination. Any ingredient known in the art for use in, e.g., laundry/ADW/hard surface cleaning may be utilized. The choice of such ingredients is well within the skill of the artisan.

## Dispersants

The cleaning compositions of the present invention can also contain dispersants. In particular powdered cleaning compositions may comprise dispersants. Suitable water-soluble organic materials include the homo- or co-polymeric acids or their salts, in which the polycarboxylic acid comprises at least two carboxyl radicals separated from each other by not more than two carbon atoms. Suitable dispersants are described in, e.g., Powdered Detergents, Surfactant Science Series volume 71, Marcel Dekker, Inc.

## Dye Transfer Inhibiting Agents

The cleaning compositions of the present invention may also include one or more dye transfer inhibiting agents. Suitable polymeric dye transfer inhibiting agents include, but are not limited to, polyvinyl pyrrolidone polymers, polyamine N-oxide polymers, copolymers of N-vinyl pyrrolidone and N-vinyl imidazole, polyvinyl oxazolidones and polyvinyl imidazoles or mixtures thereof. When present in a subject composition, the dye transfer inhibiting agents may be present at levels from about 0.0001 to about 10 wt.%, from about 0.01 to about 5 wt.% or even from about 0.1 to about 3 wt.% of the composition.

## Fluorescent whitening agent

The cleaning compositions of the present invention will preferably also contain additional components that may tint articles being cleaned, such as fluorescent whitening agent or optical brighteners. Where present the brightener is preferably at a level of about 0.01 to about 0.5 wt.%. Any fluorescent whitening agent suitable for use in a laundry cleaning composition may be used in the composition of the present invention. The most commonly used fluorescent whitening agents are those belonging to the classes of diamino stilbene sulfonic acid derivatives, diaryl pyrazoline derivatives and bisphenyl distyryl derivatives. Examples of the diamino stilbene sulfonic acid derivative type of fluorescent whitening agents include the sodium salts of: 4,4'-bis-(2-diethanol amino-4-anilino-s-triazin-6-yl amino) stilbene-2,2'-disulfonate, 4,4'-bis-(2,4-dianilino-s-triazin-6-yl amino) stilbene-2,2'-disulfonate, 4,4'-bis-(2-anilino-4-(N-methyl-N-2-hydroxy ethyl amino)-s-triazin-6-yl amino) stilbene-2,2'-disulfonate, 4,4'-bis-(4-phenyl-1,2,3-triazol-2-yl) stilbene-2,2'-disulfonate and sodium 5-(2H-naphtho-[1,2-d][1,2,3]triazol-2-yl)-2-[(E)-2-phenyl vinyl] benzene sulfonate. Preferred fluorescent whitening agents are Tinopal DMS and Tinopal CBS available from Ciba-Geigy AG, Basel, Switzerland. Tinopal DMS is the disodium salt of 4,4'-bis-(2-morpholino-4-anilino-s-triazin-6-yl amino) stilbene-2,2'-disulfonate. Tinopal CBS is the disodium salt of 2,2'-bis-(phenyl styryl) disulfonate. Also preferred are fluorescent whitening agents is the commercially available Parawhite KX, supplied by Paramount Minerals and Chemicals, Mumbai, India. Other fluorescers suitable for use in the invention include the 1-3-diaryl pyrazolines and the 7-alkylaminocoumarins. Suitable fluorescent brightener levels include lower levels of from about 0.01, from about 0.05, from about 0.1 or even from about 0.2 wt.% to upper levels of about 0.5 or even about 0.75 wt.%.

## Soil release polymers

The cleaning compositions of the present invention may also include one or more soil release polymers which aid the removal of soils from fabrics such as cotton and polyester based fabrics, in particular the removal of hydrophobic soils from polyester based fabrics. The soil release polymers may, e.g., be nonionic or anionic terephthalte based polymers, polyvinyl caprolactam and related copolymers, vinyl graft copolymers, polyester polyamides see, e.g., Chapter 7 in Powdered Detergents, Surfactant Science Series volume 71, Marcel Dekker, Inc. Another type of soil release polymers are amphiphilic alkoxylated grease cleaning polymers comprising a core structure and a plurality of alkoxylate groups attached to that core structure. The core structure may comprise a polyalkylenimine structure or a polyalkanolamine structure as described in detail in WO2009/087523 (hereby incorporated by reference). Furthermore random

graft co-polymers are suitable soil release polymers. Suitable graft co-polymers are described in more detail in, e.g., WO2007/138054, WO2006/108856 and WO2006/113314 (hereby incorporated by reference). Suitable polyethylene glycol polymers include random graft co-polymers comprising: (i) hydrophilic backbone comprising polyethylene glycol, and (ii) side chain(s) selected from the group consisting of: $C_{4-25}$ alkyl group, polypropylene, polybutylene, vinyl ester of a saturated $C_{1-6}$ monocarboxylic acid, $C_{1-6}$ alkyl ester of acrylic or methacrylic acid, and mixtures thereof. Suitable polyethylene glycol polymers have a polyethylene glycol backbone with random grafted polyvinyl acetate side chains. The average molecular weight of the polyethylene glycol backbone can be in the range of from 2000 to 20000 Da, or from 4000 to 8000 Da. The molecular weight ratio of the polyethylene glycol backbone to the polyvinyl acetate side chains can be in the range of from 1:1 to 1:5, or from 1:1.2 to 1:2. The average number of graft sites per ethylene oxide units can be less than 1, or less than 0.8, the average number of graft sites per ethylene oxide units can be in the range of from 0.5 to 0.9, or the average number of graft sites per ethylene oxide units can be in the range of from 0.1 to 0.5, or from 0.2 to 0.4. A suitable polyethylene glycol polymer is Sokalan HP 22. Other soil release polymers are substituted polysaccharide structures especially substituted cellulosic structures such as modified cellulose deriviatives such as those described in EP1867808 or WO2003/040279 (both are hereby incorporated by reference). Suitable cellulosic polymers include cellulose, cellulose ethers, cellulose esters, cellulose amides and mixtures thereof. Suitable cellulosic polymers include anionically modified cellulose, nonionically modified cellulose, cationically modified cellulose, zwitterionically modified cellulose, and mixtures thereof. Suitable cellulosic polymers include methyl cellulose, carboxy methyl cellulose, ethyl cellulose, hydroxyl ethyl cellulose, hydroxyl propyl methyl cellulose, ester carboxy methyl cellulose, and mixtures thereof.

**Anti-redeposition agents**

The cleaning compositions of the present invention may also include one or more anti-redeposition agents such as carboxy methyl cellulose (CMC), polyvinyl alcohol (PVA), polyvinyl pyrrolidone (PVP), polyoxy ethylene and/or polyethylene glycol (PEG), homopolymers of acrylic acid, copolymers of acrylic acid and maleic acid, and ethoxylated polyethylene imines. The cellulose based polymers described under soil release polymers above may also function as anti-redeposition agents.

**Rheology Modifiers**

The cleaning compositions of the present invention may also include one or more rheology modifiers, structurants or thickeners, as distinct from viscosity reducing agents. The rheology modifiers are selected from the group consisting of non-polymeric crystalline, hydroxy-functional materials, polymeric rheology modifiers which impart shear thinning characteristics to the aqueous liquid matrix of a liquid cleaning composition. The rheology and viscosity of the cleaning composition can be modified and adjusted by methods known in the art, e.g., as shown in EP2169040.

Other suitable adjunct materials include, but are not limited to, anti-shrink agents, anti-wrinkling agents, bactericides, binders, carriers, dyes, enzyme stabilizers, fabric softeners, fillers, foam regulators, hydrotropes, perfumes, pigments, sod suppressors, solvents, and structurants for liquid cleaning compositions and/or structure elasticizing agents.

**Formulation of cleaning products**

The cleaning composition of the present invention may be formulated, e.g., as a hand or machine laundry detergent composition including a laundry additive composition suitable for pre-treatment of stained fabrics and a rinse added fabric softener composition, or be formulated as a detergent composition for use in general household hard surface cleaning operations, or be formulated for hand or machine dishwashing operations. In a specific embodiment, the present invention provides a detergent additive comprising one or more enzymes as described herein. The cleaning composition of the invention may be in any convenient form, e.g., a bar, a homogenous tablet, a tablet having two or more layers, a pouch having one or more compartments, a regular or compact powder, a granule, a paste, a gel, or a regular, compact or concentrated liquid.

Pouches can be configured as single or multicompartments. It can be of any form, shape and material which is suitable for hold the composition, e.g., without allowing the release of the composition to release of the composition from the pouch prior to water contact. The pouch is made from water soluble film which encloses an inner volume. Said inner volume can be divided into compartments of the pouch. Preferred films are polymeric materials preferably polymers which are formed into a film or sheet. Preferred polymers, copolymers or derivates thereof are selected polyacrylates, and water soluble acrylate copolymers, methyl cellulose, carboxy methyl cellulose, sodium dextrin, ethyl cellulose, hydroxy ethyl cellulose, hydroxy propyl methyl cellulose, malto dextrin, poly methacrylates, most preferably polyvinyl alcohol copolymers and, hydroxy propyl methyl cellulose (HPMC). Preferably the level of polymer in the film, e.g., PVA

is at least about 60%. Preferred average molecular weight will typically be about 20000 to about 150000. Films can also be of blended compositions comprising hydrolytically degradable and water soluble polymer blends such as polylactide and polyvinyl alcohol (known under the Trade reference M8630 as sold by MonoSol LLC, Indiana, USA) plus plasticisers like glycerol, ethylene glycerol, propylene glycol, sorbitol and mixtures thereof. The pouches can comprise a solid laundry cleaning composition or part components and/or a liquid cleaning composition or part components separated by the water soluble film. The compartment for liquid components can be different in composition than compartments containing solids: US2009/011970A1.

Cleaning composition ingredients can be separated physically from each other by compartments in water dissolvable pouches or in different layers of tablets. Thereby negative storage interaction between components can be avoided. Different dissolution profiles of each of the compartments can also give rise to delayed dissolution of selected components in the wash solution.

A liquid or gel cleaning composition which is not unit dosed may be aqueous, typically containing at least 20 wt.% and up to 95 wt.% water, such as up to about 70 wt.% water, up to about 65 wt.% water, up to about 55 wt.% water, up to about 45 wt.% water, up to about 35 wt.% water. Other types of liquids, including without limitation, alkanols, amines, diols, ethers and polyols may be included in an aqueous liquid or gel. An aqueous liquid or gel cleaning composition may contain from 0 to 30 wt.% organic solvent. A liquid or gel cleaning composition may be non-aqueous.

**Granular cleaning formulations**

Non-dusting granulates may be produced as disclosed in, e.g., US4106991 and US4661452 and may optionally be coated by methods known in the art. Examples of waxy coating materials are poly(ethylene oxide) products (polyethylene glycol, PEG) with mean molar weights of 1000 to 20000; ethoxylated nonyl phenols having from 16 to 50 ethylene oxide units, ethoxylated fatty alcohols in which the alcohol contains from 12 to 20 carbon atoms and in which there are 15 to 80 ethylene oxide units, fatty alcohols, fatty acids, and mono- and di- and triglycerides of fatty acids. Examples of film-forming coating materials suitable for application by fluid bed techniques are given in GB1483591. Liquid enzyme preparations may, e.g., be stabilized by adding a polyol such as propylene glycol, a sugar or sugar alcohol, lactic acid or boric acid according to established methods. Protected enzymes may be prepared according to the method disclosed in EP0238216.

The dispersin may be formulated as a granule, e.g., as a co-granule that combines one or more enzymes. Each enzyme will then be present in more granules securing a more uniform distribution of enzymes in the detergent. This also reduces the physical segregation of different enzymes due to different particle sizes. Methods for producing multi-enzyme co-granulate for the detergent industry are disclosed in the IP.com disclosure IPCOM000200739D.

Another example of formulation of enzymes by the use of co-granulates is disclosed in WO2013/188331, which relates to a detergent composition comprising (a) a multi-enzyme co-granule, (b) less than 10 wt.% zeolite (anhydrous basis) and (c) less than 10 wt.% phosphate salt (anhydrous basis), wherein said enzyme co-granule comprises from 10 to 98 wt.% moisture sink component and the composition additionally comprises from 20 to 80 wt.% detergent moisture sink component. The multi-enzyme co-granule may comprise an enzyme of the invention and one or more additional enzymes selected from the group consisting of proteases, amylases, cellulases, lipases, mannanases, xyloglucanases, perhydrolases, peroxidases, lipoxygenases, laccases, hemicellulases, cellobiose dehydrogenases, xylanases, esterases, cutinases, pectinases, pectate lyases, keratinases, reductases, oxidases, phenoloxidases, ligninases, pullulanases, tannases, pentosanases, lichenases glucanases, arabinosidases, hyaluronidases, chondroitinases, and mixtures thereof. WO2013/188331 also relates to a method of treating and/or cleaning a surface, preferably a fabric surface comprising the steps of (i) contacting said surface with the detergent composition as claimed and described herein in aqueous wash liquor, and (ii) rinsing and/or drying the surface.

An embodiment of the invention relates to an enzyme granule/particle comprising the dispersin. The granule is composed of a core, and optionally one or more coatings (outer layers) surrounding the core. Typically, the granule/particle size, measured as equivalent spherical diameter (volume based average particle size), of the granule is 20 to 2000 μm, particularly 50 to 1500 μm, 100 to 1500 μm or 250 to 1200 μm. The core may include additional materials such as fillers, fibre materials (cellulose or synthetic fibres), stabilizing agents, solubilising agents, suspension agents, viscosity regulating agents, light spheres, plasticizers, salts, lubricants and fragrances. The core may include binders, such as synthetic polymer, wax, fat, or carbohydrate. The core may comprise a salt of a multivalent cation, a reducing agent, an antioxidant, a peroxide decomposing catalyst and/or an acidic buffer component, typically as a homogenous blend. The core may consist of an inert particle with the enzyme absorbed into it, or applied onto the surface, e.g., by fluid bed coating. The core may have a diameter of 20 to 2000 μm, particularly 50 to 1500 μm, 100 to 1500 μm or 250 to 1200 μm. The core can be prepared by granulating a blend of the ingredients, e.g., by a method comprising granulation techniques such as crystallization, precipitation, pan-coating, fluid bed coating, fluid bed agglomeration, rotary atomization, extrusion, prilling, spheronization, size reduction methods, drum granulation, and/or high shear granulation.

Methods for preparing the core can be found in Handbook of Powder Technology, Particle size enlargement

by C. E. Capes, Volume 1, 1980; Elsevier.

The core of the enzyme granule/particle may be surrounded by at least one coating, e.g., to improve the storage stability, to reduce dust formation during handling, or for coloring the granule. The optional coating(s) may include a salt coating, or other suitable coating materials, such as polyethylene glycol (PEG), methyl hydroxy propyl cellulose (MHPC) and polyvinyl alcohol (PVA). Examples of enzyme granules with multiple coatings are shown in WO93/07263 and WO97/23606. The coating may be applied in an amount of at least 0.1 wt.% of the core, e.g., at least 0.5 wt.%, 1 wt.% or 5 wt.%. The amount may be at most 100%, 70%, 50%, 40% or 30%. The coating is preferably at least 0.1 $\mu$m thick, particularly at least 0.5 $\mu$m, at least 1 $\mu$m or at least 5 $\mu$m. In one embodiment, the thickness of the coating is below 100 $\mu$m. In another embodiment, the thickness of the coating is below 60 $\mu$m. In a more particular embodiment the total thickness of the coating is below 40 $\mu$m. The coating should encapsulate the core unit by forming a substantially continuous layer. A substantially continuous layer is to be understood as a coating having few or no holes, so that the core unit it is encapsulating/enclosing has few or no uncoated areas. The layer or coating should be homogeneous in thickness. The coating can further contain other materials as known in the art, e.g., fillers, antisticking agents, pigments, dyes, plasticizers and/or binders, such as titanium dioxide, kaolin, calcium carbonate or talc. A salt coating may comprise at least 60 wt.% w/w of a salt, e.g., at least 65 wt.%, at least 70 wt.%, at least 75 wt.%, at least 80 wt.%, at least 85 wt.%, at least 90 wt.%, at least 95 wt.% or at least 99 wt.% w/w. The salt may be added from a salt solution where the salt is completely dissolved or from a salt suspension wherein the fine particles is less than 50 $\mu$m, such as less than 10 $\mu$m or less than 5 $\mu$m. The salt coating may comprise a single salt or a mixture of two or more salts. The salt may be water soluble, and may have a solubility at least 0.1 g in 100 g of water at 20°C, preferably at least 0.5 g per 100 g water, e.g., at least 1 g per 100 g water, e.g., at least 5 g per 100 g water. The salt may be an inorganic salt, e.g., salts of sulfate, sulfite, phosphate, phosphonate, nitrate, chloride or carbonate or salts of simple organic acids (less than 10 carbon atoms, e.g., 6 or less carbon atoms) such as citrate, malonate or acetate. Examples of cations in these salts are alkali or earth alkali metal ions, the ammonium ion or metal ions of the first transition series, such as sodium, potassium, magnesium, calcium, zinc or aluminium. Examples of anions include chloride, bromide, iodide, sulfate, sulfite, bisulfite, thiosulfate, phosphate, monobasic phosphate, dibasic phosphate, hypophosphite, dihydrogen pyrophosphate, tetraborate, borate, carbonate, bicarbonate, metasilicate, citrate, malate, maleate, malonate, succinate, lactate, formate, acetate, butyrate, propionate, benzoate, tartrate, ascorbate or gluconate. In particular alkali- or earth alkali metal salts of sulfate, sulfite, phosphate, phosphonate, nitrate, chloride or carbonate or salts of simple organic acids such as citrate, malonate or acetate may be used. The salt in the coating may have a constant humidity at 20°C above 60%, particularly above 70%, above 80% or above 85%, or it may be another hydrate form of such a salt (e.g., anhydrate). The salt coating may be as described in WO00/01793 or WO2006/034710. Specific examples of suitable salts are NaCl ($CH_{20°C}$ = 76%), $Na_2CO_3$ ($CH_{20°C}$ = 92%), $NaNO_3$ ($CH_{20°C}$ = 73%), $Na_2HPO_4$ ($CH_{20°C}$ = 95%), $Na_3PO_4$ ($CH_{25°C}$ =92%), $NH_4Cl$ ($CH_{20°C}$ = 79.5%), $(NH_4)_2HPO_4$ ($CH_{20°C}$ = 93%), $NH_4H_2PO_4$ ($CH_{20°C}$ = 93.1%), $(NH_4)_2SO_4$ ($CH_{20°C}$ = 81.1%), KCl ($CH_{20°C}$ = 85%), $K_2HPO_4$ ($CH_{20°C}$ = 92%), $KH_2PO_4$ ($CH_{20°C}$ = 96.5%), $KNO_3$ ($CH_{20°C}$ = 93.5%), $Na_2SO_4$ ($CH_{20°C}$ = 93%), $K_2SO_4$ ($CH_{20°C}$ = 98%), $KHSO_4$ ($CH_{20°C}$ = 86%), $MgSO_4$ ($CH_{20°C}$ = 90%), $ZnSO_4$ ($CH_{20°C}$ = 90%) and sodium citrate ($CH_{25°C}$ = 86%). Other examples include $NaH_2PO_4$, $(NH_4)H_2PO_4$, $CuSO_4$, $Mg(NO_3)_2$ and magnesium acetate. The salt may be in anhydrous form, or it may be a hydrated salt, i.e., a crystalline salt hydrate with bound water(s) of crystallization, such as described in WO99/32595. Specific examples include anhydrous sodium sulfate ($Na_2SO_4$), anhydrous magnesium sulfate ($MgSO_4$), magnesium sulfate heptahydrate ($MgSO_4 \cdot 7H_2O$), zinc sulfate heptahydrate ($ZnSO_4 \cdot 7H_2O$), sodium phosphate dibasic heptahydrate ($Na_2HPO_4 \cdot 7H_2O$), magnesium nitrate hexahydrate ($Mg(NO_3)_2 \cdot 6H_2O$), sodium citrate dihydrate and magnesium acetate tetrahydrate. Preferably the salt is applied as a solution of the salt, e.g., using a fluid bed.

One embodiment of the present invention provides a granule, which comprises:

(a) a core comprising a dispersin according to the invention, and
(b) optionally a coating consisting of one or more layer(s) surrounding the core.

One embodiment of the invention relates to a granule, which comprises:

(a) a core comprising a dispersin, wherein the dispersin has at least 60%, at least 65%, at least 70%, at least 75%, at least 80%, at least 85%, at least 90%, at least 95%, at least 98% or 100% sequence identity to the amino acid sequence shown in SEQ ID NO's 1 to 23, and
(b) optionally a coating consisting of one or more layer(s) surrounding the core.

**Method and Use of cleaning composition**

The present invention is also directed to methods for using the compositions of the invention in, e.g., laundry/textile/fabric cleaning (household laundry, industrial laundry) and hard surface cleaning (ADW, car wash, industrial surfaces). The cleaning detergent composition of the present invention may be formulated, e.g., as a hand or machine

laundry detergent composition including a laundry additive composition suitable for pre-treatment of stained fabrics and a rinse added fabric softener composition, or be formulated as a detergent composition for use in general household hard surface cleaning operations, or be formulated for hand or machine dishwashing operations. In a specific embodiment, the present invention provides a detergent additive comprising one or more enzymes as described herein.

The compositions of the invention may comprise an enzyme having hexosaminidase activity, in particular a dispersin, and one or more perfume component, and effectively reduce or limit malodor of, e.g., textiles or hard surfaces such as dishes.

One embodiment of the invention relates to the use of a composition comprising an enzyme having hexosaminidase activity, in particular a dispersin, and one or more perfume component for reduction of malodor. One embodiment of the invention relates to the use of a cleaning composition, as defined herein, comprising an enzyme having hexosaminidase activity, in particular a dispersin, and one or more perfume component for reduction of malodor.

One embodiment of the invention relates to the use of a cleaning composition, as defined herein, comprising an enzyme having hexosaminidase activity, in particular a dispersin, and one or more perfume component for reduction of malodor when the cleaning composition is applied in, e.g., laundry process. One embodiment of the invention relates to the use of a cleaning composition, as defined herein, comprising an enzyme having hexosaminidase activity, in particular a dispersin, and one or more perfume component for reduction of malodor on an item, e.g., textile.

One embodiment of the invention relates to the use of a cleaning composition, as defined herein, comprising an enzyme having hexosaminidase activity, in particular a dispersin, and one or more perfume component for reduction of malodor, wherein the dispersin is obtained from *Terribacillus* or *Curtobacterium* or *Aggregatibacter* or *Haemophilus* or *Actinobacillus* or *Lactobacillus* or *Staphylococcus.*

One embodiment of the invention relates to the use of a cleaning composition, as defined herein, comprising an enzyme having hexosaminidase activity, in particular a dispersin, and one or more perfume component for reduction of malodor, wherein the dispersin has at least 60%, at least 65%, at least 70%, at least 75%, at least 80%, at least 85%, at least 90%, at least 95%, at least 98% or 100% sequence identity to the amino acid sequence shown in SEQ ID NO's 1 to 23.

One embodiment of the invention relates to the use of a cleaning composition, as defined herein, comprising an enzyme having hexosaminidase activity, in particular a dispersin, and one or more perfume component for reduction of malodor, wherein the dispersin has at least 60%, at least 65%, at least 70%, at least 75%, at least 80%, at least 85%, at least 90%, at least 95%, at least 98% or 100% sequence identity to the amino acid sequence shown in SEQ ID NO's 1 to 23, and wherein the one or more perfume component comprises at least one note (compound) from: alpha-isomethyl ionone, benzyl salicylate, citronellol, coumarin, hexyl cinnamal, linalool, pentanoic acid, 2-methyl ethyl ester, octanal, benzyl acetate, 1,6-octadien-3-ol, 3,7-dimethyl-3-acetate, cyclohexanol, 2-(1,1-dimethyl ethyl)-1-acetate, delta-damascone, beta-ionone, verdyl acetate, dodecanal, hexyl cinnamic aldehyde, cyclopentadecanolide, benzene acetic acid, 2-phenyl ethyl ester, amyl salicylate, beta-caryophyllene, ethyl undecylenate, geranyl anthranilate, alpha-irone, beta-phenyl ethyl benzoate, alpha-santalol, cedrol, cedryl acetate, cedryl formate, cyclohexyl salicyate, gamma-dodecalactone, beta-phenyl ethyl phenyl acetate, and mixtures thereof.

The invention further relates to a method of deep cleaning of an item, comprising the steps of:

a) contacting the item with a cleaning composition according to the invention; and
b) optionally rinsing the item, wherein the item is preferably a textile.

One embodiment of the invention relates to a method of deep cleaning on an item, comprising the steps of:

a) contacting the item with a composition of the invention comprising an enzyme mixture comprising an enzyme having hexosaminidase activity, in particular a dispersin, and one or more perfume component, as defined herein; and
b) optionally rinsing the item, wherein the item is preferably a textile.

**Definitions**

Nomenclature

"Biofilm" is produced by any group of microorganisms in which cells stick to each other or stick to a surface, such as a textile, dishware or hard surface or another kind of surface. These adherent cells are frequently embedded within a self-produced matrix of extracellular polymeric substance (EPS). Biofilm EPS is a polymeric conglomeration generally composed of extracellular DNA, proteins, and polysaccharides. Biofilms may form on living or non-living surfaces. The microbial cells growing in a biofilm are physiologically distinct from planktonic cells of the same organism, which, by contrast, are single-cells that may float or swim in a liquid medium. Bacteria living in a biofilm usually have significantly different properties from planktonic bacteria of the same species, as the dense and protected environment

of the film allows them to cooperate and interact in various ways. One benefit of this environment for the microorganisms is increased resistance to detergents and antibiotics, as the dense extracellular matrix and the outer layer of cells protect the interior of the community. On laundry biofilm producing bacteria can be found among the following species: *Acinetobacter sp., Aeromicrobium sp., Brevundimonas sp., Microbacterium sp., Micrococcus luteus, Pseudomonas sp., Staphylococcus epidermidis, and Stenotrophomonas sp.* On hard surfaces biofilm producing bacteria can be found among the following species: *Acinetobacter sp., Aeromicrobium sp., Brevundimonas sp., Microbacterium sp., Micrococcus luteus, Pseudomonas sp., Staphylococcus epidermidis, Staphylococcus aureus and Stenotrophomonas sp.* In one aspect, the biofilm producing strain is *Brevundimonas sp.* In one aspect, the biofilm producing strain is *Pseudomonas* particularly, *Pseudomonas aeruginosa* Pseudomonas alcaliphila or *Pseudomonas fluorescens.* In one aspect, the biofilm producing strain is *Staphylococcus aureus.*

By the term "deep cleaning" is meant disruption or removal of components of organic matter, e.g., sebum, cell debris, body soils, biofilm, such as polysaccharides, e.g., PNAG (poly-N-acetyl glucosamine), bodysoil or other components present in the organic matter.

The term "cleaning component", e.g., a detergent adjunct ingredient, is different from the enzymes of the invention, i.e., the dispersin. The precise nature of these additional cleaning components, e.g., adjunct components, and levels of incorporation thereof, will depend on the physical form of the composition and the nature of the operation for which it is to be used. Suitable cleaning components, e.g., adjunct materials include, but are not limited to the components described above such as surfactants, builders, flocculating aid, chelating agents, dye transfer inhibitors, enzymes, enzyme stabilizers, enzyme inhibitors, catalytic materials, bleach activators, hydrogen peroxide, sources of hydrogen peroxide, preformed peracids, polymeric agents, clay soil removal/anti-redeposition agents, brighteners, suds suppressors, dyes, perfumes, structure elasticizing agents, fabric softeners, carriers, hydrotropes, builders and co-builders, fabric huing agents, anti-foaming agents, dispersants, processing aids, and/or pigments.

The term "cleaning composition" refers to compositions that find use in the removal of undesired compounds from items to be cleaned, such as textiles, e.g., body soil, sebum, biofilm, extracellular polymeric substance (EPS) and cell debris, e.g., dead skin cells. The cleaning composition may be used to ,e.g., clean textiles for both household cleaning and industrial cleaning. The term encompasses any materials/compounds selected for the particular type of cleaning composition desired and the form of the product (e.g., liquid, gel, powder, granulate, paste, or spray compositions) and includes, but is not limited to, detergent compositions (e.g., liquid and/or solid laundry detergents and fine fabric detergents, fabric fresheners, fabric softeners and textile and laundry prespotters and pretreatment). In addition to containing the enzyme of the invention, the cleaning composition may contain one or more additional enzymes (such as proteases, amylases, lipases, cutinases, cellulases, endoglucanases, xyloglucanases, pectinases, pectin lyases, xanthanases, peroxidases, haloperoxygenases, catalases and mannanases, or any mixture thereof), and/or cleaning components, e.g., detergent adjunct ingredients such as surfactants, builders, chelators or chelating agents, bleach system or bleach components, polymers, fabric conditioners, foam boosters, suds suppressors, dyes, perfume, tannish inhibitors, optical brighteners, bactericides, fungicides, soil suspending agents, anti-corrosion agents, enzyme inhibitors or stabilizers, enzyme activators, transferase(s), hydrolytic enzymes, oxido reductases, bluing agents and fluorescent dyes, antioxidants, and solubilizers.

The term "enzyme detergency benefit" is defined herein as the advantageous effect an enzyme may add to a detergent compared to the same detergent without the enzyme. Important detergency benefits which can be provided by enzymes are stain removal with no or very little visible soils after washing and/or cleaning, prevention or reduction of redeposition of soils released in the washing process (an effect that also is termed anti-redeposition), restoring fully or partly the whiteness of textiles which originally were white but after repeated use and wash have obtained a greyish or yellowish appearance (an effect that also is termed whitening). Textile care benefits, which are not directly related to catalytic stain removal or prevention of redeposition of soils, are also important for enzyme detergency benefits. Examples of such textile care benefits are prevention or reduction of dye transfer from one fabric to another fabric or another part of the same fabric (an effect that is also termed dye transfer inhibition or anti-backstaining), removal of protruding or broken fibers from a fabric surface to decrease pilling tendencies or remove already existing pills or fuzz (an effect that also is termed anti-pilling), improvement of the fabric-softness, colour clarification of the fabric and removal of particulate soils which are trapped in the fibers of the fabric or garment. Enzymatic bleaching is a further enzyme detergency benefit where the catalytic activity generally is used to catalyze the formation of bleaching components such as hydrogen peroxide or other peroxides. Textile care benefits, which are not directly related to catalytic stain removal or prevention of redeposition of soils, are also important for enzyme detergency benefits.

The term "hard surface cleaning" is defined herein as cleaning of hard surfaces wherein hard surfaces may include floors, tables, walls, roofs etc. as well as surfaces of hard objects such as cars (car wash) and dishes (dishwashing). Dishwashing includes but is not limited to cleaning of plates, cups, glasses, bowls, cutlery such as spoons, knives, forks, serving utensils, ceramics, plastics, metals, china, glass and acrylics.

The term "wash performance" is used as an enzyme's ability to remove stains present on the object to be cleaned during, e.g., wash or hard surface cleaning.

The term "whiteness" is defined herein as a greying, yellowing of a textile. Loss of whiteness may be due to removal of optical brighteners/hueing agents. Greying and yellowing can be due to soil redeposition, body soils, colouring from, e.g., iron and copper ions or dye transfer. Whiteness may include one or several of the following: colourant or dye effects, incomplete stain removal (e.g., body soils, sebum etc.), redeposition (greying, yellowing or other discolourations of the object, due to removed soils reassociating with other parts of textile, soiled or unsoiled), chemical changes in textile during application, and clarification or brightening of colours.

The term "laundering" relates to both household laundering and industrial laundering and means the process of treating textiles with a solution containing a cleaning or detergent composition of the present invention. The laundering process can, e.g., be carried out using, e.g., a household or an industrial washing machine or can be carried out by hand.

By the term "malodor" is meant an odor which is not desired on clean items. The cleaned item should smell fresh and clean without malodors adhered to the item. One example of malodor is compounds with an unpleasant smell, which may be produced by microorganisms, cell debris, sebum, and other body soils. Another example is unpleasant smells can be sweat or body odor adhered to an item which has been in contact with human or animal. Another example of malodor can be the odor from spices, which sticks to items such as curry or other exotic spices which smell strongly.

The term "textile" means any textile material including yarns, yarn intermediates, fibers, non-woven materials, natural materials, synthetic materials, and any other textile material, fabrics made of these materials and products made from fabrics (e.g., garments and other articles). The textile or fabric may be in the form of knits, wovens, denims, non-wovens, felts, yarns, and towelling. The textile may be cellulose based such as natural cellulosics, including cotton, flax/linen, jute, ramie, sisal or coir or manmade cellulosics (e.g., originating from wood pulp) including viscose/rayon, cellulose acetate fibers (tricell), lyocell or blends thereof. The textile or fabric may also be non-cellulose based such as natural polyamides including wool, camel, cashmere, mohair, rabbit and silk or synthetic polymers such as nylon, aramid, polyester, acrylic, polypropylene and spandex/elastane, or blends thereof as well as blends of cellulose based and non-cellulose based fibers. Examples of blends are blends of cotton and/or rayon/viscose with one or more companion material such as wool, synthetic fiber (e.g., polyamide fiber, acrylic fiber, polyester fiber, polyvinyl chloride fiber, polyurethane fiber, polyurea fiber, aramid fiber), and/or cellulose-containing fiber (e.g., rayon/viscose, ramie, flax/linen, jute, cellulose acetate fiber, lyocell). Fabric may be conventional washable laundry, e.g., stained household laundry. When the term fabric or garment is used it is intended to include the broader term textiles as well.

The term "mature polypeptide" means a polypeptide in its final form following translation and any post-translational modifications, such as N-terminal processing, C-terminal truncation, glycosylation, phosphorylation, etc.

The term "variant" means a polypeptide having the activity of the parent or precursor polypeptide and comprising an alteration, i.e., a substitution, insertion, and/or deletion, at one or more positions compared to the precursor or parent polypeptide. A substitution means replacement of the amino acid occupying a position with a different amino acid, a deletion means removal of the amino acid occupying a position, and an insertion means adding an amino acid adjacent to and immediately following the amino acid occupying a position.

The relatedness between two amino acid sequences or between two nucleotide sequences is described by the parameter "sequence identity". For purposes of the present invention, the sequence identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 6.6.0 or later. The parameters used are a gap open penalty of 10, a gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows:

$$(\text{Identical Residues} \times 100)/(\text{Length of Alignment} - \text{Total Number of Gaps in Alignment})$$

For purposes of the present invention, the nomenclature [E/Q] means that the amino acid at this position may be a glutamic acid (Glu, E) or a glutamine (Gln, Q). Likewise, the nomenclature [V/G/A/I] means that the amino acid at this position may be a valine (Val, V), glycine (Gly, G), alanine (Ala, A) or isoleucine (Ile, I), and so forth for other combinations as described herein. Unless otherwise limited further, the amino acid X is defined such that it may be any of the 20 natural amino acids. For an amino acid substitution, the following nomenclature is used: Original amino acid, position, substituted amino acid. For example, the substitution of a threonine at position 220 with alanine is designated as "T220A". Multiple substitutions may be separated by addition marks ("+"), e.g., "T220A + G229V", representing substitutions at positions 220 and 229 of threonine (T) with alanine (A) and glycine (G) with valine (V), respectively. Multiple substitutions may alternatively be listed with individual mutations separated by a space or a comma. Alternative substitutions in a particular position may be indicated with a slash ("/"). For example, substitution of threonine in position 220 with either alanine, valine or leucine many be designated "T220A/V/L".

## Examples

### Media and Solutions

### Cleaning compositions

Composition of model detergent A (liquid): 12% LAS, 11% AEO Biosoft N25-7 (NI), 5% AEOS (SLES), 6% MPG (monopropylene glycol), 3% ethanol, 3% TEA, 2.75% coco soap, 2.75% soya soap, 2% glycerol, 2% sodium hydroxide, 2% sodium citrate, 1% sodium formate, 0.2% DTMPA and 0.2% PCA copoly(acrylic acid/maleic acid) (all percentages are w/w).

Composition of Model detergent T (powder): 11% LAS, 2% AS/AEOS, 2% soap, 3% AEO, 15.15% sodium carbonate, 3% sodium silicate, 18.75% zeolite, 0.15% chelant, 2% sodium citrate, 1.65% AA/MA copolymer, 2.5% CMC and 0.5% SRP (all percentages are w/w).

Triple-20 Nonionic Model Detergent was prepared by dissolving 3.33 g/l non-ionic detergent containing NaOH 0.87%, MPG (monopropylene glycol) 6%, glycerol 2%, soap-soy 2.75%, soap-coco 2.75%, PCA (Sokalon CP-5) 0.2%, AEO Biosoft N25-7(NI) 16%, sodium formiate 1%, sodium citrate 2%, DTMPA 0.2%, ethanol (96%) 3 %, adjustment of pH with NaOH or citric acid, add water to 100% (all percentages are w/w (weight volume) in water with hardness 15 dH.

Composition of Persil Universal Gel: 15-30% anionic surfactants, 5-15% nonionic surfactant, <5% phosphonate, soap, perfume, optical brightener and enzymes.

### Assay I: Determination of hexosaminidase activity

Hexosaminidase activity may be determined using 4-nitrophenyl N-acetyl-β-D-glucosaminide (Sigma-Aldrich) as substrate. The enzymatic reaction is performed in triplicate in a 96 well flat bottom polystyrene microtiter plate (Thermo Scientific) with the following conditions: 50 mM 2-(N-morpholino) ethane sulfonic acid pH 6 buffer, 1.5 mg/ml 4-nitrophenyl N-acetyl-β-D-glucosaminide and 20 μg/ml purified enzyme sample in a total reaction volume of 100 μl. Blank samples without polypeptide are run in parallel. The reactions are carried out at 37°C in a Thermomixer comfort (Eppendorf). After 10 minutes of incubation, 5 μl 1 M NaOH is added to each reaction mixture to stop the enzymatic reaction. The absorbance is read at 405 nm using a POLARstar Omega plate reader (BMG LABTECH) to estimate the formation of 4-nitrophenolate ion released because of enzymatic hydrolysis of the 4-nitrophenyl N-acetyl-β-D-gtucosaminide substrate.

### Example 1: Extraction of biofilm EPS from *Pseudomonas fluorescens*

A crude EPS (extracellular polymeric substances) extract was prepared from *Pseudomonas fluorescens* (isolate from Iceland) as follows: P. *fluorescens* was restreaked on TSA and incubated for 1 day at 20°C. The strain was inoculated in TSB and incubated overnight at 20°C. After propagation, the culture was diluted (1:100) in M63 supplemented medium (15 mM $(NH_4)2SO_4$, 100 mM $KH_2PO_4$, 1.8 μM $FeSO_4$, 1 mM $MgSO_4 \cdot 7H_2O$, 0.4% (w/v) glycerol, 0.2% (w/v) Casamino acids and 0.0001% (w/v) Thiamine), added to Corning® CellBIND® 225 $cm^2$ angled neck cell culture flasks with vent cap (400 ml per flask) and incubated statically for 3 days at 20°C. The biofilm culture was subsequently pelleted by centrifugation (10 min, 8000 g, 25°C), and the cells were resuspended in 3 M NaCl (4 ml per flask) and incubated for 30 min at 30°C to extract the surface-associated EPS. The EPS-containing supernatant obtained after centrifugation (10 min, 5000 g, 25°C) was stored at -20°C until further use.

### Example 2: Perfume increase by dispersin in liquid detergent by removal of EPS on textile

EPS was purified as described in Example 1. After purification, 50 μl aliquots of EPS were added to the wells of 12-well polystyrene flat-bottom microplates (3512, Costar, Corning Incorporated, Corning, NY, USA), in which round swatches (diameter 2 cm) of sterile mix of cotton and polyester (WFK20A 50:50) had been placed. The swatches were incubated for 15 min (static incubation) before proceeding. Eight swatches were placed in 50 ml test tubes and 10 ml of wash liquor (15°dH water with 4.6 g/l liquid Persil Universal Gel detergent, Henkel, Düsseldorf, Germany) and 1.0 ppm enzyme (SEQ ID NO:16) were added to each tube. Washes without enzyme were included as controls. The test tubes were placed in a Stuart rotator and incubated for 1 h at 30°C at 20 rpm. The wash liquor was then removed, and the swatches were rinsed twice with 20 ml 15°dH water. The swatches from each tube were placed in centrifugation tubes (Maxi-Spin 25 ml Filter Insert 50 ml Tube 0.45 μm Nylon Membrane; Ciro Manufacturing Corporation, Dearfield Beach, USA) and centrifuged at 3000 rpm for 4 min in a Thermo Scientific Sorval Lynx 6000 Centrifuge.

Headspace SPME-GC-MS analysis of perfume compunds from commercial detergent on cotton and polyester textile swatches using an Agilent 7890 gas chromatograph coupled to an Agilent 5977 mass spectrometer -MS.

To test for the binding of perfume volatiles bound to the textile, all centrifuged swatches were individually placed in the bottom of 20 mL GC-MS vials (Mikrolab Aarhus A/S, Aarhus, Denmark) and capped with silicone screw top lids (Mikrolab Aarhus A/S, Aarhus, Denmark). Each sample was run in a randomized order, with the headspace from each tube analyzed as follows:

- GCMS Agilent 7890 GC with split/splitless injector and 5977 MS with extractor ion source coupled to a Gerstel MPS2 sampler with HS/SPME, SPME needle heater.
- The method used was: GC Oven Temperature: Initial 40°C; hold 2 min; Rate 5°C/min until 180°C; Rate 30°C/min until 240°C; Hold 0 min. Front SS Inlet He: Mode Split; Tª230°C, Split Ratio 10:1; Split Flow 15 ml/min. Column: Agilent 19091F-433: FFAP-01 HP-FFAP 30 m x 250 μm x 0.25 μm.
- Gerstel MPS SPME Incubator: Agitator. Incubation Temperature: 60°C. Incubation Time: 10.00 min. Agitator Speed: 250 rpm. Sample parameters: Extraction Time: 2.00 min; Inj. Desorption Time: 120 s.
- Fiber type: Carboxen/Polydimethylsiloxane (CAR/PDMS)
- MS Information: Acquisition Mode: Scan. Solvent Delay (minutes): 1. Scan Parameters: Start Time: 1. Low Mass: 35. High Mass: 350. Threshold: 100. A/D Samples: 4. MSZones: MS Source: 230°C. MS Quad: 150°C

Table 1. Effect of addition of dispersin to a wash with commercial detergent on reduction and removal of biofilm and/or EPS on textile swatches and increasing the binding and subsequent release of individual perfume compounds during gas chromatography mass spectrometry analysis.

| Volatile compound (Perfume compound) | 1.0 ppm dispersin (Relative intensity) | Without enzyme (Relative intensity) | Perfume increase with 1.0 ppm dispersin (SEQ ID NO:16) (Increase in %) |
|---|---|---|---|
| Alpha-thujene | 766 | 437 | 43 |
| (-)-β-Pinene | 779 | 437 | 44 |
| Limonene | 5933 | 5488 | 8 |
| p-Methyl anisole | 11492 | 10212 | 11 |
| Undecanal | 435 | 387 | 11 |
| Methyl benzoate | 5817 | 5099 | 12 |
| Ethyl benzoate | 463 | 397 | 14 |
| Cyclamen aldehyde | 629 | 335 | 47 |
| Diphenyl ether | 11584 | 9119 | 21 |
| β-irone | 9114 | 4121 | 55 |
| Formic acid, decyl ester | 816 | 333 | 60 |
| Methyl anthranilate | 249 | 157 | 37 |

The results show that the addition of dispersin to a wash with commercial detergent reduces and removes biofilm and/or EPS on the textile and thus increases the binding of perfume compounds to the textile.

**Example 3: Wash performance in full-scale wash**

Heavy soiled tea towels (Warwick Equest Ltd.; County Durham, UK (100% cotton)) were divided into two halves and one group was washed with 1.0 ppm enzyme (SEQ ID NO:16) using tap water and 4.6 g/l liquid Persil Universal Gel detergent (Henkel, Düsseldorf, Germany). The other group functioned as a control and was washed using tap water and 4.6 g/l liquid Persil Universal Gel detergent (Henkel, Düsseldorf, Germany). A Miele laundry washing machine (Miele Softtronic, W2245) with a 30°C color program was used (run time 1 h, 26 min). After wash, the halved tea towels were hang-dried at room temperature overnight.

Volatiles analysis of textile swatches using a GC-MS

To analyze the volatiles of the tea towels, each one was placed in a sealed and inflated polyethylene cooking bag (5 kg - 43 cm x 35 cm x 0.0012 mm, Dagrofa, Ringsted, Denmark). An SPME fiber was pierced through the bag and exposed overnight to the headspace. After extraction the SPME fiber was manually analyzed on a GC-MS with the following specifications:

- GCMS Agilent 7890 GC with split/splitless injector and 5977 MS with extractor ion source coupled to a Gerstel MPS2 sampler with HS/SPME, SPME needle heater.
- The method used was: GC Oven Temperature: Initial 40°C; hold 2 min; Rate 5°C/min until 180°C; Rate 30°C/min until 240°C; Hold 0 min. Front SS Inlet He: Mode Split; Tª 230°C, Split Ratio 10:1; Split Flow 15 mL/min. Column: Agilent 19091F-433: FFAP-01 HP-FFAP 30 m x 250 μm x 0.25 μm.
- Fiber type: Carboxen/Polydimethylsiloxane (CAR/PDMS)
- MS Information: Acquisition Mode: Scan. Solvent Delay (minutes): 1. Scan Parameters: Start Time: 1. Low Mass: 35. High Mass: 350. Threshold: 100. A/D Samples: 4. MSZones: MS Source: 230°C. MS Quad: 150°C

Table 2. Perfume increase in tea towels by dispersin in full-scale washing machine

| Perfume compound | 1.0 ppm dispersin (Relative intensity) | Without enzyme (Relative intensity) | Perfume increase with 1.0 ppm dispersin (SEQ ID NO:16) (Increase in %) |
|---|---|---|---|
| p-Methyl anisole | 10890 | 5034 | 119 |
| Undecanal | 40054 | 30808 | 23 |
| Cyclamen aldehyde | 65440 | 49964 | 31 |
| Diphenyl ether | 858445 | 505696 | 72 |
| β-irone | 104607 | 94624 | 9 |
| β-Methyl ionone | 366112 | 303089 | 21 |
| Lilial | 194185 | 155812 | 24 |
| α-Methyl ionone | 61769 | 51507 | 20 |
| Ethyl salicylate | 34590 | 12897 | 175 |
| α-Amyl cinnamaldehyde | 25163 | 20721 | 24 |

## Claims

1. A cleaning composition for hard surfaces and textiles, **characterized in that** the cleaning composition contains from 0.1 to 50 ppm of an enzyme having hexosaminidase activity and from 0.0005 to 5 wt.%, preferably 0.0001 to 3 wt.%, more preferably 0.005 to 2 wt.%, even more preferably 0.001 to 0.5 wt.%, still even more preferably 0.05 to 0.5 wt.%, most preferably 0.1 to 1 wt.% of one or more perfume component.

2. The cleaning composition according to claim 1, wherein the enzyme having hexosaminidase activity is a dispersin having 1,6 beta-N-acetylglycosamine activity.

3. The cleaning composition according to claim 1 or 2, wherein the dispersin is selected from the group consisting of:

   a) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:1,
   b) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:2,
   c) a polypeptide having at least 60%, e.g., at least 65%, at least 70%, at least 75%, at least 80%, at least 81%,

at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:3,

d) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:4,

e) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:5,

f) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:6,

g) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:7,

h) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:8,

i) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:9,

j) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:10,

k) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:11,

l) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:12,

m) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:13,

n) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:14,

o) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:15,

p) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:16,

q) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%,

at least 98%, at least 99%, or 100% sequence identity to the polypeptide shown in SEQ ID NO:17,
r) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:18,
s) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:19,
t) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:20,
u) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:21,
v) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:22, and
w) a polypeptide having at least 60%, e.g., at least 65%, at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99%, or 100% sequence identity to the polypeptide shown in SEQ ID NO:23.

**4.** The cleaning composition according to any of the preceding claims, wherein the one or more perfume component comprises at least one note (compound) from: alpha-isomethyl ionone, benzyl salicylate, citronellol, coumarin, hexyl cinnamal, linalool, pentanoic acid, 2-methyl ethyl ester, octanal, benzyl acetate, 1,6-octadien-3-ol, 3,7-dimethyl-3-acetate, cyclohexanol, 2-(1,1-dimethyl ethyl)-1-acetate, delta-damascone, beta-ionone, verdyl acetate, dodecanal, hexyl cinnamic aldehyde, cyclopentadecanolide, benzene acetic acid, 2-phenyl ethyl ester, amyl salicylate, beta-caryophyllene, ethyl undecylenate, geranyl anthranilate, alpha-irone, beta-phenyl ethyl benzoate, alpha-santalol, cedrol, cedryl acetate, cedryl formate, cyclohexyl salicyate, gamma-dodecalactone, beta-phenyl ethyl phenyl acetate, and mixtures thereof.

**5.** The cleaning composition according to any of the preceding claims, wherein the cleaning composition

(a) is a solid, preferably granular, laundry detergent composition and further comprises

(a1) at least one zeolite builder, preferably in an amount of 10 to 50 wt.%, more preferably 20 to 30 wt.%;
(a2) at least one phosphonate builder, preferably in an amount of 0.1 to 5 wt.%, more preferably 0.4 to 1.5 wt.%;
(a3) at least one further enzyme, preferably a protease and/or a cellulase, preferably in an amount of active enzyme of 100 to 5000 ppb, more preferably 1000 to 2000 ppb; and
(a4) at least one polymer, preferably a polyvinyl pyrrolidon polymer, preferably in an amount of 0.01 to 1 wt.%, more preferably 0.1 to 0.3 wt.%; or

(b) is a solid laundry detergent composition and further comprises

(b1) at least one silicate builder, preferably in an amount of 2 to 20 wt.%, more preferably 5 to 10 wt.%;
(b2) optionally carboxy methyl cellulose, preferably in an amount of 0.1 to 10 wt.%, more preferably 0.1 to 4 wt.%;
(b3) at least one further enzyme, preferably a protease and/or a cellulase, preferably in an amount of active enzyme of 0.1 to 100 ppm, more preferably 0.1 to 10 ppm;
(b4) optionally at least one soil release polymer, preferably a polyvinyl pyrrolidon polymer, in an amount of 0.1 to 3 wt.%, more preferably 0.1 to 1.0 wt.%; and
(b5) at least one bleaching system, comprising a bleaching agent, a bleach activator and a bleach catalyst, preferably in an amount of 0.1 to 50 wt.%, more preferably 0.1 to 30 wt.%; or

(c) is a liquid laundry detergent composition and further comprises

(c1) at least one surfactant, preferably nonionic surfactant, preferably in an amount of 1 to 20 wt.%, preferably 3 to 15 wt.%;
(c2) optionally at least one phosphonate builder, preferably in an amount of 0.1 to 3 wt.%, more preferably 0.25 to 1.5 wt.%;
(c3) optionally at least one further enzyme, preferably a protease and/or a cellulase, preferably in an amount of enzyme composition of 0.001 to 1 wt.%, more preferably 0.001 to 0.6 wt.%; and
(c4) optionally at least one organic solvent, preferably glycerol, preferably in an amount of 0.1 to 10 wt.%, more preferably 0.1 to 5 wt.%; or

(d) is a liquid laundry detergent in unit dose form, preferably a pouch comprising a watersoluble film, and further comprises

(d1) water in an amount of up to 20 wt.%, preferably 5 to 15 wt.%;
(d2) optionally at least one bittering agent, preferably benzyl diethyl-(2,6-xylyl carbamoyl)-methyl ammonium benzoate, preferably in an amount of 0.00001 to 0.04 wt.%;
(d3) optionally at least one optical brightener, preferably in an amount of 0.01 to 2 wt.%, more preferably 0.01 to 1 wt.%; and
(d4) optionally at least one polymer, preferably in an amount of 0.01 to 7 wt.%, more preferably 0.1 to 5 wt.%; or

(e) is a fabric finisher and further comprises

(e1) at least one softening silicone, preferably an amino-functionalized silicone, preferably in an amount of 0.1 to 10 wt.%, more preferably 0.1 to 2 wt.%;
(e2) at least one perfume, preferably at least partially encapsulated in microcapsules, more preferably at least partially encapsulated in melamine-formaldehyde microcapsules, preferably in an amount of 0.01 to 3 wt.%, more preferably 0.1 to 1 wt.%;
(e3) optionally polyquaternium 10 in an amount of 0.1 to 20 wt.%, preferably 0.1 to 13 wt.%;
(e4) optionally polyquaternium 37 in an amount of 0.1 to 20 wt.%, preferably 0.1 to 13 wt.%;
(e5) optionally a plant-based esterquat, preferably a canola- or palm-based esterquat, in an amount of 0.1 to 20 wt.%, preferably 0.1 to 13 wt.%; and
(e6) optionally adipic acid, in an amount of 0.1 to 20 wt.%, preferably 0.1 to 13 wt.%; or

(f) is an acidic cleaning agent, preferably having a pH less than 6, and further comprises

(f1) plant-based or bio-based surfactants, preferably each in an amount of 0.1 to 5 wt.%, more preferably each in an amount of 0.1 to 2 wt.%;
(f2) at least one acidic biocide, preferably selected from acids, more preferably HCI and formic acid; and
(f3) at least one soil release, water repellant or water spreading polymer, preferably in an amount of 0.01 to 3 wt.%, more preferably 0.01 to 0.5 wt.%; or

(g) is a neutral cleaning agent, preferably having a pH between 6.0 and 7.5, and further comprises

(g1) plant-based or bio-based surfactants, preferably each in an amount of 0.1 to 5 wt.%, more preferably each in an amount of 0.1 to 2 wt.%;
(g2) at least one biocide, preferably selected from quaternary ammonium compounds and alcohols; and
(g3) at least one soil release, water repellant or water spreading polymer, preferably in an amount of 0.01 to 3 wt.%, more preferably 0.01 to 0.5 wt.%; or

(h) is an alkaline cleaning agent, preferably having a pH of more than 7.5, and further comprises
(h1) plant-based or bio-based surfactants, preferably each in an amount of 0.1 to 5 wt.%, more preferably each in an amount of 0.1 to 2 wt.%; or
(i) is a hand dishwashing agent, preferably liquid hand dishwashing agent, and further comprises

(i1) at least one anionic surfactant, preferably in an amount of 0.1 to 40 wt.%, more preferably 5 to 30 wt.%;
(i2) at least one amphoteric surfactant, preferably betain, preferably in an amount of 0.1 to 25 wt.%, more

preferably 1 to 15 wt.%;
(i3) at least one nonionic surfactant, preferably in an amount of 0.1 to 25 wt.%, more preferably 2 to 10 wt.%;
(i4) at least one further enzyme, preferably selected from amylases, preferably in an amount of enzyme composition of up to 1 wt.%, more preferably up to 0.6 wt.%; or

(j) is an automatic dishwashing composition and further comprises

(j1) at least one builder selected from citrate, amino carboxylates and combinations thereof, preferably in an amount of 5 to 30 wt.%, more preferably 10 to 20 wt.%;
(j2) at least one phosphonate builder, preferably in an amount of 0.1 to 5 wt.%, more preferably 0.4 to 1.5 wt.%;
(j3) at least one nonionic surfactant, preferably in an amount of 0.1 to 10 wt.%, more preferably 1 to 5 wt.%;
(j4) at least one bleaching system, comprising a bleaching agent, a bleach activator and a bleach catalyst, preferably in an amount of 0.1 to 50 wt.%, more preferably 0.1 to 30 wt.%; and
(j5) at least one polymer selected from sulfopolymers, cationic polymers and polyacrylates, preferably in an amount of 0.01 to 15 wt.%, more preferably 2 to 10 wt.%; or

(k) further comprises
(k1) at least one sulfopolymer, preferably in an amount of 1 to 15 wt.%, more preferably 2 to 10 wt.% and is preferably a dishwashing, more preferably an automatic dishwashing composition; or
(l) further comprises at least one adjunct ingredient selected from probiotics, preferably microbes, spores or combinations thereof; or
(m) is in unit dose form and comprises at least 2, preferably 2, 3, 4 or 5 separate compartments; or
(n) is a phosphate-free composition.

**6.** A method of deep cleaning of an item, comprising the steps of:

a) contacting the item with a cleaning composition according to any one of claims 1 to 5; and
b) optionally rinsing the item,

wherein the item is a textile or a hard surface.

**7.** A method of deep cleaning of an item, comprising the steps of:

a) contacting the item with a solution comprising an enzyme having hexosaminidase activity, in particular a dispersin, one or more perfume component, and a cleaning component, wherein the cleaning component is selected from 1 to 40 wt.% of at least one surfactant, 1 to 30 wt.% of at least one builder and 1 to 20 wt.% of at least one bleach component; and
b) optionally rinsing the item,

wherein the item is a textile or a hard surface.

**8.** Use of a composition according to any one of claims 1 to 5 for deep cleaning of an item, wherein the item is a textile or a hard surface.

Europäisches Patentamt
European Patent Office
Office européen des brevets

# EUROPEAN SEARCH REPORT

Application Number
EP 20 18 4733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/355933 A1 (LANT NEIL JOSEPH [GB] ET AL) 14 December 2017 (2017-12-14)<br>* paragraph [0133]; claims 1, 8, 16; examples 5-8; sequence 4 *<br>* paragraph [0001] * | 1-8 | INV.<br>C11D3/386<br>C11D3/50 |
| X | WO 2019/086520 A1 (HENKEL AG & CO KGAA [DE]) 9 May 2019 (2019-05-09)<br>* claim 1; sequence 17 * | 1-8 | |
| X | EP 3 330 353 A1 (PROCTER & GAMBLE [US]) 6 June 2018 (2018-06-06)<br>* examples 1-18, 25-37; sequence 9 * | 1-8 | |
| X | WO 98/50512 A1 (PROCTER & GAMBLE [US]; CONVENTS ANDRE CHRISTIAN [US] ET AL.) 12 November 1998 (1998-11-12)<br>* claims 1-11; examples 1,2,6,8 * | 1-8 | |

TECHNICAL FIELDS SEARCHED (IPC)

C11D

The present search report has been drawn up for all claims

1

| Place of search | Date of completion of the search | Examiner |
|---|---|---|
| The Hague | 19 November 2020 | van Klompenburg, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 18 4733

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2020

| Patent document cited in search report | Publication date | Patent family member(s) | Publication date |
|---|---|---|---|
| US 2017355933 A1 | 14-12-2017 | CA 3022951 A1 | 14-12-2017 |
| | | CN 109312272 A | 05-02-2019 |
| | | EP 3469055 A1 | 17-04-2019 |
| | | JP 2019522074 A | 08-08-2019 |
| | | US 2017355933 A1 | 14-12-2017 |
| | | WO 2017214244 A1 | 14-12-2017 |
| WO 2019086520 A1 | 09-05-2019 | DE 102017125558 A1 | 02-05-2019 |
| | | EP 3704241 A1 | 09-09-2020 |
| | | KR 20200071135 A | 18-06-2020 |
| | | US 2020283702 A1 | 10-09-2020 |
| | | WO 2019086520 A1 | 09-05-2019 |
| EP 3330353 A1 | 06-06-2018 | NONE | |
| WO 9850512 A1 | 12-11-1998 | AR 015650 A1 | 16-05-2001 |
| | | WO 9850512 A1 | 12-11-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017186936 A
- WO 2017186937 A
- WO 2017186943 A
- WO 2011163325 A
- EP 2516606 B1
- WO 2009102854 A
- US 5977053 A
- EP 0164514 A
- WO 9817767 A
- EP 0624154 A
- WO 2007087258 A
- WO 2007087244 A
- WO 2007087259 A
- EP 1867708 A
- WO 2007087242 A
- WO 9426860 A
- WO 9426859 A
- WO 2006130575 A
- WO 2005003274 A
- WO 2005003275 A
- WO 2005003276 A
- EP 1876226 A
- WO 2007087257 A
- WO 2007087243 A
- US 4435307 A
- US 5648263 A
- US 5691178 A
- US 5776757 A
- WO 8909259 A
- EP 0495257 A
- EP 0531372 A
- WO 9611262 A
- WO 9629397 A
- WO 9808940 A
- WO 9117244 A
- WO 9407998 A
- EP 0531315 A
- US 5457046 A
- US 5686593 A
- US 5763254 A
- JP 2000210081 A
- WO 9524471 A
- WO 9812307 A
- WO 99001544 A
- WO 2002099091 A
- WO 2001062903 A
- WO 9964619 A
- US 7062042 B
- WO 2009021867 A
- WO 9318140 A
- WO 200116285 A
- WO 200216547 A
- WO 9425583 A
- WO 2005040372 A
- WO 2005052161 A
- WO 2005052146 A
- WO 2007044993 A
- WO 2015158723 A
- WO 2016075078 A
- WO 8906279 A
- WO 9219729 A
- WO 9634946 A
- WO 9820115 A
- WO 9820116 A
- WO 9911768 A
- WO 2001044452 A
- WO 2003006602 A
- WO 2004003186 A
- WO 2004041979 A
- WO 2007006305 A
- WO 2011036263 A
- WO 2011036264 A
- WO 2014207227 A
- WO 2016087617 A
- WO 2016174234 A
- WO 2016001449 A
- WO 9102792 A
- WO 9221760 A
- WO 9523221 A
- EP 1921147 A
- EP 1921148 A
- WO 2016096711 A
- WO 2004067737 A
- WO 2015014790 A
- WO 2015014803 A
- WO 2015014804 A
- WO 2016097350 A
- WO 2016097352 A
- WO 2016097357 A
- WO 2016097354 A
- US 5352604 A
- EP 0258068 A
- EP 0305216 A
- WO 9613580 A
- EP 0218272 A
- EP 0331376 A
- WO 9506720 A
- WO 9627002 A

- WO 9612012 A
- WO 2010065455 A
- WO 2010107560 A
- US 5389536 A
- WO 2011084412 A
- WO 2011084417 A
- WO 2011084599 A
- WO 2011150157 A
- WO 2012137147 A
- EP 0407225 A
- WO 9205249 A
- WO 9401541 A
- WO 9425578 A
- WO 9514783 A
- WO 9530744 A
- WO 9535381 A
- WO 9522615 A
- WO 9600292 A
- WO 9704079 A
- WO 9707202 A
- WO 0034450 A
- WO 0060063 A
- WO 2001092502 A
- WO 2007087508 A
- WO 2009109500 A
- WO 2010111143 A
- WO 2005056782 A
- WO 2009067279 A
- WO 2010100028 A
- GB 1296839 A
- WO 9510603 A
- WO 9402597 A
- WO 9418314 A
- WO 9743424 A
- WO 99019467 A
- WO 2002010355 A
- WO 2006066594 A
- WO 9919467 A
- WO 9623873 A
- WO 2008153815 A
- WO 2001066712 A
- WO 2009061380 A
- WO 2013184577 A
- WO 2010104675 A
- WO 2011098531 A
- WO 2013001078 A
- WO 2013001087 A
- EP 0179486 A
- WO 9324618 A
- WO 9510602 A
- WO 9815257 A
- WO 9527046 A
- WO 9704102 A
- WO 2001079459 A
- WO 2001079458 A
- WO 2001079461 A
- WO 2001079460 A
- WO 9201046 A
- JP 2238885 A
- WO 9708325 A
- WO 9533836 A
- WO 2009087523 A
- WO 2007138054 A
- WO 2006108856 A
- WO 2006113314 A
- EP 1867808 A
- WO 2003040279 A
- EP 2169040 A
- US 2009011970 A1
- US 4106991 A
- US 4661452 A
- GB 1483591 A
- EP 0238216 A
- WO 2013188331 A
- WO 9307263 A
- WO 9723606 A
- WO 0001793 A
- WO 2006034710 A
- WO 9932595 A

**Non-patent literature cited in the description**


- International Buyers Guide. CFTA Publications, 1992
- Chemicals Buyers Directory 80th Annual Edition. Schnell Publishing Co, 1993
- Fenaroli's Handbook of Flavor Ingredients. CRC Press, 1975
- **M. B. JACOBS.** Synthetic Food Adjuncts. 1947
- **S. ARCTANDER.** *Perfume and Flavor Chemicals,* 1969
- **POUCHER.** *Journal of the Society of Cosmetic Chemists,* 1955, vol. 6 (2), 80
- **LEO et al.** Comprehensive Medicinal Chemistry. Pergamon, 1990, vol. 4, 295
- **HODGDON ; KALER.** *Current Opinion in Colloid & Interface Science,* 2007, vol. 12, 121-128
- **SIEZEN et al.** *Protein Eng.,* 1991, vol. 4, 719-737
- **SIEZEN et al.** *Protein Sci.,* 1997, vol. 6, 501-523
- Powdered Detergents, Surfactant Science Series. Marcel Dekker, Inc, vol. 71
- Powdered Detergents, Surfactant Science Series. Marcel Dekker, Inc, vol. 71
- **C. E. CAPES.** Handbook of Powder Technology, Particle size enlargement. Elsevier, 1980, vol. 1
- **NEEDLEMAN ; WUNSCH.** *J. Mol. Biol.,* 1970, vol. 48, 443-453

- **RICE et al.** Trends Genet. *EMBOSS: The European Molecular Biology Open Software Suite,* 2000, vol. 16, 276-277

SEQUENCE LISTING

<110>  Henkel AG & Co. KGaA

<120>  CLEANING COMPOSITIONS AND USES THEREOF

<130>  2019P00477EP

<160>  23

<170>  PatentIn version 3.5

<210>  1
<211>  359
<212>  PRT
<213>  Aggregatibacter actinomycetemcomitans

<400>  1

```
Cys Val Lys Gly Asn Ser Ile His Pro Gln Lys Thr Ser Thr Lys Gln
1               5                   10                  15

Thr Gly Leu Met Leu Asp Ile Ala Arg His Phe Tyr Ser Pro Glu Val
            20                  25                  30

Ile Lys Ser Phe Ile Asp Thr Ile Ser Leu Ser Gly Gly Asn Phe Leu
        35                  40                  45

His Leu His Phe Ser Asp His Glu Asn Tyr Ala Ile Glu Ser His Leu
    50                  55                  60

Leu Asn Gln Arg Ala Glu Asn Ala Val Gln Gly Lys Asp Gly Ile Tyr
65                  70                  75                  80

Ile Asn Pro Tyr Thr Gly Lys Pro Phe Leu Ser Tyr Arg Gln Leu Asp
                85                  90                  95

Asp Ile Lys Ala Tyr Ala Lys Ala Lys Gly Ile Glu Leu Ile Pro Glu
            100                 105                 110

Leu Asp Ser Pro Asn His Met Thr Ala Ile Phe Lys Leu Val Gln Lys
        115                 120                 125

Asp Arg Gly Ile Lys Tyr Leu Gln Gly Leu Lys Ser Arg Gln Val Asp
    130                 135                 140

Asp Glu Ile Asp Ile Thr Asn Ala Asp Ser Ile Ala Phe Met Gln Ser
145                 150                 155                 160

Leu Met Ser Glu Val Ile Asp Ile Phe Gly Asp Thr Ser Gln His Phe
                165                 170                 175
```

His Ile Gly Gly Asp Glu Phe Gly Tyr Ser Val Glu Ser Asn His Glu
180 185 190

Phe Ile Thr Tyr Ala Asn Lys Leu Ser Tyr Phe Leu Glu Lys Lys Gly
195 200 205

Leu Lys Thr Arg Met Trp Asn Asp Gly Leu Ile Lys Ser Thr Phe Glu
210 215 220

Gln Ile Asn Pro Asn Ile Glu Ile Thr Tyr Trp Ser Tyr Asp Gly Asp
225 230 235 240

Thr Gln Asp Lys Asn Glu Ala Ala Glu Arg Arg Asp Met Arg Val Ser
245 250 255

Leu Pro Glu Leu Leu Ala Lys Gly Phe Thr Val Leu Asn Tyr Asn Ser
260 265 270

Tyr Tyr Leu Tyr Ile Val Pro Lys Ala Ser Pro Thr Phe Ser Gln Asp
275 280 285

Ala Ala Phe Ala Ala Lys Asp Val Ile Lys Asn Trp Asp Leu Gly Val
290 295 300

Trp Asp Gly Arg Asn Thr Lys Asn Arg Val Gln Asn Thr His Glu Ile
305 310 315 320

Ala Gly Ala Ala Leu Ser Ile Trp Gly Glu Asp Ala Lys Ala Leu Lys
325 330 335

Asp Glu Thr Ile Gln Lys Asn Thr Lys Ser Leu Leu Glu Ala Val Ile
340 345 350

His Lys Ala Asn Gly Asp Glu
355

<210> 2
<211> 346
<212> PRT
<213> Haemophilus sputorum

<400> 2

Gln Asn Ser Thr Lys Gln Ser Gly Leu Met Leu Asp Ile Ser Arg Arg
1 5 10 15

Phe Tyr Ser Val Glu Thr Ile Lys Gln Phe Ile Asp Asp Ile Ala Gln
20 25 30

```
Ala Asn Gly Thr Phe Leu His Leu His Phe Ala Asp His Glu Asn Tyr
        35                  40                  45

Ala Leu Glu Ser Thr Phe Leu Asn Gln Arg Ala Glu Asn Ala Ile Val
    50                  55                  60

Gln Asn Gly Ile Tyr Ile Asn Pro Lys Thr Asn Lys Pro Phe Leu Thr
65                  70                  75                  80

Tyr Glu Gln Ile Asp Gln Ile Ile Arg Tyr Ala Gln Glu Lys Gln Ile
                85                  90                  95

Glu Leu Ile Pro Glu Val Asp Ser Pro Ala His Ile Lys Gly Ile Leu
            100                 105                 110

Thr Leu Leu Arg Leu Glu Lys Gly Glu Asp Tyr Val Asn Gln Ile Ala
        115                 120                 125

Leu Asn Gln Asp Glu Leu Asn Leu Asp Ser Pro Glu Ser Leu Thr Met
    130                 135                 140

Met Lys Thr Leu Val Asp Glu Val Cys Tyr Ile Phe Gly Tyr Ser Ala
145                 150                 155                 160

Gln His Phe His Ile Gly Gly Asp Glu Phe Asn Tyr Ala Ser Asn Phe
                165                 170                 175

Ile Arg Tyr Val Asn Ala Leu Asn Gln His Ile Asn Gln Lys Gly Leu
            180                 185                 190

Ile Thr Arg Met Trp Asn Asp Gly Leu Leu Gln Gln Asn Ile Asp Glu
        195                 200                 205

Leu Asp Lys Asn Ile Glu Ile Thr Tyr Trp Ser Phe Asp Gly Asp Ala
    210                 215                 220

Gln Glu Lys Asn Asp Ile Val Glu Arg Arg Ala Thr Arg Ile Ser Leu
225                 230                 235                 240

Pro Thr Leu Leu Asp Lys Gly Phe Lys Ala Leu Asn Tyr Asn Ser Tyr
                245                 250                 255

Tyr Leu Tyr Phe Ile Pro Lys Asp Asn Gly Asn Ile Ala Thr Asp Ala
            260                 265                 270

Lys Phe Ala Leu Asn Asp Leu Lys Gln Asn Trp Gln Leu Leu Arg Trp
        275                 280                 285
```

Asp Gly Asn Tyr Glu Thr Gln Pro Ile Gln Gln Ala Glu Asn Leu Ile
290 295 300

Gly Ala Ala Phe Ser Ile Trp Gly Glu His Ala Gly Lys Leu Ser Asp
305 310 315 320

Asp Val Ile His Gln Ala Thr Ser Pro Leu Ile Gln Ala Thr Ile Ile
325 330 335

Gln Thr Asn Ala Lys Thr Thr Gly Pro Asn
340 345

<210> 3
<211> 352
<212> PRT
<213> Actinobacillus suis

<400> 3

Met Asn His Ser Gln Ile Lys Glu Ala Gly Leu Thr Leu Asp Ile Ala
1 5 10 15

Arg Arg Phe Tyr Pro Val Glu Thr Ile Lys Gln Phe Ile Asp Thr Ile
20 25 30

His His Ala Gly Gly Thr Phe Leu His Leu His Phe Ser Asp His Glu
35 40 45

Asn Tyr Ala Leu Glu Ser Thr Tyr Leu Asp Gln Ser Glu Ala Asn Ala
50 55 60

Ile Val Lys Asp Gly Thr Tyr Tyr Asn Pro Lys Thr Asn Lys Pro Phe
65 70 75 80

Leu Thr Tyr Lys Gln Ile His Asp Ile Ile Tyr Tyr Ala Lys Ser Lys
85 90 95

Asn Ile Glu Leu Val Pro Glu Val Asp Thr Pro Asn His Met Thr Ala
100 105 110

Ile Phe Arg Leu Leu Glu Ala Lys His Gly Lys Asp Tyr Val Lys Lys
115 120 125

Leu Lys Ser Lys Met Asn Asp Glu Glu Ile Asp Ile Thr Asn Pro Glu
130 135 140

Ser Ile Glu Val Ile Lys Thr Leu Ile Ala Glu Val Ile Tyr Ile Phe
145 150 155 160

Gly His Ala Ser Glu His Phe His Ile Gly Gly Asp Glu Phe Gly Tyr
165 170 175

Ser Val Glu Thr Asn His Glu Phe Ile Ser Tyr Val Asn Thr Leu Asn
180 185 190

Gln Phe Ile Asn Glu Lys Gly Lys Ile Thr Arg Ile Trp Asn Asp Gly
195 200 205

Leu Ile Lys Asn Asn Leu Asn Gln Leu Asn Lys Asn Val Glu Ile Thr
210 215 220

Tyr Trp Ser Tyr Asp Gly Asp Ala Gln Glu Ser Gln Asp Ile Ala Glu
225 230 235 240

Arg Arg Lys Ile Arg Ala Asn Leu Pro Glu Leu Leu Glu Asn Gly Phe
245 250 255

Lys Val Leu Asn Tyr Asn Ser Tyr Tyr Leu Tyr Phe Val Pro Lys Gly
260 265 270

Asn Ala Asn Ile Thr His Asp Ser Lys Tyr Ala Thr Glu Asp Val Leu
275 280 285

Asn Asn Trp Lys Leu Gly Leu Trp Asp Gly Gln Asn Lys Glu Asn Met
290 295 300

Val Glu Asn Thr Lys Asn Ile Ile Gly Ser Ser Leu Ser Ile Trp Gly
305 310 315 320

Glu Arg Ser Gly Ser Leu Ser Ser Glu Val Ile Glu Glu Ser Thr Gln
325 330 335

Asp Leu Leu Lys Ala Val Ile Gln Lys Thr Asn Asp Pro Lys Ser His
340 345 350

<210> 4
<211> 352
<212> PRT
<213> Actinobacillus capsulatus DSM 19761

<400> 4

Met Asn His Ser Gln Ile Lys Glu Ala Gly Leu Thr Leu Asp Ile Ala
1 5 10 15

Arg Arg Phe Tyr Pro Val Glu Thr Ile Lys Gln Phe Ile Asp Thr Ile
20 25 30

```
His His Ala Gly Gly Thr Phe Leu His Leu His Phe Ser Asp His Glu
        35                  40                  45

Asn Tyr Ala Leu Glu Ser Thr Tyr Leu Asp Gln Leu Glu Ala Asn Ala
    50                  55                  60

Ile Val Lys Asp Gly Thr Tyr Tyr Asn Pro Thr Thr Asn Lys Pro Phe
65                  70                  75                  80

Leu Thr Tyr Lys Gln Ile Asn Asp Ile Ile Tyr Tyr Ala Lys Ser Lys
                85                  90                  95

Asn Ile Glu Leu Val Pro Glu Val Asp Thr Pro Asn His Met Thr Ala
            100                 105                 110

Ile Phe Arg Leu Leu Glu Ala Lys His Ser Lys Asp Tyr Val Lys Arg
        115                 120                 125

Leu Lys Ser Lys Met Asn Asp Glu Glu Ile Asp Ile Thr Asn Leu Glu
    130                 135                 140

Ser Ile Glu Val Ile Lys Thr Leu Ile Ala Glu Val Ile Tyr Ile Phe
145                 150                 155                 160

Gly His Ala Ser Glu His Phe His Ile Gly Gly Asp Glu Phe Gly Tyr
                165                 170                 175

Ser Val Glu Thr Asn His Glu Phe Ile Thr Tyr Val Asn Thr Leu Asn
            180                 185                 190

Gln Phe Ile Asn Asn Lys Gly Lys Ile Thr Arg Ile Trp Asn Asp Gly
        195                 200                 205

Leu Ile Lys Asn Asn Leu Asn Gln Leu Asn Lys Asn Val Glu Ile Thr
    210                 215                 220

Tyr Trp Ser Tyr Asp Gly Asp Ala Gln Glu Ser Gln Asp Ile Ala Glu
225                 230                 235                 240

Arg Arg Lys Ile Arg Val Asn Leu Pro Glu Leu Leu Glu Asn Gly Phe
                245                 250                 255

Lys Val Leu Asn Tyr Asn Ser Tyr Tyr Leu Tyr Phe Val Pro Lys Gly
            260                 265                 270

Asn Ala Asn Ile Thr His Asp Ser Lys His Ala Thr Glu Asp Val Leu
        275                 280                 285
```

Lys Asn Trp Lys Leu Gly Leu Trp Asp Gly Gln Asn Lys Glu Asn Ile
    290                 295                 300

Val Glu Asn Thr Lys Asn Ile Ile Gly Ser Ser Leu Ser Ile Trp Gly
305                 310                 315                 320

Glu His Ser Gly Ser Leu Ser Ser Ala Val Ile Glu Glu Ser Thr Gln
                325                 330                 335

Glu Leu Leu Lys Ala Val Ile Gln Lys Thr Asn Asp Pro Lys Ser His
            340                 345                 350

<210> 5
<211> 352
<212> PRT
<213> Actinobacillus equuli subsp equuli

<400> 5

Met Asn His Ser Gln Ile Lys Glu Ala Gly Leu Thr Leu Asp Ile Ala
1               5                   10                  15

Arg Arg Phe Tyr Pro Val Glu Thr Ile Lys Gln Phe Ile Asp Thr Ile
            20                  25                  30

His His Ala Gly Gly Thr Phe Leu His Leu His Phe Ser Asp His Glu
        35                  40                  45

Asn Tyr Ala Leu Glu Ser Ser Tyr Leu Asp Gln Ser Glu Glu Asn Ala
    50                  55                  60

Ile Val Lys Asp Gly Thr Tyr Tyr Asn Pro Lys Thr Asn Lys Pro Phe
65                  70                  75                  80

Leu Thr Tyr Lys Gln Ile Asp Asp Ile Ile Tyr Tyr Ala Lys Ser Lys
                85                  90                  95

Asn Ile Glu Leu Val Pro Glu Val Asp Thr Pro Asn His Met Thr Ala
            100                 105                 110

Ile Phe Asn Leu Leu Glu Ile Lys His Gly Glu Ala Tyr Val Lys Asn
        115                 120                 125

Leu Lys Ser Lys Met Asn Asp Glu Glu Ile Asp Ile Thr Asn Pro Glu
    130                 135                 140

Ser Ile Glu Val Ile Lys Thr Leu Ile Ala Glu Val Ile Tyr Ile Phe
145                 150                 155                 160

Gly His Ala Ser Glu His Phe His Ile Gly Gly Asp Glu Phe Gly Tyr
165 170 175

Ser Val Glu Thr Asn His Glu Phe Ile Ser Tyr Val Asn Thr Leu Asn
180 185 190

Gln Phe Ile Asn Glu Lys Gly Lys Ile Thr Arg Ile Trp Asn Asp Gly
195 200 205

Leu Ile Lys Asn Asn Leu Asn Gln Leu Asn Lys Asn Val Glu Ile Thr
210 215 220

Tyr Trp Ser Tyr Asp Gly Asp Ala Gln Lys Ser Gln Asp Ile Ala Glu
225 230 235 240

Arg Arg Lys Ile Arg Ala Asp Leu Pro Glu Leu Leu Glu Asn Gly Phe
245 250 255

Lys Val Leu Asn Tyr Asn Ser Tyr Tyr Leu Tyr Phe Val Pro Lys Gly
260 265 270

Asn Ala Asn Ile Thr His Asp Ser Lys Tyr Ala Thr Glu Asp Val Leu
275 280 285

Asn Asn Trp Lys Leu Gly Leu Trp Asp Gly Lys Asn Lys Glu Asn Glu
290 295 300

Val Lys Asn Thr Lys Asn Ile Ile Gly Ser Ser Leu Ser Ile Trp Gly
305 310 315 320

Glu Arg Ser Gly Ser Leu Ser Ser Glu Val Ile Glu Glu Ser Thr Gln
325 330 335

Asp Leu Leu Lys Ala Val Ile Gln Lys Thr Asn Asp Pro Lys Ser His
340 345 350

<210> 6
<211> 359
<212> PRT
<213> Aggregatibacter actinomycetemcomitans

<400> 6

Cys Val Lys Gly Asn Ser Ile Tyr Pro Gln Lys Ile Ser Thr Lys Gln
1 5 10 15

Thr Gly Leu Met Leu Asp Ile Ala Arg His Phe Tyr Ser Pro Glu Val
20 25 30

```
Ile Lys Ser Phe Ile Asp Thr Ile Ser Leu Ser Gly Gly Asn Phe Leu
        35                  40                  45

His Leu His Phe Ser Asp His Glu Asn Tyr Ala Ile Glu Ser His Leu
    50                  55                  60

Leu Asn Gln Arg Ala Glu Asn Ala Val Gln Gly Lys Asp Gly Ile Tyr
65                  70                  75                  80

Ile Asn Pro Tyr Thr Gly Lys Pro Phe Leu Ser Tyr Arg Gln Leu Asp
                85                  90                  95

Asp Ile Lys Ala Tyr Ala Lys Ala Lys Gly Ile Glu Leu Ile Pro Glu
            100                 105                 110

Leu Asp Ser Pro Asn His Met Thr Ala Ile Phe Lys Leu Val Gln Lys
        115                 120                 125

Asp Arg Gly Val Lys Tyr Leu Gln Gly Leu Lys Ser Arg Gln Val Asp
    130                 135                 140

Asp Glu Ile Asp Ile Thr Asn Ala Asp Ser Ile Ala Phe Met Gln Ser
145                 150                 155                 160

Leu Met Asn Glu Val Ile Asp Ile Phe Gly Asp Thr Ser Gln His Phe
                165                 170                 175

His Ile Gly Gly Asp Glu Phe Gly Tyr Ser Val Glu Ser Asn His Glu
            180                 185                 190

Phe Ile Thr Tyr Ala Asn Lys Leu Ser Tyr Phe Leu Glu Lys Lys Gly
        195                 200                 205

Leu Lys Thr Arg Met Trp Asn Asp Gly Leu Ile Lys Ser Thr Phe Glu
    210                 215                 220

Gln Ile Asn Pro Asn Ile Glu Ile Thr Tyr Trp Ser Tyr Asp Gly Asp
225                 230                 235                 240

Thr Gln Asp Lys Asn Glu Ala Ala Glu Arg Arg Asp Met Arg Val Ser
                245                 250                 255

Leu Pro Glu Leu Leu Ala Lys Gly Phe Thr Val Leu Asn Tyr Asn Ser
            260                 265                 270

Tyr Tyr Leu Tyr Ile Val Pro Lys Ala Ser Pro Thr Phe Ser Gln Asp
```

```
        275                 280                 285

Ala Ala Phe Ala Ala Lys Asp Val Ile Lys Asn Trp Asp Leu Gly Val
    290                 295                 300

Trp Asp Gly Arg Asn Thr Lys Asn Arg Val Gln Asn Thr His Glu Ile
305                 310                 315                 320

Ala Gly Ala Ala Leu Ser Ile Trp Gly Glu Asp Ala Lys Ala Leu Lys
                325                 330                 335

Asp Glu Thr Ile Gln Lys Asn Thr Lys Ser Leu Leu Glu Ala Val Ile
            340                 345                 350

His Lys Thr Asn Gly Asp Glu
        355


<210>  7
<211>  359
<212>  PRT
<213>  Aggregatibacter actinomycetemcomitans

<400>  7

Cys Val Lys Gly Asn Ser Ile Tyr Pro Gln Lys Thr Ser Thr Lys Gln
1               5                   10                  15

Thr Gly Leu Met Leu Asp Ile Ala Arg His Phe Tyr Ser Pro Glu Val
            20                  25                  30

Ile Lys Ser Phe Ile Asp Thr Ile Ser Leu Ser Gly Gly Asn Phe Leu
        35                  40                  45

His Leu His Phe Ser Asp His Glu Asn Tyr Ala Ile Glu Ser His Leu
    50                  55                  60

Leu Asn Gln Arg Ala Glu Asn Ala Val Gln Gly Lys Asp Gly Ile Tyr
65                  70                  75                  80

Ile Asn Pro Tyr Thr Gly Lys Pro Phe Leu Ser Tyr Arg Gln Leu Asp
                85                  90                  95

Asp Ile Lys Ala Tyr Ala Lys Ala Lys Gly Ile Glu Leu Ile Pro Glu
            100                 105                 110

Leu Asp Ser Pro Asn His Met Thr Ala Ile Phe Lys Leu Val Gln Lys
        115                 120                 125

Asp Arg Gly Val Lys Tyr Leu Gln Gly Leu Lys Ser Arg Gln Val Asp
```

130 135 140

Asp Glu Ile Asp Ile Thr Asn Ala Asp Ser Ile Thr Phe Met Gln Ser
145 150 155 160

Leu Met Ser Glu Val Ile Asp Ile Phe Gly Asp Thr Ser Gln His Phe
165 170 175

His Ile Gly Gly Asp Glu Phe Gly Tyr Ser Val Glu Ser Asn His Glu
180 185 190

Phe Ile Thr Tyr Ala Asn Lys Leu Ser Tyr Phe Leu Glu Lys Lys Gly
195 200 205

Leu Lys Thr Arg Met Trp Asn Asp Gly Leu Ile Lys Asn Thr Phe Glu
210 215 220

Gln Ile Asn Pro Asn Ile Glu Ile Thr Tyr Trp Ser Tyr Asp Gly Asp
225 230 235 240

Thr Gln Asp Lys Asn Glu Ala Ala Glu Arg Arg Asp Met Arg Val Ser
245 250 255

Leu Pro Glu Leu Leu Ala Lys Gly Phe Thr Val Leu Asn Tyr Asn Ser
260 265 270

Tyr Tyr Leu Tyr Ile Val Pro Lys Ala Ser Pro Thr Phe Ser Gln Asp
275 280 285

Ala Ala Phe Ala Ala Lys Asp Val Ile Lys Asn Trp Asp Leu Gly Val
290 295 300

Trp Asp Gly Arg Asn Thr Lys Asn Arg Val Gln Asn Thr His Glu Ile
305 310 315 320

Ala Gly Ala Ala Leu Ser Ile Trp Gly Glu Asp Ala Lys Ala Leu Lys
325 330 335

Asp Glu Thr Ile Gln Lys Asn Thr Lys Ser Leu Leu Glu Ala Val Ile
340 345 350

His Lys Thr Asn Gly Asp Glu
355

<210> 8
<211> 351
<212> PRT
<213> Actinobacillus pleuropneumoniae

<400> 8

Met Asp Leu Pro Lys Lys Glu Ser Gly Leu Thr Leu Asp Ile Ala Arg
1 5 10 15

Arg Phe Tyr Thr Val Asp Thr Ile Lys Gln Phe Ile Asp Thr Ile His
20 25 30

Gln Ala Gly Gly Thr Phe Leu His Leu His Phe Ser Asp His Glu Asn
35 40 45

Tyr Ala Leu Glu Ser Ser Tyr Leu Glu Gln Arg Glu Glu Asn Ala Thr
50 55 60

Glu Lys Asn Gly Thr Tyr Phe Asn Pro Lys Thr Asn Lys Pro Phe Leu
65 70 75 80

Thr Tyr Lys Gln Leu Asn Glu Ile Ile Tyr Tyr Ala Lys Glu Arg Asn
85 90 95

Ile Glu Ile Val Pro Glu Val Asp Ser Pro Asn His Met Thr Ala Ile
100 105 110

Phe Asp Leu Leu Thr Leu Lys His Gly Lys Glu Tyr Val Lys Gly Leu
115 120 125

Lys Ser Pro Tyr Ile Ala Glu Glu Ile Asp Ile Asn Asn Pro Glu Ala
130 135 140

Val Glu Val Ile Lys Thr Leu Ile Gly Glu Val Ile Tyr Ile Phe Gly
145 150 155 160

His Ser Ser Arg His Phe His Ile Gly Gly Asp Glu Phe Ser Tyr Ala
165 170 175

Val Glu Asn Asn His Glu Phe Ile Arg Tyr Val Asn Thr Leu Asn Asp
180 185 190

Phe Ile Asn Ser Lys Gly Leu Ile Thr Arg Val Trp Asn Asp Gly Leu
195 200 205

Ile Lys Asn Asn Leu Ser Glu Leu Asn Lys Asn Ile Glu Ile Thr Tyr
210 215 220

Trp Ser Tyr Asp Gly Asp Ala Gln Ala Lys Glu Asp Ile Gln Tyr Arg
225 230 235 240

Arg Glu Ile Arg Ala Asp Leu Pro Glu Leu Leu Ala Asn Gly Phe Lys
245 250 255

Val Leu Asn Tyr Asn Ser Tyr Tyr Leu Tyr Phe Val Pro Lys Ser Gly
260 265 270

Ser Asn Ile His Asn Asp Gly Lys Tyr Ala Ala Glu Asp Val Leu Asn
275 280 285

Asn Trp Thr Leu Gly Lys Trp Asp Gly Lys Asn Ser Ser Asn His Val
290 295 300

Gln Asn Thr Gln Asn Ile Ile Gly Ser Ser Leu Ser Ile Trp Gly Glu
305 310 315 320

Arg Ser Ser Ala Leu Asn Glu Gln Thr Ile Gln Gln Ala Ser Lys Asn
325 330 335

Leu Leu Lys Ala Val Ile Gln Lys Thr Asn Asp Pro Lys Ser His
340 345 350

<210> 9
<211> 461
<212> PRT
<213> Curtobacterium oceanosedimentum

<400> 9

Ala Asp Arg Asn Thr Ser Ala Ala Glu Ala Ala Val Thr Ser Ile Ala
1 5 10 15

Pro Arg Ala Thr Ile Thr Gly Val Ala Ala Ile Ser Ala Ala Thr Ser
20 25 30

Ser Arg Thr Thr Val Arg Thr Thr Leu Thr Leu Glu Asn Arg Ser Gly
35 40 45

Glu Arg Glu Ser Ala Ala Asp Ala Trp Leu Tyr Leu Ala Gly Gly Gly
50 55 60

Ala Arg Tyr Ala Leu Gly His Ala Pro Val Arg Ala Leu Ala Ala Gly
65 70 75 80

Ala Arg Ala Thr Val Arg Thr Thr Leu Arg Val Pro Ser Arg Ala Pro
85 90 95

Ala Gly Lys Tyr Ala Val Leu Ala Cys Ala Gly Pro Tyr Ser Lys Gln
100 105 110

Ala Cys Arg Thr Ser Gly Thr Thr Val Thr Val Gly Thr Ala Ala Arg
115 120 125

Ala Arg Pro Glu Thr Gly Val Met Leu Asp Val Ala Arg Ala Tyr Tyr
130 135 140

Pro Val Ser Leu Ile Glu Gln Tyr Val Asp Leu Leu Ala Glu His Gly
145 150 155 160

Gly Gly Phe Leu His Leu His Leu Thr Asp Asp Gln Asn Val Gly Ile
165 170 175

Glu Ser Ala Val Leu Gly Gln Thr Pro Ala Asn Ala Val Leu Arg Asn
180 185 190

Gly Val Tyr Thr Ser Arg Val Thr Gly Arg Pro Phe Leu Ser Ala Ala
195 200 205

Gln Ala Arg Ala Ile Ser Ala Tyr Ala Ala Lys Arg Gly Ile Ala Ile
210 215 220

Val Pro Glu Val Asp Ser Pro Gly His Met Ala Ala Ala Phe Ala Leu
225 230 235 240

Leu Glu Ala Arg His Gly Ala Thr Trp Val Asp Arg Ile Arg Ser Gly
245 250 255

Glu Ser Glu Leu Asp Thr Ser Val Pro Glu Ser Ala Thr Leu Ala Ala
260 265 270

Glu Leu Leu Arg Glu Val Thr Gln Thr Phe Pro Ser Ser Arg Thr Val
275 280 285

His Ile Gly Gly Asp Glu Trp Gly Ala Asp Val Ser Ala Asp Glu Arg
290 295 300

Val Gly Trp Met Asn Ala Met Ala Ala Ala Ile Gly Asp Arg Glu Val
305 310 315 320

Trp Ala Trp Asn Asp Gly Ile Asp Arg Ala Ser Val Gly Arg Leu Asp
325 330 335

Pro Arg Ile His Val Thr Tyr Trp Ser Phe Asp Gly Asp Thr Glu Asp
340 345 350

Ala Ala Glu Arg Arg Glu Arg Arg Ala Arg Arg Ala Ser Ala Thr Asp
355 360 365

Leu Gln Arg Ala Gly Ile Asp Leu Leu Asn Tyr Asn Ser Tyr Tyr Leu
    370                 375                 380

Tyr Glu Val Pro Thr Asp Leu Asp Pro Ala Asp Ser Glu Tyr Thr Val
385                 390                 395                 400

Ala Asp Leu Arg Glu His Trp Ser Leu Arg Ala Trp Asp Gly Asp Ser
                405                 410                 415

Gly Ala Arg Leu Ala Ala Pro Met Ser Gly Ala Ala Val Ala Ile Trp
            420                 425                 430

Gly Glu Asp Leu Asp Gly Ala Pro Ser Glu Ala Leu Leu Arg Trp Ser
        435                 440                 445

Ala Pro His Val Thr Ala Met Ile Glu Thr Ala Ala Ser
    450                 455                 460

<210> 10
<211> 445
<212> PRT
<213> Curtobacterium flaccumfaciens

<400> 10

Asp Thr Ala Val Ser Ala Val Thr Val Thr Lys Val Thr Ala Ser Thr
1               5                   10                  15

Thr Gly Thr Val Val Arg Thr Thr Leu Lys Val Glu Asn Thr Ala Pro
            20                  25                  30

Val Arg Lys Pro Ala Ser Ser Val Trp Leu Tyr Leu Ser Ala Gly Thr
        35                  40                  45

Glu Lys Tyr Thr Leu Gly Arg Val Ala Val Lys Ala Leu Ala Ala Gly
    50                  55                  60

Ser Ser Thr Ser Val Thr Ala Val Arg Gly Thr Pro Ser Arg Ala Ala
65                  70                  75                  80

Ala Gly Lys Tyr Ser Val Leu Ala Cys Ala Gly Ala Tyr Ser Ala Lys
                85                  90                  95

Gln Cys Arg Thr Ser Thr Ala Thr Val Thr Thr Lys Pro Thr Lys Arg
            100                 105                 110

Ala Arg Pro Glu Thr Gly Val Met Leu Asp Val Ala Arg Ala Tyr Tyr
        115                 120                 125

```
Pro Val Ala Leu Ile Lys Arg Tyr Ile Asp Leu Leu Ala Asp Asp Gly
    130                 135                 140

Gly Arg Phe Leu His Leu His Leu Thr Asp Asp Gln Asn Val Gly Ile
145                 150                 155                 160

Glu Ser Thr Val Leu Gly Gln Thr Pro Ala Asn Ala Asp Leu Asp His
                165                 170                 175

Gly Val Tyr Thr Ser Arg Val Thr His Arg Pro Phe Leu Ser Ala Ala
            180                 185                 190

Gln Ala Arg Thr Ile Ser Ala Tyr Gly Ala Glu Arg Gly Val Ala Ile
        195                 200                 205

Val Pro Glu Ile Asp Thr Pro Gly His Met Ala Ala Ala Phe Ala Leu
    210                 215                 220

Leu Glu Ala Gln His Gly Thr Lys Trp Val Asp Arg Ile Arg Ser Gly
225                 230                 235                 240

Glu Asn Glu Leu Asp Thr Ser Ala Pro Glu Ser Leu Ala Leu Ala Lys
                245                 250                 255

Lys Leu Tyr Ala Glu Val Gln Arg Thr Phe Pro Ser Ser Arg Thr Val
            260                 265                 270

His Ile Gly Gly Asp Glu Trp Gly Asp Asp Val Thr Ala Ala Gln Arg
        275                 280                 285

Val Thr Trp Met Asn Ala Met Ala Ala Ala Leu Asp Asp Arg Glu Val
    290                 295                 300

Trp Ala Trp Asn Asp Gly Ile Asp Arg Val Ala Val Gly Arg Leu Asp
305                 310                 315                 320

Pro Arg Ile His Val Thr Tyr Trp Ser Phe Asp Gly Asp Thr Glu Asp
                325                 330                 335

Ala Ala Glu Arg Arg Glu Arg Arg Ala Arg Arg Ala Ser Ala Val Asp
            340                 345                 350

Leu Gln Gln Ala Gly Ile Asp Gln Leu Asn Tyr Asn Ser Tyr Tyr Leu
        355                 360                 365

Tyr Glu Val Pro Thr Asp Leu Asp Pro Ala Asp Ser Asp Tyr Thr Val
    370                 375                 380
```

Ala Asp Leu Arg Glu Asn Trp Ser Leu Arg Ala Trp Asp Gly Asp Ser
385 390 395 400

Gly Ser Leu Leu Ala Ala Pro Met Ser Gly Ala Ala Val Ala Ile Trp
405 410 415

Gly Glu Asp Leu Glu Asp Pro Pro Ser Asp Ala Leu Leu Arg Trp Ser
420 425 430

Ala Pro His Val Thr Ala Met Ile Glu Thr Ala Ala Ser
435 440 445

<210> 11
<211> 445
<212> PRT
<213> Curtobacterium luteum

<400> 11

Asp Thr Ala Val Ser Ala Val Thr Val Thr Lys Val Thr Ala Ser Thr
1 5 10 15

Thr Gly Thr Ala Val Arg Thr Thr Leu Lys Val Glu Asn Thr Ala Pro
20 25 30

Val Arg Lys Pro Ala Ser Ser Val Trp Leu Tyr Leu Ser Ala Gly Thr
35 40 45

Glu Lys Tyr Thr Leu Gly Arg Val Ala Val Lys Ala Leu Ser Ala Gly
50 55 60

Ser Ser Thr Ser Val Thr Ala Val Arg Gly Thr Pro Ser Arg Ala Ala
65 70 75 80

Ala Gly Lys Tyr Trp Val Leu Ala Cys Ala Gly Ala Tyr Ser Ala Lys
85 90 95

Gln Cys Arg Thr Ser Thr Ala Thr Val Thr Thr Lys Pro Thr Lys Arg
100 105 110

Ala Arg Pro Glu Thr Gly Val Met Leu Asp Val Ala Arg Ala Tyr Tyr
115 120 125

Pro Val Ala Leu Ile Lys Arg Tyr Ile Asp Leu Leu Ala Asp Asp Gly
130 135 140

Gly Arg Phe Leu His Leu His Leu Thr Asp Asp Gln Asn Val Gly Ile
145 150 155 160

```
Glu Ser Thr Val Leu Gly Gln Thr Pro Ala Asn Ala Asp Leu Asp His
                165                 170                 175

Gly Val Tyr Thr Ser Arg Val Thr His Arg Pro Phe Leu Ser Ala Ala
            180                 185                 190

Gln Ala Arg Thr Ile Ser Glu Tyr Gly Ala Glu Arg Gly Val Thr Ile
        195                 200                 205

Val Pro Glu Ile Asp Thr Pro Gly His Met Ala Ala Ala Phe Ala Leu
    210                 215                 220

Leu Glu Ala Gln His Gly Thr Lys Trp Val Asp Arg Ile Arg Ser Gly
225                 230                 235                 240

Glu Asn Glu Leu Asp Thr Ser Ala Pro Glu Ser Leu Val Leu Ala Lys
                245                 250                 255

Lys Leu Tyr Ala Glu Val Gln Arg Thr Phe Pro Ser Ser Arg Thr Val
            260                 265                 270

His Ile Gly Gly Asp Glu Trp Gly Asp Asp Val Thr Ala Ala His Arg
        275                 280                 285

Val Ala Trp Met Asn Glu Met Ala Ala Thr Leu Gly Asn Arg Glu Val
    290                 295                 300

Trp Ala Trp Asn Asp Gly Ile Asp Arg Val Ala Val Gly Arg Leu Asp
305                 310                 315                 320

Pro Arg Ile His Val Thr Tyr Trp Ser Phe Asp Gly Asp Thr Glu Asp
                325                 330                 335

Ala Ala Glu Arg Arg Glu Arg Arg Ala Arg Arg Ala Ser Ala Val Asp
            340                 345                 350

Leu Gln Gln Ala Gly Ile Asp Gln Leu Asn Tyr Asn Ser Tyr Tyr Leu
        355                 360                 365

Tyr Glu Val Pro Thr Asp Leu Asp Pro Ala Asp Ser Asp Tyr Thr Val
    370                 375                 380

Ala Asp Leu Arg Glu Asn Trp Ser Leu Arg Ala Trp Asp Gly Asp Ser
385                 390                 395                 400

Gly Ser Leu Leu Ala Ala Pro Met Ser Gly Ala Ala Val Ala Ile Trp
```

405 410 415

Gly Glu Asp Leu Glu Asp Pro Pro Ser Asp Ala Leu Leu Arg Trp Ser
420 425 430

Ala Pro His Val Thr Ala Met Ile Glu Thr Ala Ala Ser
435 440 445

<210> 12
<211> 458
<212> PRT
<213> Curtobacterium oceanosedimentum

<400> 12

Ile Gly Gly Ser Ala Gly Thr Ala Asp Ala Ser Gly Ala Pro Arg Leu
1 5 10 15

Val Val Thr Lys Val Thr Ala Ser Ser Thr Thr Thr Ser Thr Arg Thr
20 25 30

Thr Val Arg Thr Thr Leu Thr Val Lys Asn Thr Ser Val Ala Arg Lys
35 40 45

Pro Ala Ala Asp Ala Trp Leu Ser Leu Thr Ala Gly Ser Lys Arg Tyr
50 55 60

Thr Leu Gly His Val Ser Val Gln Ser Leu Ala Ala Gly Ala Ser Ala
65 70 75 80

Thr Ile His Ala Thr His Thr Ala Pro Pro Arg Ala Pro Ala Gly Lys
85 90 95

Tyr Ala Val Leu Ala Cys Thr Gly Ala Phe Ser Leu Ser Lys Cys Gly
100 105 110

Thr Ser Ala Thr Thr Val Thr Thr Ala Arg Ala Thr Arg Ala Arg Pro
115 120 125

Asp Thr Gly Val Met Leu Asp Val Ala Arg Ala Tyr Tyr Pro Val Ala
130 135 140

Leu Ile Glu Gln Tyr Ile Ala Leu Leu Ala Asp His Gly Gly Arg Phe
145 150 155 160

Leu His Leu His Leu Thr Asp Asp Gln Asn Val Gly Ile Glu Ser Glu
165 170 175

Val Leu Gly Gln Thr Leu Ala Asn Ala Asp Leu Arg Asp Gly Val Tyr

180 185 190

Thr Ser Arg Ile Thr Gly Arg Pro Phe Leu Ser Ala Ala Gln Ala Arg
195 200 205

Glu Ile Ser Arg Tyr Ala Ala Gln Arg Gly Ile Ala Ile Ile Pro Glu
210 215 220

Ile Asp Thr Pro Gly His Met Ala Ala Ala Phe Ala Leu Leu Glu Ala
225 230 235 240

Gly His Gly Lys Gln Trp Val Asp Arg Ile Arg Ser Gly Glu Ser Glu
245 250 255

Leu Asp Thr Ser Ala Pro Gly Ser Ser Ala Leu Ala Ala Arg Leu Leu
260 265 270

Gln Glu Val Thr Arg Thr Phe Pro Ser Ser Arg Thr Val His Ile Gly
275 280 285

Gly Asp Glu Trp Gly Asp Asp Val Thr Ala Asp Glu Arg Val Gln Trp
290 295 300

Leu Asn Thr Met Ala Ala Ala Val Gly Asn Arg Ala Val Trp Ala Trp
305 310 315 320

Asn Asp Gly Ile Asp Arg Ala Ala Ile Gly Arg Leu Asp Pro Arg Ile
325 330 335

His Val Thr Tyr Trp Ser Phe Asp Gly Asp Thr Glu Asp Ala Thr Glu
340 345 350

Arg Arg Glu Arg Arg Glu Arg Arg Ala Gly Ala Asn Asp Leu Tyr Ala
355 360 365

Ala Gly Ile Asp Leu Leu Asn Tyr Asn Ser Tyr Tyr Leu Tyr Glu Val
370 375 380

Pro Thr Asp Leu Asp Ala Ala Asp Ser Glu Tyr Thr Val Ala Asp Leu
385 390 395 400

Arg Glu Asn Trp Ser Leu Arg Thr Trp Asp Gly Asp Ser Gly Ala Arg
405 410 415

Leu Ala Gly Pro Thr Ser Gly Ala Ala Val Ala Ile Trp Gly Glu Asp
420 425 430

Leu Glu Ala Pro Pro Ser Asp Ala Leu Leu Arg Trp Ser Ala Pro His
435 440 445

Val Leu Ala Met Ile Glu Thr Ala Gly Ser
450 455

<210> 13
<211> 450
<212> PRT
<213> Curtobacterium leaf154

<400> 13

Ala Gly Ser Thr Thr Ser Thr Val Thr Val Thr Gln Val Thr Ala Thr
1 5 10 15

Thr Thr Ala Ser Ser Thr Gly Thr Ala Val Arg Thr Thr Leu Lys Ile
20 25 30

Lys Asn Thr Ala Ala Val Arg Lys Pro Ala Ser Ser Ala Trp Leu Tyr
35 40 45

Leu Ser Ala Gly Thr Lys Lys Tyr Thr Leu Gly Arg Val Ala Val Lys
50 55 60

Ala Leu Ala Ala Gly Ser Ser Thr Ser Val Thr Ala Val Arg Gly Thr
65 70 75 80

Pro Ser Arg Ala Thr Ala Gly Glu Tyr Ser Val Leu Ala Cys Ala Gly
85 90 95

Ala Tyr Ser Ala Lys Gln Cys Arg Thr Ser Thr Ala Thr Val Thr Thr
100 105 110

Lys Pro Thr Lys Arg Ala Arg Pro Glu Thr Gly Val Met Leu Asp Val
115 120 125

Ala Arg Ala Tyr Tyr Pro Val Ala Leu Ile Lys Arg Tyr Ile Asp Leu
130 135 140

Leu Ala Asp Asp Gly Gly Arg Phe Leu His Leu His Leu Thr Asp Asp
145 150 155 160

Gln Asn Val Gly Ile Glu Ser Thr Val Leu Gly Gln Thr Leu Ala Asn
165 170 175

Ala Asp Leu Asp Glu Gly Val Tyr Thr Ser Arg Val Thr Arg Arg Pro
180 185 190

```
Phe Leu Ser Ala Ala Gln Ala Arg Thr Ile Ser Asp Tyr Ala Ala Arg
        195                 200                 205

Arg Gly Val Ala Ile Val Pro Glu Ile Asp Thr Pro Gly His Met Thr
    210                 215                 220

Ala Ala Phe Asp Leu Leu Glu Ala Gln His Gly Thr Lys Trp Val Asp
225                 230                 235                 240

Arg Ile Arg Ser Gly Glu Asn Glu Leu Asp Thr Ser Thr Pro Gly Ser
                245                 250                 255

Leu Ala Leu Ala Lys Lys Leu Tyr Ala Glu Val Gln Arg Thr Phe Pro
            260                 265                 270

Ala Ser Arg Thr Val His Ile Gly Gly Asp Glu Trp Gly Asp Asp Val
        275                 280                 285

Ser Ala Ala Glu Arg Val Ala Trp Met Asn Ala Met Ala Ala Ala Leu
    290                 295                 300

Gly Asn Arg Glu Val Trp Ala Trp Asn Asp Gly Ile Asp Arg Val Ala
305                 310                 315                 320

Val Gly Arg Leu Asp Pro Arg Ile His Val Thr Tyr Trp Ser Phe Asp
                325                 330                 335

Gly Asp Thr Glu Asp Ala Ala Glu Arg Arg Glu Arg Arg Ala Arg Arg
            340                 345                 350

Ala Ser Ala Val Asp Leu Gln Gln Ala Gly Ile Asp Met Leu Asn Tyr
        355                 360                 365

Asn Ser Tyr Tyr Leu Tyr Glu Val Pro Thr Asp Leu Asp Pro Ala Asp
    370                 375                 380

Ser Glu Tyr Thr Val Ala Asp Leu Arg Glu Asn Trp Ser Leu Arg Thr
385                 390                 395                 400

Trp Asp Gly Asp Ser Gly Ser Leu Leu Ala Ala Pro Met Ser Gly Ala
                405                 410                 415

Ala Val Ala Ile Trp Gly Glu Asp Leu Glu Asp Pro Pro Ser Asp Ala
            420                 425                 430

Leu Leu Arg Trp Ser Ala Pro His Val Thr Ala Met Ile Glu Thr Ala
        435                 440                 445
```

```
Ala Ser
    450


<210>  14
<211>  324
<212>  PRT
<213>  Terribacillus saccharophilus

<400>  14

Gln Asp Gln Glu Lys Gly Ile Thr Ile Asp Ile Ser Arg Lys Tyr Tyr
1               5                   10                  15

Ser Ile Lys Thr Leu Lys Ala Ile Val Asp Glu Ile Ser Ala Asn Gly
            20                  25                  30

Gly Asp Tyr Leu Gln Leu His Phe Ser Asp Asn Glu Ser Tyr Ala Ile
        35                  40                  45

Ala Ser Glu Phe Leu Gly Gln Asn Ser Glu Asn Pro Asn Ser Ala Tyr
    50                  55                  60

Leu Thr Lys Lys Glu Leu Leu Ser Leu Ile Ala Tyr Ser Asn Asp Arg
65                  70                  75                  80

Asn Ile Met Val Ile Pro Asp Ile Asp Leu Pro Ala His Ser Lys Gly
                85                  90                  95

Trp Leu Asn Ile Met Lys Glu Lys Asp Ser Gly Leu Tyr Thr Asp Ile
            100                 105                 110

Val Thr Asp Tyr Ser Glu Asp Thr Leu Asp Tyr His Asn Asn Ala Val
        115                 120                 125

Ala Leu Tyr Thr Ala Asn Gln Leu Leu Asp Glu Val Leu Asp Leu Phe
    130                 135                 140

Tyr Gln Pro Lys Phe Ala Gly Lys Gln Arg Ile Val Leu Gly Gly Asp
145                 150                 155                 160

Glu Val Pro Gly Ser Gly Ala His Gln Thr Asp Phe Ile Arg Phe Met
                165                 170                 175

Asn Gln Ile Ala Lys Thr Ala Lys Ala Ser Asn Tyr Glu Pro Gln Met
            180                 185                 190

Trp Asn Asp Ser Ile Thr Pro Glu Gly Ile Gln Asn Leu Asp Arg Ser
        195                 200                 205
```

Phe Ser Ile Leu Tyr Trp Lys Gln Ser Thr Leu Ser Asn Gly Ala Gln
    210                 215                 220

Ser Leu Asp Val Gln Asp Phe Glu Glu Asn Gly Leu Ser Val Tyr Asn
225                 230                 235                 240

Tyr Asn Ala Tyr Ser Leu Tyr Phe Leu Pro Ser Thr Arg Phe Thr Gln
                245                 250                 255

Glu Asp Ile Thr Glu Gln Ile Asp Tyr Met Lys Trp Ala Tyr Ala Tyr
            260                 265                 270

Asn Lys Phe Phe Tyr Ile Ser Asp Tyr Tyr Lys Gln Val Asp Thr Pro
        275                 280                 285

Asn Val Lys Gly Ser Ser Leu Val Phe Trp Gly Glu His Ala Asn Asp
    290                 295                 300

Leu Ser Gln Glu Gly Leu Leu Lys Gln Glu Lys Pro Leu Ile Gln Asn
305                 310                 315                 320

Phe Leu Gly Leu

<210> 15
<211> 324
<212> PRT
<213> Terribacillus goriensis

<400> 15

Gln Asp Gln Glu Lys Gly Ile Thr Ile Asp Ile Ser Arg Lys Tyr Tyr
1               5                   10                  15

Ser Ile Glu Thr Leu Lys Ser Ile Ile Asp Glu Ile Ser Ala Asn Gly
            20                  25                  30

Gly Asp Tyr Leu Gln Leu His Phe Ser Asp Asn Glu Arg Tyr Ala Ile
        35                  40                  45

Ala Ser Glu Phe Leu Gly Gln Asn Gly Glu Asn Pro Asn Ser Thr Tyr
    50                  55                  60

Leu Thr Lys Lys Glu Leu Leu Ser Leu Ile Ala Tyr Ser Asn Asp Arg
65                  70                  75                  80

Asp Ile Met Val Ile Pro Asp Ile Asp Leu Pro Ala His Ser Arg Gly
                85                  90                  95

Trp Leu Asn Ile Met Lys Glu Lys Asp Ser Gly Leu Tyr Thr Asp Ile
100 105 110

Val Thr Asp Tyr Ser Glu Asp Thr Leu Asp Tyr His Asn Asn Ala Val
115 120 125

Ala Leu Tyr Thr Ala Asn Gln Leu Leu Asp Glu Val Leu Asp Leu Phe
130 135 140

Tyr Gln Pro Lys Phe Ala Gly Lys Gln Arg Ile Val Leu Gly Gly Asp
145 150 155 160

Glu Val Pro Gly Ser Gly Val His Gln Thr Asp Phe Ile Arg Phe Met
165 170 175

Asn Gln Ile Ala Glu Thr Ala Lys Ala Ser Asn Tyr Lys Pro Gln Met
180 185 190

Trp Asn Asp Ser Ile Thr Pro Glu Gly Ile Gln Asn Leu Asp Arg Ser
195 200 205

Phe Ser Ile Leu Tyr Trp Lys Gln Ser Thr Leu Ser Asn Gly Ala Gln
210 215 220

Gly Leu Asp Val Gln Asp Phe Glu Glu Asn Gly Leu Ser Val Tyr Asn
225 230 235 240

Tyr Asn Ala Tyr Ser Leu Tyr Phe Leu Pro Ala Thr Arg Phe Thr Gln
245 250 255

Glu Asp Ile Thr Glu Gln Ile Asp Tyr Met Lys Trp Ala Tyr Ala Tyr
260 265 270

Asn Lys Phe Phe Tyr Ile Ser Asp Tyr Tyr Lys Gln Val Asp Thr Ser
275 280 285

Asn Val Lys Gly Ser Ser Leu Val Phe Trp Gly Glu His Ala Asn Asp
290 295 300

Leu Ser Gln Glu Gly Leu Leu Lys Gln Glu Lys Pro Leu Ile Gln Asn
305 310 315 320

Phe Leu Gly Leu

<210> 16
<211> 324

<212> PRT
<213> Terribacillus saccharophilus

<400> 16

```
Lys Asp Gln Glu Lys Gly Ile Thr Ile Asp Ile Ser Arg Lys Tyr Tyr
1               5                   10                  15

Ser Ile Gly Thr Leu Lys Ala Ile Val Asp Glu Ile Asn Ala Asn Gly
            20                  25                  30

Gly Asp Tyr Leu Gln Leu His Phe Ser Asp Asn Glu Ser Tyr Ala Ile
        35                  40                  45

Ala Ser Glu Phe Leu Gly Gln Asn Ser Glu Asn Pro Asn Ser Thr Tyr
    50                  55                  60

Leu Thr Lys Lys Glu Leu Leu Ser Leu Ile Ala Tyr Ser Asn Asp Arg
65                  70                  75                  80

Asn Ile Met Val Ile Pro Asp Ile Asp Leu Pro Ala His Ser Lys Gly
                85                  90                  95

Trp Leu Asn Val Met Lys Glu Lys Asp Ser Gly Leu Tyr Thr Asp Ile
            100                 105                 110

Val Thr Asp Tyr Ser Glu Asp Thr Leu Asp Tyr His Asn Asn Ala Ala
        115                 120                 125

Ala Leu Tyr Thr Ala Asn Gln Leu Leu Asp Glu Val Leu Asp Leu Phe
    130                 135                 140

Tyr Gln Pro Lys Phe Ala Gly Lys Gln Arg Ile Val Leu Gly Gly Asp
145                 150                 155                 160

Glu Val Pro Gly Ser Gly Ala His Gln Thr Asp Phe Ile Arg Phe Met
                165                 170                 175

Asn Gln Ile Asp Glu Thr Ala Lys Ala Ser Asn Tyr Glu Pro Gln Met
            180                 185                 190

Trp Asn Asp Ser Ile Thr Pro Glu Gly Ile Gln Asn Leu Asp Arg Ser
        195                 200                 205

Phe Ser Ile Leu Tyr Trp Lys Gln Ser Thr Leu Ser Ser Gly Ala Gln
    210                 215                 220

Gly Leu Asp Val Gln Asn Phe Glu Glu Lys Gly Phe Ser Val Tyr Asn
225                 230                 235                 240
```

Tyr Asn Ala Tyr Ser Leu Tyr Phe Leu Pro Ser Thr Arg Phe Thr Gln
245 250 255

Glu Asp Ile Thr Glu Gln Ile Asp Tyr Met Lys Trp Ala Tyr Ala Tyr
260 265 270

Asn Lys Phe Phe Tyr Ile Ser Asp Tyr Tyr Lys Gln Val Asp Thr Ser
275 280 285

Asn Val Lys Gly Ser Ser Leu Val Phe Trp Gly Glu His Ala Asn Asp
290 295 300

Leu Ser Gln Glu Gly Leu Leu Glu Gln Glu Lys Pro Leu Ile Gln Asn
305 310 315 320

Phe Leu Ser Leu

<210> 17
<211> 324
<212> PRT
<213> Terribacillus saccharophilus

<400> 17

Gln Asp Gln Glu Lys Gly Ile Thr Ile Asp Ile Ser Arg Lys His Tyr
1 5 10 15

Thr Val Glu Thr Leu Lys Ser Leu Val Asp Glu Ile Ser Tyr Asn Gly
20 25 30

Gly Asn Tyr Val Gln Leu His Phe Ser Asp Asn Glu Asn Tyr Ala Ile
35 40 45

Ala Ser Glu Tyr Leu Gly Gln Ser Ser Glu Asn Thr Asn Asn Thr Tyr
50 55 60

Leu Thr Lys Asn Glu Leu Leu Ser Leu Ile Ala Tyr Ser Asn Asp Lys
65 70 75 80

Asp Ile Leu Val Ile Pro Asp Ile Asp Leu Pro Ala His Ser Lys Gly
85 90 95

Trp Leu Glu Leu Ile Lys Lys Lys Asp Val Lys Leu Tyr Asn Asp Ile
100 105 110

Val Thr Asp Tyr Ser Glu Glu Thr Leu Asp Tyr Tyr Asp Asn Arg Val
115 120 125

Ala Leu Asp Thr Val Asn Gln Leu Leu Asp Glu Val Leu Asp Leu Phe
130 135 140

Tyr Gln Pro Lys Phe Glu Gly Lys Gln Arg Ile Val Leu Gly Gly Asp
145 150 155 160

Glu Val Ser Gly Ser Glu Val His Gln Leu Asp Phe Ile Asp Phe Met
165 170 175

Asn Gln Ile Ala Ser Thr Val Lys Glu Ser Lys Tyr Glu Pro Gln Met
180 185 190

Trp Asn Asp Ser Ile Thr Ser Glu Gly Ile Ala Asn Leu Asp Asp Ser
195 200 205

Phe Ser Ile Leu Tyr Trp Gln Gln Ser Thr Leu Ser Ser Gly Glu Glu
210 215 220

Ser Leu Asn Val Glu Asp Phe Glu Asn Trp Gly Phe Ser Val Tyr Asn
225 230 235 240

Tyr Asn Ala Tyr Ser Leu Tyr Phe Leu Pro Ser Asn Gly Phe Thr Gln
245 250 255

Glu Asp Ile Asn Glu Gln Met Asp Tyr Met Asn Trp Ala Tyr Ala His
260 265 270

Asn Lys Phe Phe Tyr Ile Ser Asp Tyr Tyr His Ala Val Glu Thr Ser
275 280 285

Asn Val Lys Gly Ser Ser Leu Thr Phe Trp Gly Glu His Ala Thr Asp
290 295 300

Leu Ser Gln Lys Lys Leu Leu Lys Gln Glu Leu Pro Leu Ile Arg His
305 310 315 320

Tyr Leu Asn Leu

<210> 18
<211> 324
<212> PRT
<213> Terribacillus saccharophilus

<400> 18

Lys Asp Gln Glu Lys Gly Ile Ser Ile Asp Ile Ser Arg Lys Tyr Tyr
1 5 10 15

Ser Ile Gly Thr Leu Lys Ala Ile Ile Asp Glu Ile Ser Ala Asn Gly
20 25 30

Gly Asp Tyr Leu Gln Leu His Phe Ser Asp Asn Glu Ser Tyr Ala Ile
35 40 45

Ala Ser Asp Tyr Leu Gly Gln Ile Ser Asp Thr Pro Asn Asn Thr Tyr
50 55 60

Leu Thr Lys Asn Asp Leu Leu Ser Leu Ile Ala Tyr Ser Asn Asp Arg
65 70 75 80

Asn Ile Leu Ile Ile Pro Asp Met Asp Leu Pro Ala His Ser Arg Gly
85 90 95

Trp Leu Glu Leu Met Lys Val Lys Asp Arg Glu Leu Tyr Thr Asp Ile
100 105 110

Val Thr Asp Tyr Ser Asn Glu Thr Leu Asp Tyr His Asn Asn Thr Asp
115 120 125

Ala Leu Asn Thr Ala Asn Gln Leu Leu Asn Glu Ile Leu Glu Leu Phe
130 135 140

Tyr Gln Pro Lys Phe Ala Gly Lys Gln Arg Ile Val Leu Gly Gly Asp
145 150 155 160

Glu Val Pro Gly Ser Glu Ile His Gln Leu Asp Phe Ile Arg Phe Ile
165 170 175

Asn Gln Ile Ala Ser Thr Ala Lys Ala Ser Asn Tyr Ala Pro Gln Met
180 185 190

Trp Asn Asp Ser Ile Thr Ala Glu Gly Ile Gln Asn Leu Asp Lys Ser
195 200 205

Phe Ser Ile Leu Tyr Trp Lys Gln Ser Thr Leu Ser Asn Gly Ala Gln
210 215 220

Ser Leu Glu Val Gln Asp Phe Glu Asp Trp Asp Phe Pro Val Tyr Asn
225 230 235 240

Tyr Asn Ala Tyr Ser Leu Tyr Phe Leu Pro Ser Ile Arg Phe Thr Asp
245 250 255

Glu Asp Ile Thr Glu Gln Met Asn Tyr Met Lys Trp Ala Tyr Ala Tyr

```
            260                 265                 270

Asn Lys Phe Phe Tyr Ile Ser Asp Tyr Tyr Lys Ser Val Asp Ala Ser
        275                 280                 285

Asn Val Lys Gly Ser Ser Leu Thr Phe Trp Gly Glu His Ala Thr Asp
    290                 295                 300

Leu Ser Gln Glu Glu Leu Leu Glu Gln Glu Leu Pro Leu Ile Lys Lys
305                 310                 315                 320

Phe Leu Ser Leu



<210>  19
<211>  331
<212>  PRT
<213>  Lactobacillus paraplantarum

<400>  19

Asn Ser Ser Thr Leu Asn Thr Ser Gln Gly Val Met Leu Asp Leu Gly
1               5                   10                  15

Arg His Pro Leu Asp Glu Thr Ala Ile Lys Ala Val Ile Ser Ala Ala
            20                  25                  30

Ala Glu Gln His Met Gln Tyr Val Glu Leu His Leu Ser Asp Asn Glu
        35                  40                  45

His Leu Cys Phe Gln Ser Ala Tyr Leu Gly Asn Ala Ala Ser Ala Thr
    50                  55                  60

Val Leu Ser Ala Thr Thr Leu Glu Gln Leu Val Ala Tyr Ala Asn Gln
65                  70                  75                  80

Leu Asn Ile Glu Leu Val Pro Asp Val Asp Leu Pro Ser His Ala Gly
                85                  90                  95

Ala Ile Leu Arg Gln Leu Gln Gln Thr His Pro Asp Ile Tyr Asn Thr
            100                 105                 110

Val Lys Leu Asp Asp Glu Thr Ile Asp Tyr Thr Lys Pro Ala Ala Ile
        115                 120                 125

Ser Leu Ala Thr Thr Leu Tyr Gly Glu Leu Asp Ala Ser Phe Asn Asn
    130                 135                 140

Gln Ser Gln His Asp Leu Met Leu Gly Ala Asp Glu Val Pro Gly Ser
```

145 150 155 160

Ala Ser Ala Tyr Ile Glu Leu Thr Thr Phe Ile Asn Gln Val Ser Arg
165 170 175

Phe Gln Asn Gln His Gly Phe Asn Thr Ser Ile Trp Asn Asp Ser Leu
180 185 190

Leu Lys Asn Glu Leu Thr Arg Leu Asp Ser Asn Ile Thr Ile Asn Tyr
195 200 205

Trp Ser Gln Ser Gly Asn Asn Thr Asp Val Ala Ile Ile Ala Asp Arg
210 215 220

Tyr Ala Asn Arg Val Ser Val Pro Asp Ile Leu Ala Ser Gly His Pro
225 230 235 240

Ile Val Asn Cys Asn Ser Tyr Ala Thr Tyr Tyr Gln Ile Lys Asn Ile
245 250 255

Gly Asn Val Asn Asp Asp Asp Tyr Phe Ile Asn Tyr Leu Asn His Thr
260 265 270

Phe Arg Pro Asn Ile Phe Asn Glu Ile Asp Thr Asn Gly His Asn Gln
275 280 285

Asp Trp Thr Ile Glu Asp Gly Val Thr Thr Asn Gly Ile Leu Val Ser
290 295 300

Leu Trp Gly Ala Asp Ser Glu His Val Thr Pro Thr Ala Ile Val Asn
305 310 315 320

Phe Ile Lys Arg Met Thr Ile Pro Arg Ser Phe
325 330

<210> 20
<211> 353
<212> PRT
<213> Lactobacillus apinorum

<400> 20

Thr Leu Ala Asp Thr Ser Asn Asp Thr Lys Arg Ile Gly Leu Ser Leu
1 5 10 15

Asp Cys Ser Arg Thr Tyr Tyr Ser Pro Ser Thr Ile Lys Lys Tyr Ile
20 25 30

Asp Leu Leu Lys Lys Asp His Gly Thr Tyr Leu Gln Leu His Leu Asn

35 40 45

Asp Asn Glu Arg Tyr Gly Val Glu Ser Ser Thr Leu Gly Gln Thr Thr
50 55 60

Gln Asn Ala Thr Leu Lys Asp Gly Val Tyr Tyr Asn Asn Lys Thr His
65 70 75 80

Leu Ala Phe Leu Ser Lys Asn Gln Leu Leu Asp Val Ile Gln Tyr Gly
85 90 95

Tyr Thr His Gly Ile Glu Val Ile Pro Glu Ile Asp Leu Pro Gly His
100 105 110

Ala Gln Ser Ile Phe Lys Leu Leu Ser Tyr Thr Ser Glu Gly Lys Lys
115 120 125

Leu Val Lys Glu Leu Glu Asn Lys Asp Gly Tyr Asn Glu Met Tyr Tyr
130 135 140

Asn Lys Gln Ala Thr Ile Asp Phe Ser Lys Lys Leu Leu Ser Glu Tyr
145 150 155 160

Val Gly Met Leu Pro Ser Gly Tyr His Ile Ile Val Gly Ala Asp Glu
165 170 175

Ile Thr Ile Ser Asp Lys Ser Asp Gln Glu Ala Val Val Lys Tyr Ile
180 185 190

Asn Ala Ile Asp Asp Tyr Val Asn Ala Asn His Leu Lys Leu Glu Met
195 200 205

Trp Asn Asp Ser Phe His Lys Ala Val Leu Ser Lys Tyr His Lys Asp
210 215 220

Ile Leu Ile Asn Tyr Trp Ser Leu Thr Gly Glu Val Ser Ser Ser Lys
225 230 235 240

Asp Arg Lys Asp Asn Ile Arg Met Arg Ala Thr Leu Pro Glu Leu Asn
245 250 255

Lys Ala Gly Phe Lys Thr Ile Asn Tyr Asn Ser Tyr Tyr Leu Tyr Met
260 265 270

Ile Thr Asp Pro Thr Ser Phe Thr Asn Glu Ser Lys Lys Ile Trp Thr
275 280 285

Ser Glu Phe Lys Lys Trp Lys Met Asn Met Trp Asn Asp Glu Ser Thr
    290                 295                 300

Lys Asp Ile Thr Lys Ser Ala Asn Asn Ile Gly Ala Ala Ile Ser Ile
305                 310                 315                 320

Trp Gly Glu Tyr Pro Asn Gln Tyr Thr Gly Asp Gln Thr Tyr Asn Lys
                325                 330                 335

Thr Tyr Tyr Tyr Val Asp Thr Phe Leu Lys Ala Gln Asp Lys Phe Thr
            340                 345                 350

Lys

<210>  21
<211>  331
<212>  PRT
<213>  Lactobacillus paraplantarum

<400>  21

Asn Ser Ser Thr Leu Asn Thr Ser Gln Gly Val Met Leu Asp Leu Gly
1               5                   10                  15

Arg His Pro Leu Asp Glu Thr Ala Ile Lys Ala Val Ile Ser Ala Ala
            20                  25                  30

Ala Glu Gln His Met Gln Tyr Val Glu Leu His Leu Ser Asp Asn Glu
        35                  40                  45

His Leu Cys Phe Gln Ser Ala Tyr Leu Gly Asn Ala Ala Ser Ala Thr
    50                  55                  60

Val Leu Ser Ala Thr Thr Leu Glu Gln Leu Val Ala Tyr Ala Asn Gln
65                  70                  75                  80

Leu Asn Ile Glu Leu Val Pro Asp Val Asp Leu Pro Ser His Ala Gly
                85                  90                  95

Ala Ile Leu Arg Gln Leu Gln Gln Thr His Pro Asp Ile Tyr Asn Thr
            100                 105                 110

Val Lys Leu Asp Asp Glu Thr Ile Asp Tyr Thr Lys Pro Ala Ala Val
        115                 120                 125

Ser Leu Ala Thr Thr Leu Tyr Gly Glu Leu Asp Ala Ser Phe Asn Asn
    130                 135                 140

Gln Ser Gln His Asp Leu Met Leu Gly Ala Asp Glu Val Ser Gly Ser
145 150 155 160

Ala Ser Ala Tyr Ile Glu Leu Thr Thr Phe Ile Asn Gln Val Ser Arg
165 170 175

Phe Gln Asn Gln Asn Gly Phe Asn Thr Ser Ile Trp Asn Asp Ser Leu
180 185 190

Leu Lys Asn Glu Leu Asn Arg Leu Asp Ser Asn Ile Thr Ile Asn Tyr
195 200 205

Trp Ser Gln Ser Gly Asn Asn Thr Asp Ala Ala Ile Ile Ala Asp Arg
210 215 220

Tyr Ala Asn Arg Ala Ser Val Pro Asp Ile Leu Ala Ser Gly His Pro
225 230 235 240

Ile Val Asn Cys Asn Ser Tyr Ala Thr Tyr Tyr Gln Phe Lys Asn Ile
245 250 255

Gly Asn Val Asn Asp Asp Asn Tyr Phe Ile Asn Tyr Leu Asn His Thr
260 265 270

Phe Arg Pro Asn Ile Phe Asn Glu Ile Asp Thr Asn Gly His Asn Gln
275 280 285

Asp Trp Thr Ile Glu Asp Gly Val Thr Thr Asn Gly Ile Leu Val Ser
290 295 300

Leu Trp Gly Ala Asp Ser Glu His Val Thr Pro Thr Ala Ile Val Asn
305 310 315 320

Phe Ile Lys Arg Met Ala Ile Pro Arg Ser Phe
325 330

<210> 22
<211> 323
<212> PRT
<213> Staphylococcus cohnii

<400> 22

Gln Asp Phe Gln Lys Gly Ile Asn Val Asp Ile Ala Arg Lys Asp Tyr
1 5 10 15

Ser Leu Lys Ser Leu Lys Lys Ile Val Asp Thr Ile His Glu Asn Asn
20 25 30

Gly Asp Tyr Leu Gln Leu His Phe Ser Asp Asn Glu Asn Tyr Ala Ile
35 40 45

Glu Ser Gln Phe Phe Lys His Glu Asn Ile Ala Ser Gln Asn Tyr Leu
50 55 60

Ser Gln Gln Glu Leu Lys Asn Leu Ile His Tyr Ser Asn Lys Leu Asn
65 70 75 80

Ile Met Val Val Pro Glu Phe Asp Leu Pro Ser His Ser Lys Ala Trp
85 90 95

Leu Leu Leu Leu Lys Asn Glu Asn Ser Asn Leu His Glu Asn Ile Val
100 105 110

Ser Asp Tyr Ser Asp Glu Thr Ile Asp Phe Phe Ser Asn Gln Lys Ala
115 120 125

Leu Glu Ile Ser Lys Arg Gln Ile Lys Glu Ile Leu Asn Leu Phe His
130 135 140

Gln Pro Asn Phe Gln Lys Glu Gln Arg Ile Val Leu Gly Gly Asp Glu
145 150 155 160

Val Pro Gly Gly Lys Ser Tyr Gln Asn Asp Phe Ile Asn Phe Met Asn
165 170 175

Glu Ile Gly Glu Tyr Ala Tyr Gln Asn Gly Tyr Glu Pro Gln Ile Trp
180 185 190

Asn Asp Ser Ile Thr Lys Asn Gly Leu Lys Leu Leu Lys Asn Tyr Phe
195 200 205

Ser Val Ile Phe Trp Lys Gln Ser Asn Asn Glu Asn Asn Glu Pro Gly
210 215 220

Ile Thr Val Glu Asp Phe Leu Asp Tyr Asn Phe Lys Val Tyr Asn Tyr
225 230 235 240

Asn Phe Tyr Ser Leu Tyr Phe Leu Pro Ser Lys Asn Tyr Ser Pro Thr
245 250 255

Asp Ile Glu Glu Gln Thr Ser Tyr Ile Ser Trp Ala Tyr Asn His Asn
260 265 270

Ser Phe Tyr Tyr Leu Lys Asn Pro Tyr Tyr Glu Val Asp Ser Leu Asn
275 280 285

```
Ile Gln Gly Ser Ala Leu Ser Phe Trp Gly Glu His Ala Thr Gly Met
    290                 295                 300

Arg Glu Glu Glu Val Leu Asn Gln Glu Leu Pro Leu Ile Arg Thr Tyr
305                 310                 315                 320

Leu Asn Lys


<210>  23
<211>  321
<212>  PRT
<213>  Staphylococcus fleurettii

<400>  23

Glu Ser Ile Gln Glu Gly Val Ser Val Asp Ile Ala Arg Lys Glu Tyr
1               5                   10                  15

Ser Leu Glu Ser Leu Lys Gln Ile Val Asp Thr Ile His Glu Asn Asn
            20                  25                  30

Gly Gln Tyr Leu Gln Leu His Phe Ser Asp Asp Glu Asn Tyr Ala Ile
        35                  40                  45

Glu Ser Asp Tyr Phe Ser His Gln Gly Ile Pro Asn Glu Asn Tyr Leu
    50                  55                  60

Thr Lys Ala Glu Ile Lys Ser Leu Ile Ala Tyr Ser Asn Glu Leu Asn
65                  70                  75                  80

Val Met Val Val Pro Asp Ile Asp Phe Pro Ser His Ser Lys Ala Leu
                85                  90                  95

Leu Ser Leu Ile Lys Asn Glu Asp Lys Asp Leu Tyr Asn Gln Ile Ile
            100                 105                 110

Ser Asp Tyr Ser Asp Asn Thr Phe Asp Phe Phe Ser Asn Asp Lys Ala
        115                 120                 125

Leu Ala Ile Ser Lys Arg His Ile Gly Glu Ile Thr Thr Leu Phe Asn
    130                 135                 140

Gln Pro Lys Tyr Asn Gly Gln Gln Arg Ile Val Leu Gly Gly Asp Glu
145                 150                 155                 160

Val Pro Gly Gly Gly Ala Tyr Gln Ser Asp Phe Ile Ser Tyr Met Asn
                165                 170                 175
```

```
Asn Ile Gly Ser Tyr Ala Ala Gly Gln Gly Tyr Glu Pro Gln Met Trp
            180                 185                 190

Asn Asp Met Ile Ser His Glu Gly Ile Lys Ser Leu Asn Asp Thr Phe
        195                 200                 205

Ser Ile Leu Tyr Trp Lys Gln Asn Glu Asn Ser Lys Ser Asp Leu Thr
    210                 215                 220

Val Glu Asp Phe Ala Glu Tyr Asp Phe Lys Ile Tyr Asn Tyr Asn Phe
225                 230                 235                 240

Tyr Ser Leu Tyr Phe Leu Pro Ser Asn Gln Phe Thr Asn Ala Asp Ile
                245                 250                 255

Glu Glu Gln Ala Asp Tyr Ile Ser Trp Ala Tyr Ala Tyr Asn Lys Phe
            260                 265                 270

Phe Tyr Thr Asn Glu Pro Tyr Gln Glu Val Asp Ser Asp Asn Val Lys
        275                 280                 285

Gly Ser Ala Leu Ser Phe Trp Gly Glu Asp Ala Leu Asn Met Ser Gln
    290                 295                 300

Thr Glu Leu Ile Asn Gln Glu Ile Pro Leu Ile Lys Ala Tyr Phe Ser
305                 310                 315                 320

Ser
```